# EUROPEAN PATENT APPLICATION

(11) **EP 4 657 917 A1**
(43) Date of publication of application: **03.12.2025**
(21) Application number: 23919009.3
(22) Date of filing: 31.01.2023
(51) Int. Cl.: H04W 28/02

(54) **TIME DOMAIN UNIT CONFIGURATION DETERMINATION METHOD AND APPARATUS, DEVICE, MEDIUM, AND PRODUCT**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LIANG, Bin, Dongguan, Guangdong 523860 (CN)
(74) Representative: Novagraaf Technologies
(86) International application number: PCT/CN2023/074043
(87) International publication number: WO 2024/159429

(57) **Abstract**

The present application relates to the technical field of communications, and discloses a time domain unit configuration determination method and apparatus, a device, a medium, and a product. The method comprises: determining a transmission parameter of a time domain unit on the basis of at least two configurations (120), the transmission parameter comprising a transmission direction, a transmission type or a transmission scheme. The present method can accurately determine a transmission direction, a transmission type or a transmission scheme of a time domain unit when the time domain unit has at least two configurations, so as to avoid a conflict, or clarify a configuration situation when at least two configurations conflict with each other.

## Description

### TECHNICAL FIELD

The present disclosure relates to the field of communication technologies, and in particular, to a method and apparatus for determining a configuration of a time domain unit, and a device, a medium and a product thereof.

### RELATED ART

The 5^{th} Generation (5G) mobile communication system supports various types of configurations for time domain units.

In the related art, the configuration of a time domain unit is typically based on one or more types of time domain configurations of time division duplex (TDD) and subband full duplex (SBFD), which indicates a transmission direction, a transmission type, or a transmission scheme in the time domain unit.

However, in a case where at least two types of configurations are present, conflicts may arise therebetween.

### SUMMARY

Embodiments of the present disclosure provide a method and apparatus for determining a configuration of a time domain unit, and a device, a medium and a product thereof. The technical solutions are as follows.

According to an aspect of the present disclosure, a method for determining a configuration of a time domain unit is provided. The method includes: determining, based on at least two types of configurations, transmission parameters of the time domain unit, wherein the transmission parameters include a transmission direction, a transmission type, or a transmission scheme.

According to another aspect of the present disclosure, an apparatus for determining a configuration of a time domain unit is provided. The apparatus includes: a determining module, configured to determine, based on at least two types of configurations, transmission parameters of the time domain unit, wherein the transmission parameter includes a transmission direction, a transmission type, or a transmission scheme.

According to another aspect of the present disclosure, a chip is provided. The chip includes one or more programmable logic circuits and/or one or more program instructions, and a communication device equipped with the chip, when running, is caused to perform the method for determining a configuration of a time domain unit described in the above aspect.

According to another aspect of the present disclosure, a terminal device is provided. The terminal device includes: a processor; a transceiver, communicably connected to the processor; and a memory, configured to store one or more executable instructions, wherein the processor, when loading and executing the one or more executable instructions, is caused to perform the method for determining a configuration of a time domain unit described in the above aspect.

According to another aspect of the present disclosure, a network device is provided. The network device includes: a processor; a transceiver, communicably connected to the processor; and a memory, configured to store one or more executable instructions, wherein the processor, when loading and executing the one or more executable instructions, is caused to perform the method for determining a configuration of a time domain unit described in the above aspect.

According to another aspect of the present disclosure, a computer-readable storage medium is provided. The computer-readable storage medium stores at least one program, and the at least one program, when loaded and run by a processor of a communication device, causes the communication device to perform the method for determining a configuration of a time domain unit described in the above aspect.

According to another aspect of the present disclosure, a computer program product is provided. The computer program product includes at least one program, and the at least one program is stored in a computer-readable storage medium. The at least one program, when read from the computer-readable storage medium and run by a processor of a communication device, causes the communication device to perform the method for determining a configuration of a time domain unit described in the above aspect.

The technical solutions according to the embodiments of the present disclosure achieve at least the following beneficial effects.

In a case where at least two types of configurations of the time domain unit are present, a transmission parameter of the time domain unit is determined based on the at least two types of configurations, such that a transmission direction, a transmission type, or a transmission scheme of the time domain unit is specified, such that a conflict during the transmission of the time domain unit using at least two types of configurations is avoided, or the transmission parameter of the time domain unit is specified in a case where conflicts arise between at least two types of configurations.

### BRIEF DESCRIPTION OF THE DRAWINGS

For clearer descriptions of the technical solutions in embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of a TDD uplink-downlink configuration according to some embodiments of the present disclosure;
FIG. 2 is a schematic diagram of an SBFD time domain configuration according to some embodiments of the present disclosure;
FIG. 3 is a schematic diagram of a communication system according to some embodiments of the present disclosure;
FIG. 4 is a flowchart of a method for determining a configuration of a time domain unit according to some embodiments of the present disclosure;
FIG. 5 is a flowchart of a method for determining a configuration of a time domain unit according to some embodiments of the present disclosure;
FIG. 6 is a schematic diagram of a method for determining a configuration of a time domain unit according to some embodiments of the present disclosure;
FIG. 7 is a flowchart of a method for determining a configuration of a time domain unit according to some embodiments of the present disclosure;
FIG. 8 is a flowchart of a method for determining a configuration of a time domain unit according to some embodiments of the present disclosure;
FIG. 9 is a flowchart of a method for determining a configuration of a time domain unit according to some embodiments of the present disclosure;
FIG. 10 is a flowchart of a method for determining a configuration of a time domain unit according to some embodiments of the present disclosure;
FIG. 11 is a flowchart of a method for determining a configuration of a time domain unit according to some embodiments of the present disclosure;
FIG. 12 is a flowchart of a method for determining a configuration of a time domain unit according to some embodiments of the present disclosure;
FIG. 13 is a flowchart of a method for determining a configuration of a time domain unit according to some embodiments of the present disclosure;
FIG. 14 is a flowchart of a method for determining a configuration of a time domain unit according to some embodiments of the present disclosure;
FIG. 15 is a flowchart of a method for determining a configuration of a time domain unit according to some embodiments of the present disclosure;
FIG. 16 is a flowchart of a method for determining a configuration of a time domain unit according to some embodiments of the present disclosure;
FIG. 17 is a flowchart of a method for determining a configuration of a time domain unit according to some embodiments of the present disclosure;
FIG. 18 is a flowchart of a method for determining a configuration of a time domain unit according to some embodiments of the present disclosure;
FIG. 19 is a flowchart of a method for determining a configuration of a time domain unit according to some embodiments of the present disclosure;
FIG. 20 is a flowchart of a method for determining a configuration of a time domain unit according to some embodiments of the present disclosure;
FIG. 21 is a block diagram of an apparatus for determining a configuration of a time domain unit according to some embodiments of the present disclosure;
FIG. 22 is a block diagram of an apparatus for determining a configuration of a time domain unit according to some embodiments of the present disclosure; and
FIG. 23 is a block diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

First, the related technologies involved in the embodiments of the present disclosure are described as follows.

### (1) TDD uplink-downlink configuration

In the related art, a transmission parameter on a subframe, a slot, or a symbol is determined by performing configuration or indication on the subframe, the slot, or the symbol using a TDD uplink-downlink configuration. The transmission parameter includes a transmission direction, a transmission type, or a transmission scheme.

A 5th Generation New Radio (5G NR) system adopts one or more of Time Division Duplex-Up Link-Down Link-ConfigCommon (TDD-UL-DL-ConfigCommon), Time Division Duplex-Up Link-Down Link-ConfigDedicated (TDD-UL-DL-ConfigDedicated), or Slot Format Indication (SFI) to indicate a transmission direction, wherein the transmission direction includes three types: an uplink direction, a downlink direction, and a flexible direction. TDD-UL-DL-ConfigCommon and TDD-UL-DL-ConfigDedicated are higher-layer signaling and are cell-specific configurations. TDD-UL-DL-ConfigCommon is transmitted to all terminals in a cell over broadcast information, while TDD-UL-DL-ConfigDedicated is independently transmitted to target terminals over radio resource control (RRC) signaling. The SFI is indicated over downlink control information (DCI) of the terminal group. The SFI is dynamic signaling that can indicate a semi-statically configured flexible slot or symbol as a determined uplink transmission or downlink transmission.

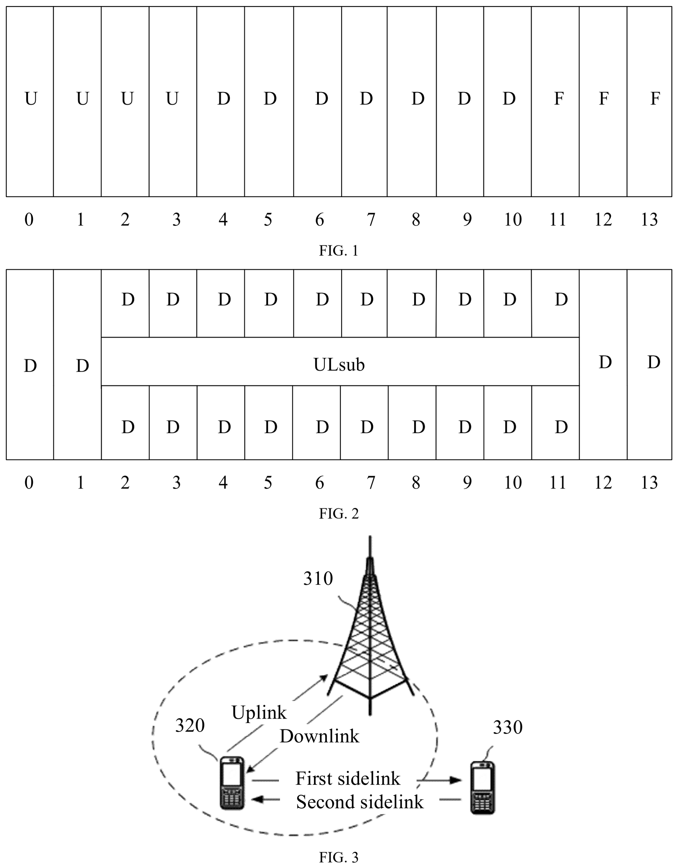

In some embodiments, a TDD uplink-downlink configuration is illustrated in FIG. 1. For example, one time domain unit being one slot is taken as an example, and one slot includes 13 symbols. Any symbol in the slot is configured, including being configured as an uplink symbol, a downlink symbol, or a flexible symbol. For example, a symbol 0 to a symbol 3 are configured as uplink symbols, a symbol 4 to a symbol 10 are configured as downlink symbols, and a symbol 11 and a symbol 12 are configured as flexible symbols.

### (2) SBFD time domain configuration

In the related art, data can be transmitted and received simultaneously on different subbands of the same subframe. This technology is referred to as X division duplex (XDD) technology and mainly applied to a gNB. The terminal device still maintains a state of supporting only data transmission or data reception within one subframe.

In some embodiments, an SBFD time domain configuration is proposed based on the XDD technology. For example, as illustrated in FIG. 2, in a subframe, slot, or symbol configured for downlink transmission, a middle subband of a corresponding frequency domain resource is configured as an uplink subband (ULsub), such that the base station can perform both uplink transmission and downlink transmission in a same subframe. However, only one subband is usually used on the terminal device, and only data transmission or data reception is supported within one subframe.

Subband configurations within different symbols or different slots in one subframe are the same or different, which is not specifically limited in the embodiments of the present disclosure.

In some other embodiments, SBFD is also referred to as a subband transmission-related technology or a bandwidth part transmission-related technology. That is, only the subband or bandwidth part can perform corresponding transmission, such as uplink transmission.

FIG. 3 illustrates a schematic diagram of a communication system according to some embodiments of the present disclosure. The communication system includes a network device 310 and a terminal device 320, and/or a terminal device 320 and a terminal device 330, which is not limited in the present disclosure.

The network device 310 in the present disclosure provides a wireless communication function, and the network device 310 includes, but is not limited to: an evolved node B (eNB), a radio network controller (RNC), a node B (NB), a base station controller (BSC), a base transceiver station (BTS), a home base station (e.g., a home evolved node B or a home node B (HNB)), a baseband unit (BBU), an access point (AP) in a wireless fidelity (Wi-Fi) system, a wireless relay node, a wireless backhaul node, a transmission point (TP), or a transmission and reception point (TRP), or the like. The network device 310 may be a next generation node B (gNB) or a transmission point (TRP or TP) in a 5G system; or may be an antenna panel or a group of antenna panels (including a plurality of antenna panels) in a 5G system; or may be a network node forming a gNB or a transmission point, e.g., a baseband unit (BBU) or a distributed unit (DU); or a base station or the like in a Beyond Fifth Generation (B5G) mobile communication system or a Sixth Generation (6G) mobile communication system, or a core network (CN), fronthaul, backhaul, a radio access network (RAN), a network slice, or a serving cell, a primary cell (Pcell), a primary secondary cell (PScell), a special cell (SpCell), a secondary cell (SCell), a neighbor cell, or the like of a terminal device.

In the present disclosure, the terminal device 320 and/or the terminal device 330 may also be referred to as a user equipment (UE), an access terminal, a subscriber unit, a subscriber station, a mobile station, a mobile terminal, a remote station, a remote terminal, a mobile device, a user terminal, a terminal, a wireless communication device, a user agent, or a user apparatus. The terminal includes but is not limited to: a handheld device, a wearable equipment, a vehicle-mounted device, an Internet of things (IoT) device, or the like, e.g., a mobile phone, a tablet computer, an e-book reader, a laptop portable computer, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in a smart grid, a wireless terminal in transportation safety, a wireless terminal in a smart city, a wireless terminal in a smart home, a wireless terminal in remote medical surgery, a cellular phone, a cordless phone, a Session Initiation Protocol (SIP) phone, a wireless local loop (WLL) station, a personal digital assistant (PDA), a set top box (STB), a customer premise equipment (CPE), or the like.

The network device 310 and the terminal device 320 communicate with each other using a certain air interface technology, such as a Uu interface.

In some embodiments, two communication scenarios between the network device 310 and the terminal device 320 are present: an uplink communication scenario and a downlink communication scenario. The uplink communication refers to transmitting signals to the network device 310, and the downlink communication refers to transmitting signals to the terminal device 320.

The terminal device 320 and the terminal device 330 communicate with each other using a certain air interface technology, such as a Uu interface.

In some embodiments, two communication scenarios between the terminal device 320 and the terminal device 330 are present: a first sidelink communication scenario and a second sidelink communication scenario. The first sidelink communication refers to transmitting a signal to the terminal device 330, and the second sidelink communication refers to transmitting a signal to the terminal device 320.

The terminal device 320 and the terminal device 330 are both within network coverage and located in the same cell, or the terminal device 320 and the terminal device 330 are both within network coverage but located in different cells, or the terminal device 320 is within network coverage but the terminal device 330 is outside network coverage.

The technical solutions according to the embodiments of the present disclosure are applicable to various communication systems, e.g., a global system of mobile communication (GSM) system, a code division a plurality of access (CDMA) system, a wideband code division a plurality of access (WCDMA) system, a general packet radio service (GPRS), a long-term evolution (LTE) system, an LTE frequency division duplex (FDD) system, an LTE time division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial networks (TN) system, a non-terrestrial networks (NTN) system, a wireless local area network (WLAN), wireless fidelity (Wi-Fi), a cellular IoT system, a cellular passive IoT system, a subsequent evolved system of a 5G NR system, a B5G mobile communication system, a 6G mobile communication system, and a subsequent evolved system. In some embodiments of the present disclosure, "NR" is also referred to as a 5G NR system or a 5G system. The 5G mobile communication system includes a non-standalone (NSA) and/or a standalone (SA).

The technical solutions according to the embodiments of the present disclosure are also applicable to a machine-type communications (MTC) network, a long-term evolution-machine (LTE-M) network, a device-to-device (D2D) network, a machine-to-machine (M2M) network, an IoT network, or other networks. The IoT network includes, for example, Internet of vehicles. The communication modes in the Internet of vehicles system are collectively referred to as vehicle to X (V2X, X may represent anything); for example, the V2X may include: vehicle-to-vehicle (V2V) communications, vehicle-to-infrastructure (V2I) communications, vehicle-to-pedestrian (V2P) communications, vehicle-to-network (V2N) communications, or the like.

The communication system according to the embodiments is applicable to, but is not limited to, at least one of: an uplink communication scenario, a downlink communication scenario, or a sidelink communication scenario.

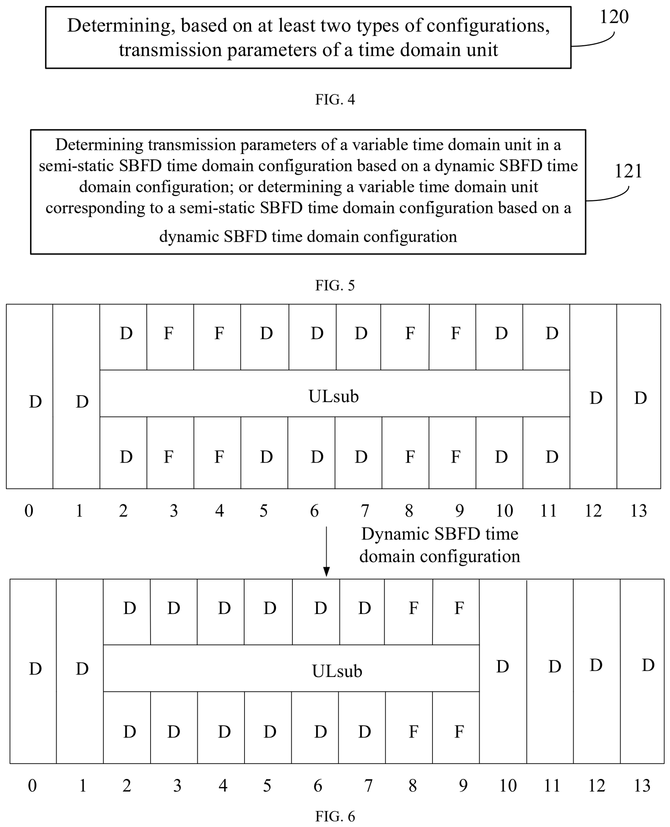

FIG. 4 is a flowchart of a method for determining a configuration of a time domain unit according to some embodiments of the present disclosure. The method is performed by a terminal device or a network device. The method includes the following process.

**In process 120,** transmission parameters of the time domain unit are determined based on at least two types of configurations.

In a case where at least two types of configurations of the time domain unit are present, the transmission parameters of the time domain unit are determined. The transmission parameters include at least one of a transmission direction, a transmission type, or a transmission scheme. The time domain unit includes at least one of a subframe, a slot, or a symbol.

The transmission direction includes at least one of an uplink direction, a downlink direction, or a flexible direction. The uplink direction refers to a direction from the terminal device to the network device, the downlink direction refers to a direction from the network device to the terminal device, and the flexible direction is not limited to either the uplink direction or the downlink direction.

The transmission type includes a slot type, a symbol type, or the like. The slot type includes at least one of an uplink slot, a downlink slot, or a flexible slot. The symbol type includes an uplink symbol, a flexible symbol, a downlink symbol, or the like.

The transmission scheme includes at least one of uplink transmission, downlink transmission, or flexible transmission. Uplink transmission refers to transmission in a direction from the terminal device to the network device, downlink transmission refers to transmission in a direction from the network device to the terminal device, and flexible transmission is not limited to either uplink transmission or downlink transmission. A flexible slot is taken as an example. A ratio of a downlink symbol to a flexible symbol to an uplink symbol is flexibly set for each symbol in the flexible slot.

In some embodiments, the transmission direction of the time domain unit is determined based on at least two types of configurations. In some embodiments, the transmission type of the time domain unit is determined based on at least two types of configurations. In some embodiments, the transmission scheme of the time domain unit is determined based on at least two types of configurations.

In some embodiments, the at least two types of configurations include three cases.

Case 1: at least two types of SBFD time domain configurations.

Case 2: at least one type of TDD uplink-downlink configuration and at least one type of SBFD time domain configuration.

Case 3: at least two types of TDD uplink-downlink configurations.

In summary, in the embodiments of the present disclosure, in a case where at least two types of configurations of the time domain unit are present, the transmission parameters of the time domain unit are determined based on the at least two types of configurations, such that the transmission direction, the transmission type, or the transmission scheme of the time domain unit is specified. In this way, a conflict during the transmission of the time domain unit using at least two types of configurations is avoided, or the transmission parameters of the time domain unit are specified in a case where conflicts arise between at least two types of configurations.

### With respect to at least two types of SBFD time domain configurations:

In some embodiments, the SBFD time domain configuration includes at least one type of a periodic SBFD time domain configuration, a dynamic SBFD time domain configuration, a semi-static SBFD time domain configuration, a common SBFD time domain configuration, or a terminal-specific SBFD time domain configuration. At least two types of SBFD time domain configurations may be configured for each terminal, and each type of SBFD time domain configuration includes one or more configurations.

Some embodiments of the present disclosure are described by taking an example in which the above several types of SBFD time domain configurations are included. However, those skilled in the art can know that the above SBFD time domain configurations may further include more other cases. Details are not described herein.

In a case where at least two types of SBFD configurations are configured for the same terminal device, a low-priority SBFD configuration is taken as a basic configuration, and the final configuration is acquired by determining transmission parameters of a variable time domain unit in the low-priority SBFD configuration based on a high-priority SBFD configuration. For any two types of SBFD configurations, the low-priority SBFD configuration is one type of a periodic SBFD time domain configuration, a dynamic SBFD time domain configuration, a semi-static SBFD time domain configuration, a common SBFD time domain configuration, or a terminal-specific SBFD time domain configuration; and the high-priority SBFD configuration is another type of the periodic SBFD time domain configuration, the dynamic SBFD time domain configuration, the semi-static SBFD time domain configuration, the common SBFD time domain configuration, or the terminal-specific SBFD time domain configuration. The configuration type of the low-priority SBFD time domain configuration is different from the configuration type of the high-priority SBFD time domain configuration.

It should be noted that in the embodiments of the present disclosure, the periodic SBFD time domain configuration has the same meaning as the SBFD time domain configuration of the periodic configuration type. The dynamic SBFD time domain configuration has the same meaning as the SBFD time domain configuration of the dynamic configuration type. The semi-static SBFD time domain configuration has the same meaning as the SBFD time domain configuration of the semi-static configuration type. The common SBFD time domain configuration has the same meaning as the SBFD time domain configuration of the common configuration type. The terminal-specific SBFD time domain configuration has the same meaning as the SBFD time domain configuration of the terminal-specific configuration type.

In some embodiments, the priority is predefined in a communication protocol, or preconfigured by the network device, or autonomously implemented by the terminal (which may be synchronized or reported to the network device).

In some embodiments, in a case where the at least two types of configurations include the semi-static SBFD time domain configuration and the dynamic SBFD time domain configuration, as illustrated in FIG. 5, the process 120 includes a process 121.

**In process 121,** transmission parameters of a variable time domain unit in a semi-static SBFD time domain configuration are determined based on a dynamic SBFD time domain configuration, or a variable time domain unit corresponding to a semi-static SBFD time domain configuration is determined based on a dynamic SBFD time domain configuration.

The variable time domain unit includes at least one of a flexible type time domain unit, a time domain unit without SBFD indication, or a time domain unit with SBFD indication.

The semi-static SBFD time domain configuration is a time domain configuration in the semi-static SBFD configuration. The semi-static SBFD configuration is a periodic SBFD configuration. In one implementation, the semi-static SBFD configuration is used or put into effect once the semi-static SBFD is configured. In another implementation, in a case where activation signaling is received, the semi-static SBFD configuration is activated for use or in an effective state; and in a case where deactivation signaling is received, the semi-static SBFD configuration is stopped for use or in an invalid state.

The dynamic SBFD time domain configuration is an SBFD configuration configured by using a dynamic configuration manner (e.g., DCI). The dynamic SBFD time domain configuration generally takes effect only in a scheduled time domain unit.

The SBFD configuration includes at least one of a time domain configuration or a frequency domain configuration. Generally, the SBFD configuration includes both the time domain configuration and the frequency domain configuration. The SBFD time domain configuration refers to a time domain configuration in the SBFD configuration.

In some embodiments, in a case where the at least two types of configurations include the semi-static SBFD time domain configuration and the dynamic SBFD time domain configuration, the dynamic SBFD time domain configuration indicates or modifies or changes the transmission parameters of the variable time domain unit in the semi-static SBFD time domain configuration.

In some embodiments, the dynamic SBFD time domain configuration indicates or modifies or changes the transmission parameters of the variable time domain unit in the semi-static SBFD time domain configuration. One or more slots are changed, or one or more subframes, one or more radio frames, one or more periods, or the like are changed.

For example, as illustrated in FIG. 6, one downlink slot is taken as an example for description. The semi-static SBFD time domain configuration is that a symbol 3, a symbol 4, a symbol 8, and a symbol 9 are configured as flexible symbols, and subbands of a symbol 2 to a symbol 11 are configured as uplink subbands. The semi-static SBFD time domain configuration is modified based on the dynamic SBFD time domain configuration, and subbands of the symbols 10 and 11 in the semi-static SBFD time domain configuration are modified from uplink subbands to downlink subbands in the dynamic SBFD time domain configuration.

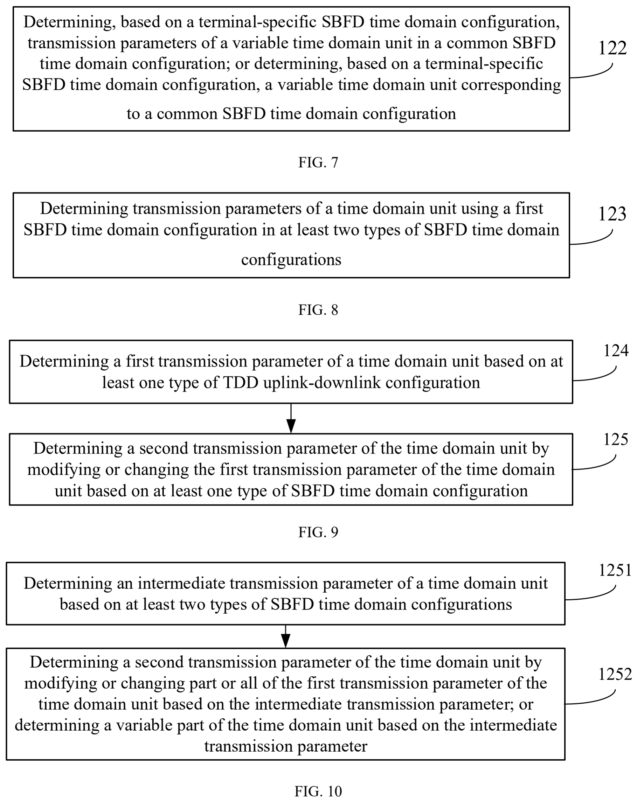

In some embodiments, in a case where the at least two types of configurations include the common SBFD time domain configuration and the terminal-specific SBFD time domain configuration, as illustrated in FIG. 7, the process 120 further includes a process 122.

**In process 122,** transmission parameters of a variable time domain unit in a common SBFD time domain configuration are determined based on a terminal-specific SBFD time domain configuration, or a variable time domain unit corresponding to a common SBFD time domain configuration is determined based on a terminal-specific SBFD time domain configuration.

The common SBFD time domain configuration refers to an SBFD configuration that can be used by all terminals in one cell or a plurality of cells.

The terminal-specific SBFD time domain configuration refers to an SBFD configuration dedicated to a current terminal or a terminal group in which the current terminal is located in one cell or a plurality of cells.

In some embodiments, the terminal-specific SBFD time domain configuration indicates, modifies, or changes the transmission parameters of the variable time domain unit in the common SBFD time domain configuration. One or more slots are changed, or one or more subframes, one or more radio frames, one or more periods, or the like are changed.

Similarly, because different types of SBFD configurations may be configured for the same terminal, the present disclosure includes, but is not limited to, at least one of the following possible implementation embodiments. In any embodiment, one or more slots are changed, or one or more subframes, one or more radio frames, or one or more periods are changed.

In some embodiments, in a case where the at least two types of configurations include the dynamic SBFD time domain configuration and the semi-static SBFD time domain configuration, the transmission parameters of the variable time domain unit in the dynamic SBFD time domain configuration are determined directly based on the semi-static SBFD time domain configuration; or the variable time domain unit corresponding to the dynamic SBFD time domain configuration is determined based on the semi-static SBFD time domain configuration.

In some embodiments, in a case where the at least two types of configurations include the dynamic SBFD time domain configuration and the common SBFD time domain configuration, the transmission parameters of the variable time domain unit in the common SBFD time domain configuration are determined based on the dynamic SBFD time domain configuration; or the variable time domain unit corresponding to the common SBFD time domain configuration is determined directly based on the dynamic SBFD time domain configuration.

In some embodiments, in a case where the at least two types of configurations include the dynamic SBFD time domain configuration and the common SBFD time domain configuration, the transmission parameters of the variable time domain unit in the dynamic SBFD time domain configuration are directly determined based on the common SBFD time domain configuration; or the variable time domain unit corresponding to the dynamic SBFD time domain configuration is determined directly based on the common SBFD time domain configuration.

In some embodiments, in a case where the at least two types of configurations include the dynamic SBFD time domain configuration and the terminal-specific SBFD time domain configuration, the transmission parameters of the variable time domain unit in the terminal-specific SBFD time domain configuration are determined directly based on the dynamic SBFD time domain configuration; or the variable time domain unit corresponding to the terminal-specific SBFD time domain configuration is determined directly based on the dynamic SBFD time domain configuration.

In some embodiments, in a case where the at least two types of configurations include the dynamic SBFD time domain configuration and the terminal-specific SBFD time domain configuration, the transmission parameters of the variable time domain unit in the dynamic SBFD time domain configuration are determined directly based on the terminal-specific SBFD time domain configuration; or the variable time domain unit corresponding to the common SBFD time domain configuration is determined directly based on the dynamic SBFD time domain configuration.

In some embodiments, in a case where the at least two types of configurations include the semi-static SBFD time domain configuration and the common SBFD time domain configuration, the transmission parameters of the variable time domain unit in the common SBFD time domain configuration are determined directly based on the semi-static SBFD time domain configuration; or the variable time domain unit corresponding to the common SBFD time domain configuration is determined directly based on the semi-static SBFD time domain configuration.

In some embodiments, in a case where the at least two types of configurations include the semi-static SBFD time domain configuration and the common SBFD time domain configuration, the transmission parameters of the variable time domain unit in the semi-static SBFD time domain configuration are determined directly based on the common SBFD time domain configuration; or the variable time domain unit corresponding to the semi-static SBFD time domain configuration is determined directly based on the common SBFD time domain configuration.

In some embodiments, in a case where the at least two types of configurations include the semi-static SBFD time domain configuration and the terminal-specific SBFD time domain configuration, the transmission parameters of the variable time domain unit in the terminal-specific SBFD time domain configuration are determined directly based on the semi-static SBFD time domain configuration; or the variable time domain unit corresponding to the terminal-specific SBFD time domain configuration is determined directly based on the semi-static SBFD time domain configuration.

In some embodiments, in a case where the at least two types of configurations include the semi-static SBFD time domain configuration and the terminal-specific SBFD time domain configuration, the transmission parameters of the variable time domain unit in the semi-static SBFD time domain configuration are determined directly based on the terminal-specific SBFD time domain configuration; or the variable time domain unit corresponding to the semi-static SBFD time domain configuration is determined directly based on the terminal-specific SBFD time domain configuration.

In some embodiments, in a case where the at least two types of configurations include the common SBFD time domain configuration and the terminal-specific SBFD time domain configuration, the transmission parameters of the variable time domain unit in the terminal-specific SBFD time domain configuration are determined directly based on the common SBFD time domain configuration; or the variable time domain unit corresponding to the terminal-specific SBFD time domain configuration is determined directly based on the common SBFD time domain configuration.

In some embodiments, in a case where the at least two types of configurations include the periodic SBFD time domain configuration and the terminal-specific SBFD time domain configuration, the transmission parameters of the variable time domain unit in the terminal-specific SBFD time domain configuration are determined directly based on the periodic SBFD time domain configuration; or the variable time domain unit corresponding to the terminal-specific SBFD time domain configuration is determined directly based on the periodic SBFD time domain configuration.

In some embodiments, in a case where the at least two types of configurations include the periodic SBFD time domain configuration and the terminal-specific SBFD time domain configuration, the transmission parameters of the variable time domain unit in the periodic SBFD time domain configuration are determined directly based on the terminal-specific SBFD time domain configuration; or the variable time domain unit corresponding to the periodic SBFD time domain configuration is determined directly based on the terminal-specific SBFD time domain configuration.

In some embodiments, in a case where the at least two types of configurations include the periodic SBFD time domain configuration and the common SBFD time domain configuration, the transmission parameters of the variable time domain unit in the common SBFD time domain configuration are determined based on the periodic SBFD time domain configuration; or the variable time domain unit corresponding to the common SBFD time domain configuration is determined based on the periodic SBFD time domain configuration.

In some embodiments, in a case where the at least two types of configurations include the periodic SBFD time domain configuration and the common SBFD time domain configuration, the transmission parameters of the variable time domain unit in the periodic SBFD time domain configuration are directly determined based on the common SBFD time domain configuration; or the variable time domain unit corresponding to the periodic SBFD time domain configuration is determined directly based on the common SBFD time domain configuration.

In some embodiments, in a case where the at least two types of configurations include the periodic SBFD time domain configuration and the semi-static SBFD time domain configuration, the transmission parameters of the variable time domain unit in the semi-static SBFD time domain configuration are determined directly based on the periodic SBFD time domain configuration; or the variable time domain unit corresponding to the semi-static SBFD time domain configuration is determined directly based on the periodic SBFD time domain configuration.

In some embodiments, in a case where the at least two types of configurations include the periodic SBFD time domain configuration and the semi-static SBFD time domain configuration, the transmission parameters of the variable time domain unit in the periodic SBFD time domain configuration are determined directly based on the semi-static SBFD time domain configuration; or the variable time domain unit corresponding to the periodic SBFD time domain configuration is determined based on the semi-static SBFD time domain configuration.

In some embodiments, in a case where the at least two types of configurations include the periodic SBFD time domain configuration and the dynamic SBFD time domain configuration, the transmission parameters of the variable time domain unit in the dynamic SBFD time domain configuration are determined directly based on the periodic SBFD time domain configuration; or the variable time domain unit corresponding to the dynamic SBFD time domain configuration is determined directly based on the periodic SBFD time domain configuration.

In some embodiments, in a case where the at least two types of configurations include the periodic SBFD time domain configuration and the dynamic SBFD time domain configuration, the transmission parameters of the variable time domain unit in the periodic SBFD time domain configuration are determined directly based on the dynamic SBFD time domain configuration; or the variable time domain unit corresponding to the periodic SBFD time domain configuration is determined directly based on the dynamic SBFD time domain configuration.

Some embodiments of the present disclosure are described by taking an example in which two types of SBFD time domain configurations are included. However, those skilled in the art can know that the above at least two types of SBFD time domain configurations further include more other cases. Details are not described herein.

In summary, in the embodiments of the present disclosure, in a case where a plurality of types of SBFD configurations are present, all or part of configurations of one or more types of other low-priority SBFD configurations are modified or changed based on a high-priority SBFD time domain configuration, such that the consistency between the terminal device and the network device is ensured, and a transmission direction or a transmission type or a transmission scheme of the time domain unit is specified, thereby avoiding a conflict during the transmission of the time domain unit in a case where a plurality of types of SBFD configurations are present.

In some embodiments, in a case where the at least two types of configurations include at least two types of SBFD time domain configurations, as illustrated in FIG. 8, the 120 further includes a process 123.

**In process 123,** transmission parameters of a time domain unit are determined using a first SBFD time domain configuration in at least two types of SBFD time domain configurations.

The first SBFD time domain configuration is one of the at least two types of SBFD time domain configurations.

In some embodiments, the first SBFD time domain configuration is autonomously implemented by the terminal device, or the first SBFD time domain configuration is configured by the network device, or the first SBFD time domain configuration is determined based on the priority, or the first SBFD time domain configuration is predefined. "Autonomous implementation by the terminal device" in the present disclosure means that the terminal device determines an implementation by itself without configuration or indication of the network device.

In some embodiments, the at least two types of SBFD time domain configurations include a first SBFD time domain configuration and a second SBFD time domain configuration, or include the first SBFD time domain configuration and a plurality of other SBFD time domain configurations. In a case where a priority of the first SBFD time domain configuration is higher than a priority of the second SBFD time domain configuration or a priority of the first SBFD time domain configuration is higher than priorities of the other SBFD time domain configurations, the first SBFD time domain configuration is determined as the final configuration. Transmission parameters of a time domain unit are determined based on the final configuration.

In some embodiments, the at least two types of SBFD time domain configurations include a first SBFD time domain configuration and a second SBFD time domain configuration, or include the first SBFD time domain configuration and a plurality of other SBFD time domain configurations. In a case where the first SBFD time domain configuration is predetermined to be used, the transmission parameters of the time domain unit are determined based on the time domain configuration of the first SBFD time domain configuration.

In some embodiments, the at least two types of SBFD time domain configurations include a first SBFD time domain configuration and a second SBFD time domain configuration, or include the first SBFD time domain configuration and a plurality of other SBFD time domain configurations. In a case where the first SBFD time domain configuration is indicated to be used, the transmission parameters of the time domain unit are determined based on the time domain configuration of the first SBFD time domain configuration.

In some embodiments, the at least two types of SBFD time domain configurations include a first SBFD time domain configuration and a second SBFD time domain configuration, or include the first SBFD time domain configuration and a plurality of other SBFD time domain configurations. In a case where the UE selects or uses the first SBFD time domain configuration, the transmission parameters of the time domain unit are determined based on the time domain configuration of the first SBFD time domain configuration. In some embodiments, the UE indicates the used SBFD time domain configuration information to the network.

For example, because different types of SBFD configurations may be configured for the same terminal, the present disclosure includes, but is not limited to, at least one of the following possible implementation embodiments.

In a case where the at least two types of SBFD time domain configurations include the common SBFD time domain configuration and the terminal-specific SBFD time domain configuration, the common SBFD time domain configuration is determined as the first SBFD time domain configuration or the common SBFD time domain configuration is selected as the first SBFD time domain configuration, and the transmission parameters of the time domain unit are determined based on the common SBFD time domain configuration.

In a case where the at least two types of SBFD time domain configurations include the common SBFD time domain configuration and the terminal-specific SBFD time domain configuration, the terminal-specific SBFD time domain configuration is determined as the first SBFD time domain configuration or the terminal-specific SBFD time domain configuration is selected as the first SBFD time domain configuration, and the transmission parameters of the time domain unit are determined based on the terminal-specific SBFD time domain configuration.

In a case where the at least two types of SBFD time domain configurations include the common SBFD time domain configuration and the semi-static SBFD time domain configuration, the common SBFD time domain configuration is determined as the first SBFD time domain configuration or the common SBFD time domain configuration is selected as the first SBFD time domain configuration, and the transmission parameters of the time domain unit are determined based on the common SBFD time domain configuration.

In a case where the at least two types of SBFD time domain configurations include the common SBFD time domain configuration and the semi-static SBFD time domain configuration, the semi-static SBFD time domain configuration is determined as the first SBFD time domain configuration or the semi-static SBFD time domain configuration is selected as the first SBFD time domain configuration, and the transmission parameters of the time domain unit are determined based on the semi-static SBFD time domain configuration.

In a case where the at least two types of SBFD time domain configurations include the common SBFD time domain configuration and the dynamic SBFD time domain configuration, the common SBFD time domain configuration is determined as the first SBFD time domain configuration or the common SBFD time domain configuration is selected as the first SBFD time domain configuration, and the transmission parameters of the time domain unit are determined based on the common SBFD time domain configuration.

In a case where the at least two types of SBFD time domain configurations include the common SBFD time domain configuration and the dynamic SBFD time domain configuration, the dynamic SBFD time domain configuration is determined as the first SBFD time domain configuration or the dynamic SBFD time domain configuration is selected as the first SBFD time domain configuration, and the transmission parameters of the time domain unit are determined based on the dynamic SBFD time domain configuration.

In a case where the at least two types of SBFD time domain configurations include the semi-static SBFD time domain configuration and the terminal-specific SBFD time domain configuration, the semi-static SBFD time domain configuration is determined as the first SBFD time domain configuration or the semi-static SBFD time domain configuration is selected as the first SBFD time domain configuration, and the transmission parameters of the time domain unit are determined based on the semi-static SBFD time domain configuration.

In a case where the at least two types of SBFD time domain configurations include the semi-static SBFD time domain configuration and the terminal-specific SBFD time domain configuration, the terminal-specific SBFD time domain configuration is determined as the first SBFD time domain configuration or the terminal-specific SBFD time domain configuration is selected as the first SBFD time domain configuration, and the transmission parameters of the time domain unit are determined based on the terminal-specific SBFD time domain configuration.

In a case where the at least two types of SBFD time domain configurations include the semi-static SBFD time domain configuration and the dynamic SBFD time domain configuration, the semi-static SBFD time domain configuration is determined as the first SBFD time domain configuration or the semi-static SBFD time domain configuration is selected as the first SBFD time domain configuration, and the transmission parameters of the time domain unit are determined based on the semi-static SBFD time domain configuration.

In a case where the at least two types of SBFD time domain configurations include the semi-static SBFD time domain configuration and the dynamic SBFD time domain configuration, the dynamic SBFD time domain configuration is determined as the first SBFD time domain configuration or the dynamic SBFD time domain configuration is selected as the first SBFD time domain configuration, and the transmission parameters of the time domain unit are determined based on the dynamic SBFD time domain configuration.

In a case where the at least two types of SBFD time domain configurations include the terminal-specific SBFD time domain configuration and the dynamic SBFD time domain configuration, the terminal-specific SBFD time domain configuration is determined as the first SBFD time domain configuration or the terminal-specific SBFD time domain configuration is selected as the first SBFD time domain configuration, and the transmission parameters of the time domain unit are determined based on the terminal-specific SBFD time domain configuration.

In a case where the at least two types of SBFD time domain configurations include the terminal-specific SBFD time domain configuration and the dynamic SBFD time domain configuration, the dynamic SBFD time domain configuration is determined as the first SBFD time domain configuration or the dynamic SBFD time domain configuration is selected as the first SBFD time domain configuration, and the transmission parameters of the time domain unit are determined based on the dynamic SBFD time domain configuration.

In a case where the at least two types of SBFD time domain configurations include the terminal-specific SBFD time domain configuration and the periodic SBFD time domain configuration, the periodic SBFD time domain configuration is determined as the first SBFD time domain configuration or the periodic SBFD time domain configuration is selected as the first SBFD time domain configuration, and the transmission parameters of the time domain unit are determined based on the periodic SBFD time domain configuration.

In a case where the at least two types of SBFD time domain configurations include the terminal-specific SBFD time domain configuration and the periodic SBFD time domain configuration, the terminal-specific SBFD time domain configuration is determined as the first SBFD time domain configuration or the terminal-specific SBFD time domain configuration is selected as the first SBFD time domain configuration, and the transmission parameters of the time domain unit are determined based on the terminal-specific SBFD time domain configuration.

In a case where the at least two types of SBFD time domain configurations include the periodic SBFD time domain configuration and the common SBFD time domain configuration, the periodic SBFD time domain configuration is determined as the first SBFD time domain configuration or the periodic SBFD time domain configuration is selected as the first SBFD time domain configuration, and the transmission parameters of the time domain unit are determined based on the periodic SBFD time domain configuration.

In a case where the at least two types of SBFD time domain configurations include the periodic SBFD time domain configuration and the common SBFD time domain configuration, the common SBFD time domain configuration is determined as the first SBFD time domain configuration or the common SBFD time domain configuration is selected as the first SBFD time domain configuration, and the transmission parameters of the time domain unit are determined based on the common SBFD time domain configuration.

In a case where the at least two types of SBFD time domain configurations include the periodic SBFD time domain configuration and the semi-static SBFD time domain configuration, the periodic SBFD time domain configuration is determined as the first SBFD time domain configuration or the periodic SBFD time domain configuration is selected as the first SBFD time domain configuration, and the transmission parameters of the time domain unit are determined based on the periodic SBFD time domain configuration.

In a case where the at least two types of SBFD time domain configurations include the periodic SBFD time domain configuration and the semi-static SBFD time domain configuration, the semi-static SBFD time domain configuration is determined as the first SBFD time domain configuration or the semi-static SBFD time domain configuration is selected as the first SBFD time domain configuration, and the transmission parameters of the time domain unit are determined based on the semi-static SBFD time domain configuration.

In a case where the at least two types of SBFD time domain configurations include the periodic SBFD time domain configuration and the dynamic SBFD time domain configuration, the periodic SBFD time domain configuration is determined as the first SBFD time domain configuration or the periodic SBFD time domain configuration is selected as the first SBFD time domain configuration, and the transmission parameters of the time domain unit are determined based on the periodic SBFD time domain configuration.

In a case where the at least two types of SBFD time domain configurations include the periodic SBFD time domain configuration and the dynamic SBFD time domain configuration, the dynamic SBFD time domain configuration is determined as the first SBFD time domain configuration or the dynamic SBFD time domain configuration is selected as the first SBFD time domain configuration, and the transmission parameters of the time domain unit are determined based on the dynamic SBFD time domain configuration.

In some embodiments, the at least two types of SBFD time domain configurations include three or more types of SBFD time domain configurations.

In some embodiments, the highest-priority SBFD time domain configuration is selected as the first SBFD time domain configuration based on the priority order, or one SBFD time domain configuration is determined as the first SBFD time domain configuration based on the priority information/indication of which type of SBFD time domain configuration. The priority order, or the priority information/indication of which type of SBFD time domain configuration, is configured by the network device, or predefined in a communication protocol, or autonomously implemented by the terminal device.

In some embodiments, one of the three or more types of SBFD time domain configurations is selected as the first SBFD time domain configuration, and the transmission parameters of the time domain unit are determined based on the first SBFD time domain configuration. That is, in a plurality of SBFD time domain configurations, only the first SBFD time domain configuration is considered, and other SBFD time domain configurations are ignored or not considered.

In some embodiments, a current state of the terminal further needs to be considered. The state includes one of an idle state, an inactive state, or a connected state.

In a case where the terminal is in an idle state or an inactive state, the common SBFD time domain configuration is determined as the first SBFD time domain configuration or the common SBFD time domain configuration is selected as the first SBFD time domain configuration, and the transmission parameters of the time domain unit are determined based on the common SBFD time domain configuration.

In a case where the terminal is in an idle state or an inactive state, the periodic SBFD time domain configuration is determined as the first SBFD time domain configuration or the periodic SBFD time domain configuration is selected as the first SBFD time domain configuration, and the transmission parameters of the time domain unit are determined based on the periodic SBFD time domain configuration.

In a case where the terminal is in an idle state or an inactive state, the semi-static SBFD time domain configuration is determined as the first SBFD time domain configuration or the semi-static SBFD time domain configuration is selected as the first SBFD time domain configuration, and the transmission parameters of the time domain unit are determined based on the semi-static SBFD time domain configuration.

In a case where the terminal is in an idle state or an inactive state, the terminal-specific SBFD time domain configuration is determined as the first SBFD time domain configuration or the terminal-specific SBFD time domain configuration is selected as the first SBFD time domain configuration, and the transmission parameters of the time domain unit are determined based on the terminal-specific SBFD time domain configuration.

In a case where the terminal is in an idle state or an inactive state, the dynamic SBFD time domain configuration is determined as the first SBFD time domain configuration or the dynamic SBFD time domain configuration is selected as the first SBFD time domain configuration, and the transmission parameters of the time domain unit are determined based on the dynamic SBFD time domain configuration.

In a case where the terminal is in a connected state, the periodic SBFD time domain configuration is determined as the first SBFD time domain configuration or the periodic SBFD time domain configuration is selected as the first SBFD time domain configuration, and the transmission parameters of the time domain unit are determined based on the periodic SBFD time domain configuration.

In a case where the terminal is in a connected state, the semi-static SBFD time domain configuration is determined as the first SBFD time domain configuration or the semi-static SBFD time domain configuration is selected as the first SBFD time domain configuration, and the transmission parameters of the time domain unit are determined based on the semi-static SBFD time domain configuration.

In a case where the terminal is in a connected state, the dynamic SBFD time domain configuration is determined as the first SBFD time domain configuration or the dynamic SBFD time domain configuration is selected as the first SBFD time domain configuration, and the transmission parameters of the time domain unit are determined based on the dynamic SBFD time domain configuration.

In a case where the terminal is in a connected state, the terminal-specific SBFD time domain configuration is determined as the first SBFD time domain configuration or the terminal-specific SBFD time domain configuration is selected as the first SBFD time domain configuration, and the transmission parameters of the time domain unit are determined based on the terminal-specific SBFD time domain configuration.

In a case where the terminal is in a connected state, the common SBFD time domain configuration is determined as the first SBFD time domain configuration or the common SBFD time domain configuration is selected as the first SBFD time domain configuration, and the transmission parameters of the time domain unit are determined based on the common SBFD time domain configuration.

In summary, in the embodiments of the present disclosure, in a case where a plurality of types of SBFD configurations are present, the first SBFD time domain configuration is directly determined without referring to another SBFD time domain configuration, such that ensures the consistency between the terminal device and the network device is ensured, and the transmission direction, the transmission type, or the transmission scheme of the time domain unit is specified, thereby avoiding a conflict during the transmission of the time domain unit in a case where a plurality of types of SBFD configurations are present.

### With respect to the at least one type of TDD uplink-downlink configuration and the at least one type of SBFD time domain configuration:

In some embodiments, the TDD uplink-downlink configuration includes at least one type of a periodic TDD uplink-downlink configuration, a dynamic TDD uplink-downlink configuration, a semi-static TDD uplink-downlink configuration, a common TDD uplink-downlink configuration, or a terminal-specific TDD uplink-downlink configuration. The SBFD time domain configuration includes at least one type of a periodic SBFD time domain configuration, a dynamic SBFD time domain configuration, a semi-static SBFD time domain configuration, a common SBFD time domain configuration, or a terminal-specific SBFD time domain configuration.

It should be noted that in the embodiments of the present disclosure, the periodic TDD time domain configuration has the same meaning as the TDD time domain configuration of the periodic configuration type. The dynamic TDD time domain configuration has the same meaning as the TDD time domain configuration of the dynamic configuration type. The semi-static TDD time domain configuration has the same meaning as the TDD time domain configuration of the semi-static configuration type. The common TDD time domain configuration has the same meaning as the TDD time domain configuration of the common configuration type. The terminal-specific TDD time domain configuration has the same meaning as the TDD time domain configuration of the terminal-specific configuration type.

At least one type of TDD uplink-downlink configuration and at least one type of SBFD time domain configuration may be configured for the same terminal device.

Some embodiments of the present disclosure are described by taking an example in which the above several types of TDD uplink-downlink configurations and the above several types of SBFD time domain configurations are included. However, those skilled in the art can know that the above TDD uplink-downlink configurations and the above SBFD time domain configurations may further include more other cases. Details are not described herein.

In some embodiments, the time domain configuration in the SBFD configuration is valid only in downlink time domain units and/or flexible time domain units of a TDD uplink-downlink configuration. In some embodiments, the time domain configuration in the SBFD configuration is valid in all time domain units of a TDD uplink-downlink configuration. In some embodiments, the time domain configuration in the SBFD configuration is an uplink configuration for a downlink time domain unit and/or a flexible time domain unit. In some embodiments, the time domain configuration in the SBFD configuration is a downlink configuration for an uplink time domain unit and/or a flexible time domain unit.

FIG. 9 is a flowchart of a method for determining a configuration of a time domain unit according to some embodiments of the present disclosure. The method is performed by a terminal device or a network device. In a case where the at least two types of configurations include at least one type of TDD uplink-downlink configuration and at least one type of SBFD time domain configuration, the process 120 includes the following processes.

**In process 124,** a first transmission parameter of a time domain unit is determined based on at least one type of TDD uplink-downlink configuration.

**In process 125:** a second transmission parameter of the time domain unit is determined by modifying or changing the first transmission parameter of the time domain unit based on at least one type of SBFD time domain configuration.

With respect to the process 124:
In some embodiments, in a case where the at least one type of TDD uplink-downlink configuration includes a TDD uplink-downlink configuration, the first transmission parameter of the time domain unit is determined directly based on the TDD uplink-downlink configuration. In a case where the at least one type of TDD uplink-downlink configuration is a periodic TDD uplink-downlink configuration, the first transmission parameter of the time domain unit is determined based on the periodic TDD uplink-downlink configuration. In some embodiments, in a case where the at least one type of TDD uplink-downlink configuration is a semi-static TDD uplink-downlink configuration, the first transmission parameter of the time domain unit is determined based on the semi-static TDD uplink-downlink configuration. In some embodiments, in a case where at least one type of TDD uplink-downlink configuration is a dynamic TDD uplink-downlink configuration, the first transmission parameter of the time domain unit is determined based on the dynamic TDD uplink-downlink configuration. In some embodiments, in a case where at least one type of TDD uplink-downlink configuration is a common TDD uplink-downlink configuration, the first transmission parameter of the time domain unit is determined based on the common TDD uplink-downlink configuration. In some embodiments, in a case where at least one type of TDD uplink-downlink configuration is a terminal-specific TDD uplink-downlink configuration, the first transmission parameter of the time domain unit is determined based on the terminal-specific TDD uplink-downlink configuration.

In some embodiments, in a case where at least two types of TDD uplink-downlink configurations are configured for the same terminal device, a low-priority TDD uplink-downlink configuration is taken as a basic configuration, and a high-priority TDD uplink-downlink configuration is used to determine transmission parameters of a variable time domain unit in the low-priority TDD uplink-downlink configuration as the first transmission parameter. With respect to any two types of TDD uplink-downlink configurations, a low-priority TDD uplink-downlink configuration is one type of a periodic TDD uplink-downlink configuration, a dynamic TDD uplink-downlink configuration, a semi-static TDD uplink-downlink configuration, a common TDD uplink-downlink configuration, or a terminal-specific TDD uplink-downlink configuration; and a high-priority TDD uplink-downlink configuration is another type of the periodic TDD uplink-downlink configuration, the dynamic TDD uplink-downlink configuration, the semi-static TDD uplink-downlink configuration, the common TDD uplink-downlink configuration, or the terminal-specific TDD uplink-downlink configuration. Configuration types of the low-priority TDD uplink-downlink configuration and the high-priority TDD uplink-downlink configuration are different.

In some embodiments, in a case where the at least one type of TDD uplink-downlink configuration includes at least two types of TDD uplink-downlink configurations, one of the at least two types of TDD uplink-downlink configurations is determined as the first TDD uplink-downlink configuration; or one of the at least two types of TDD uplink-downlink configurations is selected and determined as the first TDD uplink-downlink configuration, and the first transmission parameter of the time domain unit is determined based on the first TDD uplink-downlink configuration. That is, in a plurality of types of TDD uplink-downlink configurations, only the first TDD uplink-downlink configuration is considered, and other TDD uplink-downlink configurations are ignored or not considered. The first TDD uplink-downlink configuration is predefined in a communication protocol, or configured by the network device, or based on the priority, or autonomously implemented by the terminal device (which may be synchronized or reported to the network device).

With respect to the process 125:
In some embodiments, in a case where the at least one type of SBFD time domain configuration includes an SBFD time domain configuration, the second transmission parameter of the time domain unit is determined by directly modifying or changing all or part of the first transmission parameter of the time domain unit based on the SBFD time domain configuration.

In some embodiments, in a case where the at least one type of SBFD time domain configuration is the periodic SBFD time domain configuration and the at least one type of TDD uplink-downlink configuration is the periodic TDD uplink-downlink configuration, the second transmission parameter of the time domain unit is determined by modifying or changing all or part of the periodic TDD uplink-downlink configuration based on the periodic SBFD time domain configuration.

In some embodiments, in a case where the at least one type of SBFD time domain configuration is the periodic SBFD time domain configuration, and the at least one type of TDD uplink-downlink configuration is the semi-static TDD uplink-downlink configuration, the second transmission parameter of the time domain unit is determined by modifying or changing all or part of the semi-static TDD uplink-downlink configuration based on the periodic SBFD time domain configuration.

In some embodiments, in a case where the at least one type of SBFD time domain configuration is the periodic SBFD time domain configuration and the at least one type of TDD uplink-downlink configuration is the dynamic TDD uplink-downlink configuration, the second transmission parameter of the time domain unit is determined by modifying or changing all or part of the dynamic TDD uplink-downlink configuration based on the periodic SBFD time domain configuration.

In some embodiments, in a case where the at least one type of SBFD time domain configuration is the periodic SBFD time domain configuration and the at least one type of TDD uplink-downlink configuration is the common TDD uplink-downlink configuration, the second transmission parameter of the time domain unit is determined by modifying or changing all or part of the common TDD uplink-downlink configuration based on the periodic SBFD time domain configuration.

In some embodiments, in a case where the at least one type of SBFD time domain configuration is the periodic SBFD time domain configuration and the at least one type of TDD uplink-downlink configuration is the terminal-specific TDD uplink-downlink configuration, the second transmission parameter of the time domain unit is determined by modifying or changing all or part of the terminal-specific TDD uplink-downlink configuration based on the periodic SBFD time domain configuration.

In some embodiments, in a case where the at least one type of SBFD time domain configuration is the semi-static SBFD time domain configuration and the at least one type of TDD uplink-downlink configuration is the periodic TDD uplink-downlink configuration, the second transmission parameter of the time domain unit is determined by modifying or changing all or part of the periodic TDD uplink-downlink configuration based on the semi-static SBFD time domain configuration.

In some embodiments, in a case where the at least one type of SBFD time domain configuration is the semi-static SBFD time domain configuration and the at least one type of TDD uplink-downlink configuration is the semi-static TDD uplink-downlink configuration, the second transmission parameter of the time domain unit is determined by modifying or changing all or part of the semi-static TDD uplink-downlink configuration based on the semi-static SBFD time domain configuration.

In some embodiments, in a case where the at least one type of SBFD time domain configuration is the semi-static SBFD time domain configuration and the at least one type of TDD uplink-downlink configuration is the dynamic TDD uplink-downlink configuration, the second transmission parameter of the time domain unit is determined by modifying or changing all or part of the dynamic TDD uplink-downlink configuration based on the semi-static SBFD time domain configuration.

In some embodiments, in a case where the at least one type of SBFD time domain configuration is the semi-static SBFD time domain configuration and the at least one type of TDD uplink-downlink configuration is the common TDD uplink-downlink configuration, the second transmission parameter of the time domain unit is determined by modifying or changing all or part of the common TDD uplink-downlink configuration based on the semi-static SBFD time domain configuration.

In some embodiments, in a case where the at least one type of SBFD time domain configuration is the semi-static SBFD time domain configuration and the at least one type of TDD uplink-downlink configuration is the terminal-specific TDD uplink-downlink configuration, the second transmission parameter of the time domain unit is determined by modifying or changing all or part of the terminal-specific TDD uplink-downlink configuration based on the semi-static SBFD time domain configuration.

In some embodiments, in a case where the at least one type of SBFD time domain configuration is the dynamic SBFD time domain configuration and the at least one type of TDD uplink-downlink configuration is the periodic TDD uplink-downlink configuration, the second transmission parameter of the time domain unit is determined by modifying or changing all or part of the periodic TDD uplink-downlink configuration based on the dynamic SBFD time domain configuration.

In some embodiments, in a case where the at least one type of SBFD time domain configuration is the dynamic SBFD time domain configuration and the at least one type of TDD uplink-downlink configuration is the semi-static TDD uplink-downlink configuration, the second transmission parameter of the time domain unit is determined by modifying or changing all or part of the semi-static TDD uplink-downlink configuration based on the dynamic SBFD time domain configuration.

In some embodiments, in a case where the at least one type of SBFD time domain configuration is the dynamic SBFD time domain configuration and the at least one type of TDD uplink-downlink configuration is the dynamic TDD uplink-downlink configuration, the second transmission parameter of the time domain unit is determined by modifying or changing all or part of the dynamic TDD uplink-downlink configuration based on the dynamic SBFD time domain configuration.

In some embodiments, in a case where the at least one type of SBFD time domain configuration is the dynamic SBFD time domain configuration and the at least one type of TDD uplink-downlink configuration is the common TDD uplink-downlink configuration, the second transmission parameter of the time domain unit is determined by modifying or changing all or part of the common TDD uplink-downlink configuration based on the dynamic SBFD time domain configuration.

In some embodiments, in a case where the at least one type of SBFD time domain configuration is the dynamic SBFD time domain configuration and the at least one type of TDD uplink-downlink configuration is the terminal-specific TDD uplink-downlink configuration, the second transmission parameter of the time domain unit is determined by modifying or changing all or part of the terminal-specific TDD uplink-downlink configuration based on the dynamic SBFD time domain configuration.

In some embodiments, in a case where the at least one type of SBFD time domain configuration is the common SBFD time domain configuration and the at least one type of TDD uplink-downlink configuration is the periodic TDD uplink-downlink configuration, the second transmission parameter of the time domain unit is determined by modifying or changing all or part of the periodic TDD uplink-downlink configuration based on the common SBFD time domain configuration.

In some embodiments, in a case where the at least one type of SBFD time domain configuration is the common SBFD time domain configuration and the at least one type of TDD uplink-downlink configuration is the semi-static TDD uplink-downlink configuration, the second transmission parameter of the time domain unit is determined by modifying or changing all or part of the semi-static TDD uplink-downlink configuration based on the common SBFD time domain configuration.

In some embodiments, in a case where the at least one type of SBFD time domain configuration is the common SBFD time domain configuration and the at least one type of TDD uplink-downlink configuration is the dynamic TDD uplink-downlink configuration, the second transmission parameter of the time domain unit is determined by modifying or changing all or part of the dynamic TDD uplink-downlink configuration based on the common SBFD time domain configuration.

In some embodiments, in a case where the at least one type of SBFD time domain configuration is the common SBFD time domain configuration and the at least one type of TDD uplink-downlink configuration is the common TDD uplink-downlink configuration, the second transmission parameter of the time domain unit is determined by modifying or changing all or part of the common TDD uplink-downlink configuration based on the common SBFD time domain configuration.

In some embodiments, in a case where the at least one type of SBFD time domain configuration is the common SBFD time domain configuration and the at least one type of TDD uplink-downlink configuration is the terminal-specific TDD uplink-downlink configuration, the second transmission parameter of the time domain unit is determined by modifying or changing all or part of the terminal-specific TDD uplink-downlink configuration based on the common SBFD time domain configuration.

In some embodiments, in a case where the at least one type of SBFD time domain configuration is the terminal-specific SBFD time domain configuration and the at least one type of TDD uplink-downlink configuration is the periodic TDD uplink-downlink configuration, the second transmission parameter of the time domain unit is determined by modifying or changing all or part of the periodic TDD uplink-downlink configuration based on the terminal-specific SBFD time domain configuration.

In some embodiments, in a case where the at least one type of SBFD time domain configuration is the terminal-specific SBFD time domain configuration and the at least one type of TDD uplink-downlink configuration is the semi-static TDD uplink-downlink configuration, the second transmission parameter of the time domain unit is determined by modifying or changing all or part of the semi-static TDD uplink-downlink configuration based on the terminal-specific SBFD time domain configuration.

In some embodiments, in a case where the at least one type of SBFD time domain configuration is the terminal-specific SBFD time domain configuration and the at least one type of TDD uplink-downlink configuration is the dynamic TDD uplink-downlink configuration, the second transmission parameter of the time domain unit is determined by modifying or changing all or part of the dynamic TDD uplink-downlink configuration based on the terminal-specific SBFD time domain configuration.

In some embodiments, in a case where the at least one type of SBFD time domain configuration is the terminal-specific SBFD time domain configuration and the at least one type of TDD uplink-downlink configuration is the common TDD uplink-downlink configuration, the second transmission parameter of the time domain unit is determined by modifying or changing all or part of the common TDD uplink-downlink configuration based on the terminal-specific SBFD time domain configuration.

In some embodiments, in a case where the at least one type of SBFD time domain configuration is the terminal-specific SBFD time domain configuration and the at least one type of TDD uplink-downlink configuration is the terminal-specific TDD uplink-downlink configuration, the second transmission parameter of the time domain unit is determined by modifying or changing all or part of the terminal-specific TDD uplink-downlink configuration based on the terminal-specific SBFD time domain configuration.

It should be noted that, in the embodiments of the present disclosure, modifying or changing all or part of another time domain configuration based on one time domain configuration may be understood as determining the first transmission parameter of the time domain unit based on one time domain configuration, and acquiring the second transmission parameter by modifying or changing all or part of the first transmission parameter based on another time domain configuration.

In some embodiments, in a case where at least two types of SBFD time domain configurations are configured for the same terminal device, a low-priority SBFD time domain configuration is taken as a basic configuration, and the final SBFD time domain configuration is acquired by determining transmission parameters of a variable time domain unit in the low-priority SBFD time domain configuration based on a high-priority SBFD time domain configuration. Then, the second transmission parameter of the time domain unit is determined by modifying or changing all or part of the TDD uplink-downlink configuration based on the final SBFD time domain configuration. With respect to any two types of SBFD time domain configurations, the low-priority SBFD time domain configuration is one type of a periodic SBFD time domain configuration, a dynamic SBFD time domain configuration, a semi-static SBFD time domain configuration, a common SBFD time domain configuration, or a terminal-specific SBFD time domain configuration; and the high-priority SBFD time domain configuration is another type of the periodic SBFD time domain configuration, the dynamic SBFD time domain configuration, the semi-static SBFD time domain configuration, the common SBFD time domain configuration, or the terminal-specific SBFD time domain configuration. The configuration type of the low-priority SBFD time domain configuration is different from the configuration type of the high-priority SBFD time domain configuration.

In some embodiments, in a case where at least one type of SBFD time domain configuration includes at least two types of SBFD time domain configurations, one of the at least two types of SBFD time domain configurations is determined as the first SBFD time domain configuration, or one of the at least two types of SBFD time domain configurations is selected and determined as the first SBFD time domain configuration, and the second transmission parameter of the time domain unit is determined by modifying or changing the first transmission parameter of the time domain unit based on the first SBFD time domain configuration. That is, in a plurality of SBFD time domain configurations, only the first SBFD time domain configuration is considered, and other SBFD time domain configurations are ignored or not considered. The first SBFD time domain configuration is predefined in a communication protocol, or configured by the network device, or based on the priority, or autonomously implemented by the terminal device (which may be synchronized or reported to the network device).

In some embodiments, the configuration periods of the TDD uplink-downlink configuration and the SBFD configuration are the same. During configuration, the network device restricts the configuration period of the TDD uplink-downlink configuration to be the same as the configuration period of the SBFD configuration. Or, the terminal does not expect that the configuration periods of the TDD uplink-downlink configuration and the SBFD configuration are different. Or, the terminal expects that the configuration periods of the TDD uplink-downlink configuration and the SBFD configuration are the same.

However, in some embodiments, the configuration periods of the TDD uplink-downlink configuration and the SBFD configuration are different.

In summary, in the embodiments of the present disclosure, in a case where both the TDD uplink-downlink configuration and the SBFD time domain configuration are present, how to use the TDD uplink-downlink configuration and the SBFD time domain configuration is specified, such that the consistency between the terminal device and the network device is ensured, and the transmission direction, the transmission type, or the transmission scheme of the time domain unit is specified, thereby avoiding a conflict during the transmission of the time domain unit in a case where both the TDD uplink-downlink configuration and the SBFD time domain configuration are present.

In some embodiments, the at least one type of SBFD time domain configuration includes at least two types of SBFD time domain configurations.

**In process 124,** a first transmission parameter of a time domain unit is determined based on at least one type of TDD uplink-downlink configuration.

As illustrated in FIG. 10, the process 125 further includes the following processes.

**In process 1251,** an intermediate transmission parameter of the time domain unit is determined based on the at least two types of SBFD time domain configurations.

**In process 1252,** a second transmission parameter of the time domain unit is determined by modifying or changing part or all of the first transmission parameters of the time domain unit based on the intermediate transmission parameter, or a variable part of the time domain unit is determined based on the intermediate transmission parameter.

In some embodiments, in a case where at least two types of SBFD time domain configurations are configured for the same terminal device, a low-priority SBFD time domain configuration is taken as a basic configuration, and the final SBFD time domain configuration is acquired by determining transmission parameters of a variable time domain unit in the low-priority SBFD time domain configuration based on a high-priority SBFD time domain configuration. An intermediate transmission parameter of the time domain unit is determined based on the final SBFD time domain configuration. With respect to any two types of SBFD time domain configurations, the low-priority SBFD time domain configuration is one type of a periodic SBFD time domain configuration, a dynamic SBFD time domain configuration, a semi-static SBFD time domain configuration, a common SBFD time domain configuration, or a terminal-specific SBFD time domain configuration; and the high-priority SBFD time domain configuration is another type of the periodic SBFD time domain configuration, the dynamic SBFD time domain configuration, the semi-static SBFD time domain configuration, the common SBFD time domain configuration, or the terminal-specific SBFD time domain configuration. The configuration type of the low-priority SBFD time domain configuration is different from the configuration type of the high-priority SBFD time domain configuration.

In some embodiments, in a case where at least one type of SBFD time domain configuration includes at least two types of SBFD time domain configurations, one of the at least two types of SBFD time domain configurations is determined as the first SBFD time domain configuration, or one of the at least two types of SBFD time domain configurations is selected and determined as the first SBFD time domain configuration, and the intermediate transmission parameter of the time domain unit is determined based on the first SBFD time domain configuration. Only the first SBFD time domain configuration is considered or used to determine the intermediate transmission parameter of the time domain unit, and other SBFD time domain configurations are not considered or ignored. The first SBFD time domain configuration is predefined in a communication protocol, or configured by the network device, or based on the priority, or autonomously implemented by the terminal device (which may be synchronized or reported to the network device).

In some embodiments, in a case where the at least two types of SBFD time domain configurations include the common SBFD time domain configuration and the terminal-specific SBFD time domain configuration, the common SBFD time domain configuration is taken as the first SBFD time domain configuration, or the common SBFD time domain configuration is selected as the first SBFD time domain configuration, and the intermediate transmission parameter of the time domain unit is determined based on the common SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the common SBFD time domain configuration and the terminal-specific SBFD time domain configuration, the terminal-specific SBFD time domain configuration is taken as the first SBFD time domain configuration, or the terminal-specific SBFD time domain configuration is selected as the first SBFD time domain configuration, and the intermediate transmission parameter of the time domain unit is determined based on the terminal-specific SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the common SBFD time domain configuration and the semi-static SBFD time domain configuration, the common SBFD time domain configuration is taken as the first SBFD time domain configuration, or the common SBFD time domain configuration is selected as the first SBFD time domain configuration, and the intermediate transmission parameter of the time domain unit is determined based on the common SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the common SBFD time domain configuration and the semi-static SBFD time domain configuration, the semi-static SBFD time domain configuration is taken as the first SBFD time domain configuration, or the semi-static SBFD time domain configuration is selected as the first SBFD time domain configuration, and the intermediate transmission parameter of the time domain unit is determined based on the semi-static SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the common SBFD time domain configuration and the dynamic SBFD time domain configuration, the common SBFD time domain configuration is taken as the first SBFD time domain configuration, or the common SBFD time domain configuration is selected as the first SBFD time domain configuration, and the intermediate transmission parameter of the time domain unit is determined based on the common SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the common SBFD time domain configuration and the dynamic SBFD time domain configuration, the dynamic SBFD time domain configuration is taken as the first SBFD time domain configuration, or the dynamic SBFD time domain configuration is selected as the first SBFD time domain configuration, and the intermediate transmission parameter of the time domain unit is determined based on the dynamic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the semi-static SBFD time domain configuration and the terminal-specific SBFD time domain configuration, the semi-static SBFD time domain configuration is taken as the first SBFD time domain configuration, or the semi-static SBFD time domain configuration is selected as the first SBFD time domain configuration, and the intermediate transmission parameter of the time domain unit is determined based on the semi-static SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the semi-static SBFD time domain configuration and the terminal-specific SBFD time domain configuration, the terminal-specific SBFD time domain configuration is taken as the first SBFD time domain configuration, or the terminal-specific SBFD time domain configuration is selected as the first SBFD time domain configuration, and the intermediate transmission parameter of the time domain unit is determined based on the terminal-specific SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the semi-static SBFD time domain configuration and the dynamic SBFD time domain configuration, the semi-static SBFD time domain configuration is taken as the first SBFD time domain configuration, or the semi-static SBFD time domain configuration is selected as the first SBFD time domain configuration, and the intermediate transmission parameter of the time domain unit is determined based on the semi-static SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the semi-static SBFD time domain configuration and the dynamic SBFD time domain configuration, the dynamic SBFD time domain configuration is taken as the first SBFD time domain configuration, or the dynamic SBFD time domain configuration is selected as the first SBFD time domain configuration, and the intermediate transmission parameter of the time domain unit is determined based on the dynamic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the terminal-specific SBFD time domain configuration and the dynamic SBFD time domain configuration, the terminal-specific SBFD time domain configuration is taken as the first SBFD time domain configuration, or the terminal-specific SBFD time domain configuration is selected as the first SBFD time domain configuration, and the intermediate transmission parameter of the time domain unit is determined based on the terminal-specific SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the terminal-specific SBFD time domain configuration and the dynamic SBFD time domain configuration, the dynamic SBFD time domain configuration is taken as the first SBFD time domain configuration, or the dynamic SBFD time domain configuration is selected as the first SBFD time domain configuration, and the intermediate transmission parameter of the time domain unit is determined based on the dynamic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the terminal-specific SBFD time domain configuration and the periodic SBFD time domain configuration, the periodic SBFD time domain configuration is taken as the first SBFD time domain configuration, or the periodic SBFD time domain configuration is selected as the first SBFD time domain configuration, and the intermediate transmission parameter of the time domain unit is determined based on the periodic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the terminal-specific SBFD time domain configuration and the periodic SBFD time domain configuration, the terminal-specific SBFD time domain configuration is taken as the first SBFD time domain configuration, or the terminal-specific SBFD time domain configuration is selected as the first SBFD time domain configuration, and the intermediate transmission parameter of the time domain unit is determined based on the terminal-specific SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the periodic SBFD time domain configuration and the common SBFD time domain configuration, the periodic SBFD time domain configuration is taken as the first SBFD time domain configuration, or the periodic SBFD time domain configuration is selected as the first SBFD time domain configuration, and the intermediate transmission parameter of the time domain unit is determined based on the periodic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the periodic SBFD time domain configuration and the common SBFD time domain configuration, the common SBFD time domain configuration is taken as the first SBFD time domain configuration, or the common SBFD time domain configuration is selected as the first SBFD time domain configuration, and the intermediate transmission parameter of the time domain unit is determined based on the common SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the periodic SBFD time domain configuration and the semi-static SBFD time domain configuration, the periodic SBFD time domain configuration is taken as the first SBFD time domain configuration, or the periodic SBFD time domain configuration is selected as the first SBFD time domain configuration, and the intermediate transmission parameter of the time domain unit is determined based on the periodic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the periodic SBFD time domain configuration and the semi-static SBFD time domain configuration, the semi-static SBFD time domain configuration is taken as the first SBFD time domain configuration, or the semi-static SBFD time domain configuration is selected as the first SBFD time domain configuration, and the intermediate transmission parameter of the time domain unit is determined based on the semi-static SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the periodic SBFD time domain configuration and the dynamic SBFD time domain configuration, the periodic SBFD time domain configuration is taken as the first SBFD time domain configuration, or the periodic SBFD time domain configuration is selected as the first SBFD time domain configuration, and the intermediate transmission parameter of the time domain unit is determined based on the periodic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In some embodiments, in a case where the at least two types of SBFD time domain configurations include the periodic SBFD time domain configuration and the dynamic SBFD time domain configuration, the dynamic SBFD time domain configuration is taken as the first SBFD time domain configuration, or the dynamic SBFD time domain configuration is selected as the first SBFD time domain configuration, and the intermediate transmission parameter of the time domain unit is determined based on the dynamic SBFD time domain configuration. The second transmission parameter of the time domain unit is determined by modifying or changing part or all of the first transmission parameter of the time domain unit based on the intermediate transmission parameter, or the variable part of the time domain unit is determined based on the intermediate transmission parameter.

In summary, in the embodiments of the present disclosure, in a case where the at least two types of SBFD time domain configurations are included, the intermediate transmission parameter of the time domain unit is determined based on the at least two types of SBFD time domain configurations, and how to use a plurality of types of SBFD configurations is specified. In a case where the SBFD time domain configuration is determined, all or part of the TDD uplink-downlink configuration is modified or changed, such that the consistency between the terminal device and the network device is ensured, and the transmission direction, the transmission type, or the transmission scheme of the time domain unit is specified, thereby avoiding a conflict during the transmission of the time domain unit.

In some embodiments, the at least two types of configurations include a TDD uplink-downlink configuration and an SBFD time domain configuration that are of the same configuration type. The configuration type includes at least one of a common configuration type, a terminal-specific configuration type, a periodic configuration type, a semi-static configuration type, or a dynamic configuration type. The TDD uplink-downlink configuration is one type of the periodic TDD uplink-downlink configuration, the dynamic TDD uplink-downlink configuration, the semi-static TDD uplink-downlink configuration, the common TDD uplink-downlink configuration, or the terminal-specific TDD uplink-downlink configuration. The SBFD time domain configuration is one type of the periodic SBFD time domain configuration, the dynamic SBFD time domain configuration, the semi-static SBFD time domain configuration, the common SBFD time domain configuration, or the terminal-specific SBFD time domain configuration.

In some embodiments, at least one type of TDD uplink-downlink configuration and at least one type of SBFD time domain configuration are configured for the terminal device. In some embodiments, a plurality of types of TDD uplink-downlink configurations and at least one type of SBFD time domain configuration are configured for the terminal device, and the quantity of TDD uplink-downlink configurations is greater than or equal to the quantity of SBFD time domain configurations. In some embodiments, at least one type of TDD uplink-downlink configuration and a plurality of types of SBFD time domain configurations are configured for the terminal device, and the quantity of TDD uplink-downlink configurations is less than or equal to the quantity of SBFD time domain configurations. In a case where a plurality of types of TDD uplink-downlink configurations are configured for the terminal device, each type of TDD uplink-downlink configuration is corresponding to an SBFD time domain configuration of the same configuration type, or only part of TDD uplink-downlink configurations correspond to an SBFD time domain configuration of the same configuration type. In a case where a plurality of types of SBFD time domain configurations are configured for the terminal device, each type of SBFD time domain configuration is corresponding to a TDD uplink-downlink configuration of the same configuration type, or only part of SBFD time domain configurations may be corresponding to a TDD uplink-downlink configuration of the same configuration type.

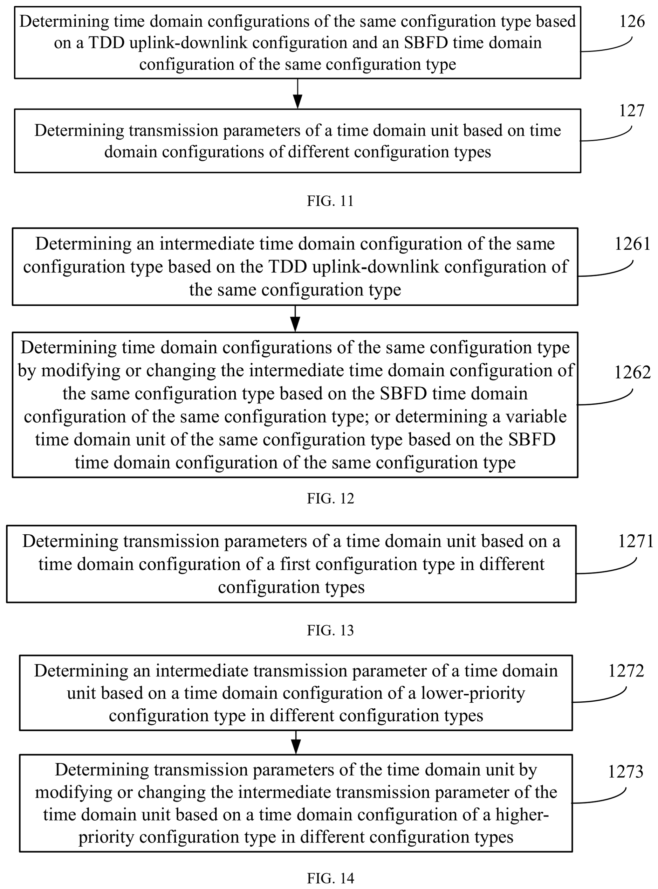

As illustrated in FIG. 11, the process 120 further includes the following processes.

**In process 126,** time domain configurations of the same configuration type are determined based on a TDD uplink-downlink configuration and an SBFD time domain configuration of the same configuration type; and

**In process 127,** the transmission parameters of the time domain unit are determined based on time domain configurations of different configuration types.

With respect to the process 126:

In some embodiments, in a case where a TDD uplink-downlink configuration of the common configuration type and an SBFD time domain configuration of the common configuration type are configured for the terminal device, the TDD uplink-downlink configuration is taken as a basic configuration, and a (merged) time domain configuration of the common configuration type is acquired by modifying or changing all or part of the TDD uplink-downlink configuration based on the SBFD time domain configuration; or the SBFD time domain configuration is taken as a basic configuration, and a (merged) time domain configuration of the common configuration type is acquired by modifying or changing all or part of the SBFD time domain configuration based on the TDD uplink-downlink configuration. Or, the (final) time domain configuration of the common configuration type is determined by considering or using only the TDD uplink-downlink configuration and not considering or ignoring the SBFD time domain configuration. Or, the (final) time domain configuration of the common configuration type is determined by considering or using only the SBFD time domain configuration and not considering or ignoring the TDD uplink-downlink configuration.

In some embodiments, in a case where a TDD uplink-downlink configuration of the terminal-specific configuration type and an SBFD time domain configuration of the terminal-specific configuration type are configured for the terminal device, the TDD uplink-downlink configuration is taken as a basic configuration, and a (merged) time domain configuration of the terminal-specific configuration type is acquired by modifying or changing all or part of the TDD uplink-downlink configuration based on the SBFD time domain configuration; or the SBFD time domain configuration is taken as a basic configuration, and a (merged) time domain configuration of the terminal-specific configuration type is acquired by modifying or changing all or part of the SBFD time domain configuration based on the TDD uplink-downlink configuration. Or, the (final) time domain configuration of the terminal-specific configuration type is determined by considering or using only the TDD uplink-downlink configuration and not considering or ignoring the SBFD time domain configuration. Or, the (final) time domain configuration of the terminal-specific configuration type is determined by considering or using only the SBFD time domain configuration and not considering or ignoring the TDD uplink-downlink configuration.

In some embodiments, in a case where a TDD uplink-downlink configuration of the semi-static configuration type and an SBFD time domain configuration of the semi-static configuration type are configured for the terminal device, the TDD uplink-downlink configuration is taken as a basic configuration, and a (merged) time domain configuration of the semi-static configuration type is acquired by modifying or changing all or part of the TDD uplink-downlink configuration based on the SBFD time domain configuration; or the SBFD time domain configuration is taken as a basic configuration, and a (merged) time domain configuration of the semi-static configuration type is acquired by modifying or changing all or part of the SBFD time domain configuration based on the TDD uplink-downlink configuration. Or, the (final) time domain configuration of the semi-static configuration type is determined by considering or using only the TDD uplink-downlink configuration and not considering or ignoring the SBFD time domain configuration. Or, the (final) time domain configuration of the semi-static configuration type is determined by considering or using only the SBFD time domain configuration and not considering or ignoring the TDD uplink-downlink configuration.

In some embodiments, in a case where a TDD uplink-downlink configuration of the dynamic configuration type and an SBFD time domain configuration of the dynamic configuration type are configured for the terminal device, the TDD uplink-downlink configuration is taken as a basic configuration, and a (merged) time domain configuration of the dynamic configuration type is acquired by modifying or changing all or part of the TDD uplink-downlink configuration based on the SBFD time domain configuration; or the SBFD time domain configuration is taken as a basic configuration, and a (merged) time domain configuration of the dynamic configuration type is acquired by modifying or changing all or part of the SBFD time domain configuration based on the TDD uplink-downlink configuration. Or, the (final) time domain configuration of the dynamic configuration type is determined by considering or using only the TDD uplink-downlink configuration and not considering or ignoring the SBFD time domain configuration. Or, the (final) time domain configuration of the dynamic configuration type is determined by considering or using only the SBFD time domain configuration and not considering or ignoring the TDD uplink-downlink configuration.

In some embodiments, in a case where a TDD uplink-downlink configuration of a DCI dynamic change configuration type and an SBFD time domain configuration of the DCI dynamic change configuration type are configured for the terminal device, the TDD uplink-downlink configuration is taken as a basic configuration, and a (merged) time domain configuration of the DCI dynamic change configuration type is acquired by modifying or changing all or part of the TDD uplink-downlink configuration based on the SBFD time domain configuration; or the SBFD time domain configuration is taken as a basic configuration, and a (merged) time domain configuration of the DCI dynamic change configuration type is acquired by modifying or changing all or part of the SBFD time domain configuration based on the TDD uplink-downlink configuration. Or, the (final) time domain configuration of the DCI dynamic change configuration type is determined by considering or using only the TDD uplink-downlink configuration and not considering or ignoring the SBFD time domain configuration. Or, the (final) time domain configuration of the DCI dynamic change configuration type is determined by considering or using only the SBFD time domain configuration and not considering or ignoring the TDD uplink-downlink configuration.

In some embodiments, in a case where a TDD uplink-downlink configuration of the periodic configuration type and an SBFD time domain configuration of the periodic configuration type are configured for the terminal device, the TDD uplink-downlink configuration is taken as a basic configuration, and a (merged) time domain configuration of the periodic type is acquired by modifying or changing all or part of the TDD uplink-downlink configuration based on the SBFD time domain configuration; or the SBFD time domain configuration is taken as a basic configuration, and a (merged) time domain configuration of the periodic type is acquired by modifying or changing all or part of the SBFD time domain configuration based on the TDD uplink-downlink configuration. Or, the (final) time domain configuration of the periodic configuration type is determined by considering or using only the TDD uplink-downlink configuration and not considering or ignoring the SBFD time domain configuration. Or, the (final) time domain configuration of the periodic configuration type is determined by considering or using only the SBFD time domain configuration and not considering or ignoring the TDD uplink-downlink configuration.

Through the above merging process or selection process, the TDD uplink-downlink configuration and the SBFD time domain configuration of the same configuration type are merged into one time domain configuration, such that each configuration type is corresponding to one time domain configuration.

With respect to the process 127:
In some embodiments, with respect to time domain configurations of different configuration types, a time domain configuration of a low-priority configuration type is taken as a basic configuration, and the transmission parameters of the time domain unit are determined by modifying or changing transmission parameters of a variable time domain unit in the time domain configuration of the low-priority configuration type based on a time domain configuration of a high-priority configuration type. With respect to time domain configurations of any two configuration types, a time domain configuration of a low-priority configuration type is one of a time domain configuration of a periodic configuration type, a time domain configuration of a dynamic configuration type, a time domain configuration of a semi-static configuration type, a time domain configuration of a common configuration type, or a time domain configuration of a terminal-specific configuration type; and a time domain configuration of a high-priority configuration type is another one of the time domain configuration of the periodic configuration type, the time domain configuration of the dynamic configuration type, the time domain configuration of the semi-static configuration type, the time domain configuration of the common configuration type, or the time domain configuration of the terminal-specific configuration type. The configuration type of a time domain configuration of the low-priority configuration type is different from the configuration type of a time domain configuration of the high-priority configuration type.

In some embodiments, with respect to time domain configurations of different configuration types, a time domain configuration of one configuration type is selected from time domain configurations of a plurality of configuration types and determined as the time domain configuration of the first configuration type, and the transmission parameters of the time domain unit are determined based on the time domain configuration of the first configuration type. That is, the time domain configuration of the first configuration type is selected from the time domain configurations of the a plurality of configuration types, and only the time domain configuration of the first configuration type is considered or used to determine the transmission parameters of the time domain unit, and the time domain configurations of other configuration types are not considered or ignored. The time domain configuration of the first configuration type is predefined in a communication protocol, or configured by the network device, or autonomously implemented by the terminal device (which may be synchronized or reported to the network device).

In summary, in the embodiments of the present disclosure, in a case where at least two types of configurations include a TDD uplink-downlink configuration and an SBFD time domain configuration that are of the same configuration type, the configuration type of a time domain unit is determined, and then the transmission direction, the transmission type, or the transmission scheme of the time domain unit is determined based on different configuration types, such that the consistency between the terminal device and the network device is ensured, thereby avoiding a conflict during the transmission of the time domain unit.

FIG. 12 is a flowchart of a method for determining a configuration of a time domain unit according to some embodiments of the present disclosure. The process 126 further includes the following processes.

**In process 1261,** an intermediate time domain configuration of the same configuration type is determined based on the TDD uplink-downlink configuration of the same configuration type.

**In process 1262,** the time domain configuration of the same configuration type is determined by modifying or changing the intermediate time domain configuration of the same configuration type based on the SBFD time domain configuration of the same configuration type; or a variable time domain unit or transmission parameters of the variable time domain unit in the intermediate time domain configuration of the same configuration type is/are determined based on the SBFD time domain configuration of the same configuration type.

In some embodiments, for an SBFD time domain configuration and a TDD uplink-downlink configuration that are of the common configuration type, an intermediate time domain configuration of the common configuration type is determined based on the TDD uplink-downlink configuration; all or part of the intermediate time domain configuration is modified or changed based on the SBFD time domain configuration of the common configuration, and the modified or changed intermediate time domain configuration is determined as the time domain configuration of the common configuration type; or a variable time domain unit in the time domain configuration of the common configuration type is determined based on the SBFD time domain configuration of the common configuration type, or transmission parameters of the variable time domain unit in the time domain configuration of the common configuration type are determined based on the SBFD time domain configuration of the common configuration type.

In some embodiments, for an SBFD time domain configuration and a TDD uplink-downlink configuration that are of the terminal-specific configuration type, an intermediate time domain configuration of the terminal-specific configuration type is determined based on the TDD uplink-downlink configuration; all or part of the intermediate time domain configuration is modified or changed based on the SBFD time domain configuration of the terminal-specific configuration, and the modified or changed intermediate time domain configuration is determined as the time domain configuration of the terminal-specific configuration type; or a variable time domain unit in the time domain configuration of the terminal-specific configuration type is determined based on the SBFD time domain configuration of the terminal-specific configuration type, or transmission parameters of the variable time domain unit in the time domain configuration of the terminal-specific configuration type are determined based on the SBFD time domain configuration of the terminal-specific configuration type.

In some embodiments, for an SBFD time domain configuration and a TDD uplink-downlink configuration that are of the semi-static configuration type, an intermediate time domain configuration of the semi-static configuration type is determined based on the TDD uplink-downlink configuration; all or part of the intermediate time domain configuration is modified or changed based on the SBFD time domain configuration of the semi-static configuration, and the modified or changed intermediate time domain configuration is determined as the time domain configuration of the semi-static configuration type; or a variable time domain unit in the time domain configuration of the semi-static configuration type is determined based on the SBFD time domain configuration of the semi-static configuration type, or transmission parameters of the variable time domain unit in the time domain configuration of the semi-static configuration type are determined based on the SBFD time domain configuration of the semi-static configuration type.

In some embodiments, for an SBFD time domain configuration and a TDD uplink-downlink configuration that are of the dynamic configuration type, an intermediate time domain configuration of the dynamic configuration type is determined based on the TDD uplink-downlink configuration; all or part of the intermediate time domain configuration is modified or changed based on the SBFD time domain configuration of the dynamic configuration, and the modified or changed intermediate time domain configuration is determined as the time domain configuration of the dynamic configuration type; or a variable time domain unit in the time domain configuration of the dynamic configuration type is determined based on the SBFD time domain configuration of the dynamic configuration type, or transmission parameters of the variable time domain unit in the time domain configuration of the dynamic configuration type are determined based on the SBFD time domain configuration of the dynamic configuration type.

In some embodiments, for an SBFD time domain configuration and a TDD uplink-downlink configuration that are of the DCI dynamic change configuration type, an intermediate time domain configuration of the DCI dynamic change configuration type is determined based on the TDD uplink-downlink configuration; all or part of the intermediate time domain configuration is modified or changed based on the SBFD time domain configuration of the DCI dynamic change configuration, and the modified or changed intermediate time domain configuration is determined as the time domain configuration of the DCI dynamic change configuration type; or a variable time domain unit in the time domain configuration of the DCI dynamic change configuration type is determined based on the SBFD time domain configuration of the DCI dynamic change configuration type, or transmission parameters of the variable time domain unit in the time domain configuration of the DCI dynamic change configuration type are determined based on the SBFD time domain configuration of the DCI dynamic change configuration type.

In some embodiments, for an SBFD time domain configuration and a TDD uplink-downlink configuration that are of the periodic configuration type, an intermediate time domain configuration of the periodic configuration type is determined based on the TDD uplink-downlink configuration; all or part of the intermediate time domain configuration is modified or changed based on the SBFD time domain configuration of the periodic configuration, and the modified or changed intermediate time domain configuration is determined as the time domain configuration of the periodic configuration type; or a variable time domain unit in the time domain configuration of the periodic configuration type is determined based on the SBFD time domain configuration of the periodic configuration type, or transmission parameters of the variable time domain unit in the time domain configuration of the periodic configuration type are determined based on the SBFD time domain configuration of the periodic configuration type.

In summary, in the embodiments of the present disclosure, in a case where at least two types of configurations include a TDD uplink-downlink configuration and an SBFD time domain configuration that are of the same configuration type, the configuration type of a time domain unit is determined, and then the transmission direction, the transmission type, or the transmission scheme of the time domain unit is determined based on different configuration types, such that the consistency between the terminal device and the network device is ensured, thereby avoiding a conflict during the transmission of the time domain unit.

In some embodiments, as illustrated in FIG. 13, the process 127 further includes the process 1271.

**In process 1271,** the transmission parameters of the time domain unit are determined based on the time domain configuration of the first configuration type in different configuration types.

The first configuration type is one of the at least two configuration types.

In some embodiments, the first configuration type is configured by the network device, or determined based on the priority, or indicated by a network, or predefined, or autonomously implemented by the terminal device.

In some embodiments, the priorities of different configuration types are configured by the network device, or predefined in a communication protocol, or indicated by a network, or autonomously implemented by the terminal device.

The configuration type includes at least one of: a common configuration type, a terminal-specific configuration type, a periodic configuration type, a semi-static configuration type, or a dynamic configuration type. Different configuration types include at least two of the above types.

In some embodiments, the at least two configuration types include a first configuration type and a second configuration type, or include the first configuration type and a plurality of other configuration types, wherein the priority of the first configuration type is higher than the priority of the second configuration type or the priority of the first configuration type is higher than the priorities of the other configuration types. In this case, the transmission parameters of the time domain unit are determined based on a time domain configuration of the first configuration type.

In some embodiments, the at least two configuration types include a first configuration type and a second configuration type, or include the first configuration type and a plurality of other configuration types. In a case where the first configuration type is predetermined to be used, the transmission parameters of the time domain unit are determined based on a time domain configuration of the first configuration type.

In some embodiments, the at least two configuration types include a first configuration type and a second configuration type, or include the first configuration type and a plurality of other configuration types. In a case where the first configuration type is indicated to be used, the transmission parameters of the time domain unit are determined based on a time domain configuration of the first configuration type.

In some embodiments, the at least two configuration types include a first configuration type and a second configuration type, or include the first configuration type and a plurality of other configuration types. In a case where the UE selects or uses the first configuration type, the transmission parameters of the time domain unit are determined based on a time domain configuration of the first configuration type. In some embodiments, the UE indicates the used configuration type information to the network.

In some embodiments, in a case where different configuration types include the common configuration type and the terminal-specific configuration type, the transmission parameters of the time domain unit are determined based on a time domain configuration of the common configuration type.

In some embodiments, in a case where different configuration types include the common configuration type and the terminal-specific configuration type, the transmission parameters of the time domain unit are determined based on a time domain configuration of the terminal-specific configuration type.

In some embodiments, in a case where different configuration types include the common configuration type and the semi-static configuration type, the transmission parameters of the time domain unit are determined based on a time domain configuration of the common configuration type.

In some embodiments, in a case where different configuration types include the common configuration type and the semi-static configuration type, the transmission parameters of the time domain unit are determined based on a time domain configuration of the semi-static configuration type.

In some embodiments, in a case where different configuration types include the common configuration type and the dynamic configuration type, the transmission parameters of the time domain unit are determined based on a time domain configuration of the common configuration type.

In some embodiments, in a case where different configuration types include the common configuration type and the dynamic configuration type, the transmission parameters of the time domain unit are determined based on a time domain configuration of the dynamic configuration type.

In some embodiments, in a case where different configuration types include the semi-static configuration type and the terminal-specific configuration type, the transmission parameters of the time domain unit are determined based on a time domain configuration of the semi-static configuration type.

In some embodiments, in a case where different configuration types include the semi-static configuration type and the terminal-specific configuration type, the transmission parameters of the time domain unit are determined based on a time domain configuration of the terminal-specific configuration type.

In some embodiments, in a case where different configuration types include the semi-static configuration type and the dynamic configuration type, the transmission parameters of the time domain unit are determined based on a time domain configuration of the semi-static configuration type.

In some embodiments, in a case where different configuration types include the semi-static configuration type and the dynamic configuration type, the transmission parameters of the time domain unit are determined based on a time domain configuration of the dynamic configuration type.

In some embodiments, in a case where different configuration types include the terminal-specific configuration type and the dynamic configuration type, the transmission parameters of the time domain unit are determined based on a time domain configuration of the terminal-specific configuration type.

In some embodiments, in a case where different configuration types include the terminal-specific configuration type and the dynamic configuration type, the transmission parameters of the time domain unit are determined based on a time domain configuration of the dynamic configuration type.

In some embodiments, in a case where different configuration types include the terminal-specific configuration type and the periodic configuration type, the transmission parameters of the time domain unit are determined based on a time domain configuration of the periodic configuration type.

In some embodiments, in a case where different configuration types include the terminal-specific configuration type and the periodic configuration type, the transmission parameters of the time domain unit are determined based on a time domain configuration of the terminal-specific configuration type.

In some embodiments, in a case where different configuration types include the periodic configuration type and the common configuration type, the transmission parameters of the time domain unit are determined based on a time domain configuration of the periodic configuration type.

In some embodiments, in a case where different configuration types include the periodic configuration type and the common configuration type, the transmission parameters of the time domain unit are determined based on a time domain configuration of the common configuration type.

In some embodiments, in a case where different configuration types include the periodic configuration type and the semi-static configuration type, the transmission parameters of the time domain unit are determined based on a time domain configuration of the periodic configuration type.

In some embodiments, in a case where different configuration types include the periodic configuration type and the semi-static configuration type, the transmission parameters of the time domain unit are determined based on a time domain configuration of the semi-static configuration type.

In some embodiments, in a case where different configuration types include the periodic configuration type and the dynamic configuration type, the transmission parameters of the time domain unit are determined based on a time domain configuration of the periodic configuration type.

In some embodiments, in a case where different configuration types include the periodic configuration type and the dynamic configuration type, the transmission parameters of the time domain unit are determined based on the time domain configuration of the dynamic configuration type.

In some embodiments, the current state of the terminal further needs to be considered. The state includes one of an idle state, an inactive state, or a connected state.

In some embodiments, in a case where the terminal is in an idle state or an inactive state, the first configuration type is the common configuration type, and the transmission parameters of the time domain unit are determined based on a time domain configuration of the common configuration type.

In some embodiments, in a case where the terminal is in an idle state or an inactive state, the first configuration type is the periodic configuration type, and the transmission parameters of the time domain unit are determined based on a time domain configuration of the periodic configuration type.

In some embodiments, in a case where the terminal is in an idle state or an inactive state, the first configuration type is the semi-static configuration type, and the transmission parameters of the time domain unit are determined based on a time domain configuration of the semi-static configuration type.

In some embodiments, in a case where the terminal is in an idle state or an inactive state, the first configuration type is the terminal-specific configuration type, and the transmission parameters of the time domain unit are determined based on a time domain configuration of the terminal-specific configuration type.

In some embodiments, in a case where the terminal is in an idle state or an inactive state, the first configuration type is the dynamic configuration type, and the transmission parameters of the time domain unit are determined based on a time domain configuration of the dynamic configuration type.

In some embodiments, in a case where the terminal is in a connected state, the first configuration type is the periodic configuration type, and the transmission parameters of the time domain unit are determined based on a time domain configuration of the periodic configuration type.

In some embodiments, in a case where the terminal is in a connected state, the first configuration type is the semi-static configuration type, and the transmission parameters of the time domain unit are determined based on a time domain configuration of the semi-static configuration type.

In some embodiments, in a case where the terminal is in a connected state, the first configuration type is the dynamic configuration type, and the transmission parameters of the time domain unit are determined based on a time domain configuration of the dynamic configuration type.

In some embodiments, in a case where the terminal is in a connected state, the first configuration type is the terminal-specific configuration type, and the transmission parameters of the time domain unit is determined based on a time domain configuration of the terminal-specific configuration type.

In some embodiments, in a case where the terminal is in a connected state, the first configuration type is the common configuration type, and the transmission parameters of the time domain unit are determined based on a time domain configuration of the common configuration type.

In some embodiments, the at least two configuration types include three or more configuration types. In this case, the highest-priority configuration type is selected based on the priority order, or one configuration type is determined as the first configuration type based on the priority information/indication of which configuration type. The priority order, or, the priority information/indication of which configuration type, is configured by the network device, or predefined in a communication protocol, or autonomously implemented by the terminal device.

In summary, in the embodiments of the present disclosure, in a case where the at least two types of configurations include time domain configurations of the same configuration type, it is directly determined that the configuration type of the time domain unit is the first configuration type, such that the consistency between the terminal device and the network device is ensured, thereby avoiding a conflict during the transmission of the time domain unit.

In some embodiments, as illustrated in FIG. 14, the process 127 further includes the following processes.

**In process 1272,** an intermediate transmission parameter of the time domain unit is determined based on a time domain configuration of a lower-priority configuration type in different configuration types.

**In process 1273,** the transmission parameters of the time domain unit are determined by modifying or changing the intermediate transmission parameter of the time domain unit based on a time domain configuration of a higher-priority configuration type in different configuration types.

In some embodiments, different configuration types include a first configuration type and a second configuration type or include the first configuration type and a plurality of other configuration types, wherein the priority of a time domain configuration of the first configuration type is higher than the priority of a time domain configuration of the second configuration type, or the priority of the first configuration type is higher than the priorities of the other configuration types. In this case, the intermediate transmission parameter of the time domain unit is determined based on the time domain configuration of the second configuration type. The transmission parameters of the time domain unit are determined by modifying or changing all or part of the intermediate transmission parameter of the time domain unit based on the time domain configuration of the first configuration type.

In some embodiments, different configuration types include a first configuration type and a second configuration type or include the first configuration type and a plurality of other configuration types. In a case where the first configuration type is predetermined to be used, the intermediate transmission parameter of the time domain unit is determined based on a time domain configuration of the first configuration type. The transmission parameters of the time domain unit are determined by modifying or changing all or part of the intermediate transmission parameter of the time domain unit based on the time domain configuration of the second configuration type.

In some embodiments, in a case where different configuration types include a first configuration type and a second configuration type or include the first configuration type and a plurality of other configuration types. In a case where the first configuration type is indicated to be used, the intermediate transmission parameter of the time domain unit is determined based on a time domain configuration of the first configuration type. The transmission parameters of the time domain unit are determined by modifying or changing all or part of the intermediate transmission parameter of the time domain unit based on the time domain configuration of the first configuration type.

In some embodiments, different configuration types include a first configuration type and a second configuration type or include the first configuration type and a plurality of other configuration types. In a case where the UE selects or uses the first configuration type, the intermediate transmission parameter of the time domain unit is determined based on a time domain configuration of the first configuration type. The transmission parameters of the time domain unit are determined by modifying or changing all or part of the intermediate transmission parameter of the time domain unit based on the time domain configuration of the first configuration type. In some embodiments, the UE indicates the used configuration type information to the network.

In some embodiments, in a case where different configuration types include the periodic configuration type and the semi-static configuration type, the intermediate transmission parameter of the time domain unit is determined based on a time domain configuration of the periodic configuration type. The transmission parameters of the time domain unit are determined by modifying or changing all or part of the intermediate transmission parameter of the time domain unit based on the time domain configuration of the semi-static configuration type.

In some embodiments, in a case where different configuration types include the periodic configuration type and the semi-static configuration type, the intermediate transmission parameter of the time domain unit is determined based on a time domain configuration of the semi-static configuration type. The transmission parameters of the time domain unit are determined by modifying or changing all or part of the intermediate transmission parameter of the time domain unit based on the time domain configuration of the periodic configuration type.

In some embodiments, in a case where different configuration types include the periodic configuration type and the dynamic configuration type, the intermediate transmission parameter of the time domain unit is determined based on a time domain configuration of the periodic configuration type. The transmission parameters of the time domain unit are determined by modifying or changing all or part of the intermediate transmission parameter of the time domain unit based on the time domain configuration of the dynamic configuration type.

In some embodiments, in a case where different configuration types include the periodic configuration type and the dynamic configuration type, the intermediate transmission parameter of the time domain unit is determined based on the time domain configuration of the dynamic configuration type. The transmission parameters of the time domain unit are determined by modifying or changing all or part of the intermediate transmission parameter of the time domain unit based on the time domain configuration of the periodic configuration type.

In some embodiments, in a case where different configuration types include the periodic configuration type and the common configuration type, the intermediate transmission parameter of the time domain unit is determined based on a time domain configuration of the periodic configuration type. The transmission parameters of the time domain unit are determined by modifying or changing all or part of the intermediate transmission parameter of the time domain unit based on the time domain configuration of the common configuration type.

In some embodiments, in a case where different configuration types include the periodic configuration type and the common configuration type, the intermediate transmission parameter of the time domain unit is determined based on a time domain configuration of the common configuration type. The transmission parameters of the time domain unit are determined by modifying or changing all or part of the intermediate transmission parameter of the time domain unit based on the time domain configuration of the periodic configuration type.

In some embodiments, in a case where different configuration types include the periodic configuration type and the terminal-specific configuration type, the intermediate transmission parameter of the time domain unit is determined based on a time domain configuration of the periodic configuration type. The transmission parameters of the time domain unit are determined by modifying or changing all or part of the intermediate transmission parameter of the time domain unit based on the time domain configuration of the terminal-specific configuration type.

In some embodiments, in a case where different configuration types include the periodic configuration type and the terminal-specific configuration type, the intermediate transmission parameter of the time domain unit is determined based on a time domain configuration of the terminal-specific configuration type. The transmission parameters of the time domain unit are determined by modifying or changing all or part of the intermediate transmission parameter of the time domain unit based on the time domain configuration of the periodic configuration type.

In some embodiments, in a case where different configuration types include the semi-static configuration type and the dynamic configuration type, the intermediate transmission parameter of the time domain unit is determined based on a time domain configuration of the semi-static configuration type. The transmission parameters of the time domain unit are determined by modifying or changing all or part of the intermediate transmission parameter of the time domain unit based on the time domain configuration of the dynamic configuration type.

In some embodiments, in a case where different configuration types include the semi-static configuration type and the dynamic configuration type, the intermediate transmission parameter of the time domain unit is determined based on a time domain configuration of the dynamic configuration type. The transmission parameters of the time domain unit are determined by modifying or changing all or part of the intermediate transmission parameter of the time domain unit based on the time domain configuration of the semi-static configuration type.

In some embodiments, in a case where different configuration types include the semi-static configuration type and the common configuration type, the intermediate transmission parameter of the time domain unit is determined based on a time domain configuration of the semi-static configuration type. The transmission parameters of the time domain unit are determined by modifying or changing all or part of the intermediate transmission parameter of the time domain unit based on the time domain configuration of the common configuration type.

In some embodiments, in a case where different configuration types include the semi-static configuration type and the common configuration type, the intermediate transmission parameter of the time domain unit is determined based on a time domain configuration of the common configuration type. The transmission parameters of the time domain unit are determined by modifying or changing all or part of the intermediate transmission parameter of the time domain unit based on the time domain configuration of the semi-static configuration type.

In some embodiments, in a case where different configuration types include the semi-static configuration type and the terminal-specific configuration type, the intermediate transmission parameter of the time domain unit is determined based on a time domain configuration of the semi-static configuration type. The transmission parameters of the time domain unit are determined by modifying or changing all or part of the intermediate transmission parameter of the time domain unit based on the time domain configuration of the terminal-specific configuration type.

In some embodiments, in a case where different configuration types include the semi-static configuration type and the terminal-specific configuration type, the intermediate transmission parameter of the time domain unit is determined based on a time domain configuration of the terminal-specific configuration type. The transmission parameters of the time domain unit are determined by modifying or changing all or part of the intermediate transmission parameter of the time domain unit based on the time domain configuration of the semi-static configuration type.

In some embodiments, in a case where different configuration types include the dynamic configuration type and the common configuration type, the intermediate transmission parameter of the time domain unit is determined based on a time domain configuration of the dynamic configuration type. The transmission parameters of the time domain unit are determined by modifying or changing all or part of the intermediate transmission parameter of the time domain unit based on the time domain configuration of the common configuration type.

In some embodiments, in a case where different configuration types include the dynamic configuration type and the common configuration type, the intermediate transmission parameter of the time domain unit is determined based on a time domain configuration of the common configuration type. The transmission parameters of the time domain unit are determined by modifying or changing all or part of the intermediate transmission parameter of the time domain unit based on the time domain configuration of the dynamic configuration type.

In some embodiments, in a case where different configuration types include the dynamic configuration type and the terminal-specific configuration type, the intermediate transmission parameter of the time domain unit is determined based on a time domain configuration of the dynamic configuration type. The transmission parameters of the time domain unit are determined by modifying or changing all or part of the intermediate transmission parameter of the time domain unit based on the time domain configuration of the terminal-specific configuration type.

In some embodiments, in a case where different configuration types include the dynamic configuration type and the terminal-specific configuration type, the intermediate transmission parameter of the time domain unit is determined based on a time domain configuration of the terminal-specific configuration type. The transmission parameters of the time domain unit are determined by modifying or changing all or part of the intermediate transmission parameter of the time domain unit based on the time domain configuration of the dynamic configuration type.

In some embodiments, in a case where different configuration types include the common configuration type and the terminal-specific configuration type, the intermediate transmission parameter of the time domain unit is determined based on a time domain configuration of the common configuration type. The transmission parameters of the time domain unit are determined by modifying or changing all or part of the intermediate transmission parameter of the time domain unit based on the time domain configuration of the terminal-specific configuration type.

In some embodiments, in a case where different configuration types include the common configuration type and the terminal-specific configuration type, the intermediate transmission parameter of the time domain unit is determined based on a time domain configuration of the terminal-specific configuration type. The transmission parameters of the time domain unit are determined by modifying or changing all or part of the intermediate transmission parameter of the time domain unit based on the time domain configuration of the common configuration type.

In some embodiments, different configuration types include three or more configuration types. In this case, the lowest-priority configuration type is selected based on the priority order, and the first intermediate transmission parameter of the time domain unit is determined based on a time domain configuration of the lowest-priority configuration type; the second intermediate transmission parameter of the time domain unit is determined by modifying or changing the first intermediate transmission parameter of the time domain unit based on a secondary-priority configuration type; and the transmission parameters of the time domain unit are determined by modifying or changing the second intermediate transmission parameter of the time domain unit based on the highest-priority configuration type. The priority order is configured by the network device, or predefined in a communication protocol, or autonomously implemented by the terminal device.

In summary, in the embodiments of the present disclosure, the intermediate transmission parameter of the time domain unit is determined based on a time domain configuration of a lower-priority configuration type in the different configuration types, and then the transmission parameters of the time domain unit are determined by modifying or changing all or part of the intermediate transmission parameter based on a time domain configuration of a higher-priority configuration type in the different configuration types, such that the consistency between the terminal device and the network device is ensured, thereby avoiding a conflict during the transmission of the time domain unit.

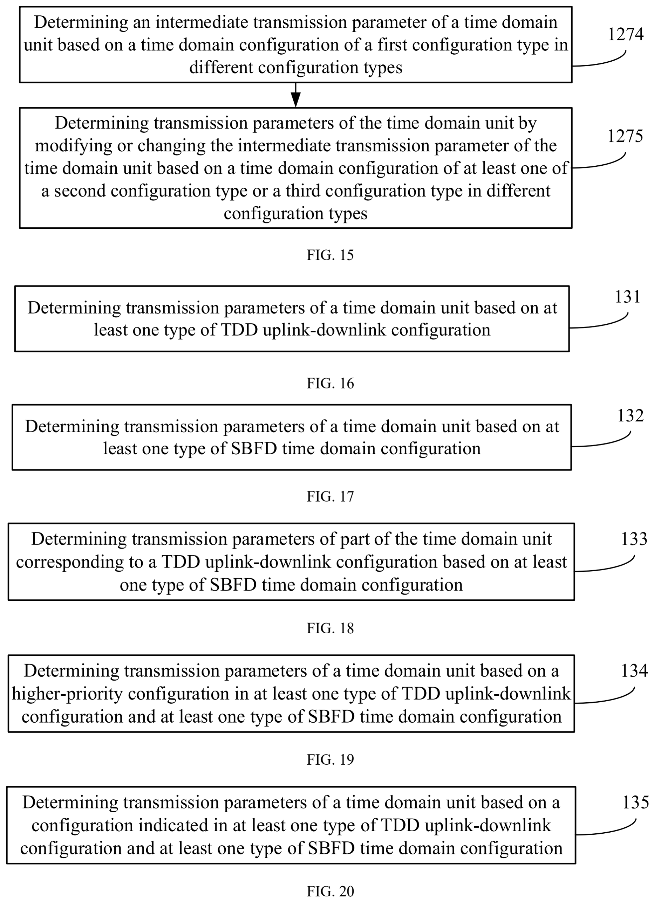

In some embodiments, as illustrated in FIG. 15, the process 127 further includes the following processes.

**In process 1274,** an intermediate transmission parameter of the time domain unit is determined based on the time domain configuration of the first configuration type in different configuration types.

**In process 1275,** the transmission parameters of the time domain unit are determined by modifying or changing the intermediate transmission parameter of the time domain unit based on a time domain configuration of a second configuration type and/or a third configuration type in different configuration types.

With respect to the process 1274:
The first configuration type is one of the at least two configuration types. The configuration type includes at least one of a common configuration type, a terminal-specific configuration type, a periodic configuration type, a semi-static configuration type, or a dynamic configuration type. The different configuration types include a combination of at least two of the above types.

In some embodiments, the first configuration type is configured by the network device, or determined based on the priority, or autonomously implemented by the terminal device.

In some embodiments, the priorities of different configuration types are configured by the network device, or autonomously implemented by the terminal device.

In some embodiments, in a case where different configuration types include the common configuration type and the terminal-specific configuration type, the intermediate transmission parameter of the time domain unit is determined based on a time domain configuration of the common configuration type; or the intermediate transmission parameter of the time domain unit is determined based on a time domain configuration of the terminal-specific configuration type.

In some embodiments, in a case where different configuration types include the common configuration type and the semi-static configuration type, the intermediate transmission parameter of the time domain unit is determined based on a time domain configuration of the common configuration type; or the intermediate transmission parameter of the time domain unit is determined based on a time domain configuration of the semi-static configuration type.

In some embodiments, in a case where different configuration types include the common configuration type and the dynamic configuration type, the intermediate transmission parameter of the time domain unit is determined based on the time domain configuration of the common configuration type; or the intermediate transmission parameter of the time domain unit is determined based on a time domain configuration of the dynamic configuration type.

In some embodiments, in a case where different configuration types include the semi-static configuration type and the terminal-specific configuration type, the intermediate transmission parameter of the time domain unit is determined based on a time domain configuration of the semi-static configuration type; or the intermediate transmission parameter of the time domain unit is determined based on a time domain configuration of the terminal-specific configuration type.

In some embodiments, in a case where different configuration types include the semi-static configuration type and the dynamic configuration type, the intermediate transmission parameter for the time domain unit is determined based on a time domain configuration of the semi-static configuration type; or the intermediate transmission parameter of the time domain unit is determined based on a time domain configuration of the dynamic configuration type.

In some embodiments, in a case where different configuration types include the terminal-specific configuration type and the dynamic configuration type, the intermediate transmission parameter of the time domain unit is determined based on the time domain configuration of the terminal-specific configuration type; or the intermediate transmission parameter of the time domain unit is determined based on the time domain configuration of the dynamic configuration type.

In some embodiments, in a case where different configuration types include the terminal-specific configuration type and the periodic configuration type, the intermediate transmission parameter of the time domain unit is determined based on a time domain configuration of the terminal-specific configuration type; or the intermediate transmission parameter of the time domain unit is determined based on a time domain configuration of the periodic configuration type.

In some embodiments, in a case where different configuration types include the periodic configuration type and the common configuration type, the intermediate transmission parameter of the time domain unit is determined based on a time domain configuration of the common configuration type; or the intermediate transmission parameter of the time domain unit is determined based on a time domain configuration of the periodic configuration type.

In some embodiments, in a case where different configuration types include the periodic configuration type and the semi-static configuration type, the intermediate transmission parameter of the time domain unit is determined based on a time domain configuration of the periodic configuration type; or the intermediate transmission parameter of the time domain unit is determined based on a time domain configuration of the semi-static configuration type.

In some embodiments, in a case where different configuration types include the periodic configuration type and the dynamic configuration type, the intermediate transmission parameter of the time domain unit is determined based on the time domain configuration of the periodic configuration type; or the intermediate transmission parameter of the time domain unit is determined based on a time domain configuration of the dynamic configuration type.

In some embodiments, in a case where different configuration types include three or more configuration types, the highest-priority configuration type is selected as the first configuration type based on the priority order. The priority order is configured by the network device, or predefined in a communication protocol, or autonomously implemented by the terminal device.

In some embodiments, the current state of the terminal further needs to be considered. The state includes one of an idle state, an inactive state, or a connected state.

In some embodiments, in a case where the terminal is in an idle state or an inactive state, the common configuration type is taken as the first configuration type, or the common configuration type is selected as the first configuration type, and the intermediate transmission parameter of the time domain unit is determined based on a time domain configuration of the common configuration type.

In some embodiments, in a case where the terminal is in an idle state or an inactive state, the periodic configuration type is taken as the first configuration type, or the periodic configuration type is selected as the first configuration type, and the intermediate transmission parameter of the time domain unit is determined based on a time domain configuration of the periodic configuration type.

In some embodiments, in a case where the terminal is in an idle state or an inactive state, the semi-static configuration type is taken as the first configuration type, or the semi-static configuration type is selected as the first configuration type, and the intermediate transmission parameter of the time domain unit is determined based on a time domain configuration of the semi-static configuration type.

In some embodiments, in a case where the terminal is in an idle state or an inactive state, the terminal-specific configuration type is taken as the first configuration type, or the terminal-specific configuration type is selected as the first configuration type, and the intermediate transmission parameter of the time domain unit is determined based on a time domain configuration of the terminal-specific configuration type.

In some embodiments, in a case where the terminal is in an idle state or an inactive state, the dynamic configuration type is taken as the first configuration type, or the dynamic configuration type is selected as the first configuration type, and the intermediate transmission parameter of the time domain unit is determined based on a time domain configuration of the dynamic configuration type.

In some embodiments, in a case where the terminal is in a connected state, the periodic configuration type is taken as the first configuration type, or the periodic configuration type is selected as the first configuration type, and the intermediate transmission parameter of the time domain unit is determined based on a time domain configuration of the periodic configuration type.

In some embodiments, in a case where the terminal is in a connected state, the semi-static configuration type is taken as the first configuration type, or the semi-static configuration type is selected as the first configuration type, and the intermediate transmission parameter of the time domain unit is determined based on the time domain configuration of the semi-static configuration type.

In some embodiments, in a case where the terminal is in a connected state, the dynamic configuration type is taken as the first configuration type, or the dynamic configuration type is selected as the first configuration type, and the intermediate transmission parameter of the time domain unit is determined based on a time domain configuration of the dynamic configuration type.

In some embodiments, in a case where the terminal is in a connected state, the terminal-specific configuration type is taken as the first configuration type, or the terminal-specific configuration type is selected as the first configuration type, and the intermediate transmission parameter of the time domain unit is determined based on a time domain configuration of the terminal-specific configuration type.

In some embodiments, in a case where the terminal is in a connected state, the common configuration type is taken as the first configuration type, or the common configuration type is selected as the first configuration type, and the intermediate transmission parameter of the time domain unit is determined based on a time domain configuration of the common configuration type.

With respect to the process 1275:
In some embodiments, in a case where the different configuration types include a second configuration type and a third configuration type, the transmission parameters of the time domain unit are determined by modifying or changing all or part of the intermediate transmission parameters of the time domain unit based on a time domain configuration of the second configuration type and/or the third configuration type.

In some embodiments, the transmission parameters of the time domain unit are determined by first modifying or changing all or part of the intermediate transmission parameter of the time domain unit based on the time domain configuration of the second configuration type, and then further modifying or changing all or part of the intermediate transmission parameter of the time domain unit based on the time domain configuration of the third configuration type. Alternatively, the transmission parameters of the time domain unit are determined by first modifying or changing all or part of the intermediate transmission parameter of the time domain unit based on the time domain configuration of the third configuration type, and then further modifying or changing all or part of the intermediate transmission parameter of the time domain unit based on the time domain configuration of the second configuration type. In some embodiments, this implementation is applicable to a case where the second configuration type is not in conflict with the third configuration type.

In some embodiments, the transmission parameters of the time domain unit are determined by modifying or changing all or part of the intermediate transmission parameter of the time domain unit based on the time domain configuration of the second configuration type, and modifying, changing, or determining a variable part or an undefined part in the time domain configuration of the second configuration type based on the time domain configuration of the third configuration type. Alternatively, the transmission parameters of the time domain unit are determined by modifying or changing all or part of the intermediate transmission parameter of the time domain unit based on the time domain configuration of the third configuration type, and modifying, changing, or determining a variable part or an undefined part in the time domain configuration of the third configuration type based on the time domain configuration of the second configuration type. In some embodiments, this implementation is applicable to a case where the second configuration type is in conflict with the third configuration type.

In some embodiments, the transmission parameters of the time domain unit are determined by modifying or changing all or part of the intermediate transmission parameter of the time domain unit based on the time domain configuration of the second configuration type, and modifying, changing, or determining a determined part or a defined part in the time domain configuration of the second configuration type based on the time domain configuration of the third configuration type, or leaving them unchanged. Alternatively, the transmission parameters of the time domain unit are determined by modifying or changing all or part of the intermediate transmission parameter of the time domain unit based on the time domain configuration of the third configuration type, and modifying, changing, or determining a determined part or a defined part in the time domain configuration of the third configuration type based on the time domain configuration of the second configuration type, or leaving them unchanged. In some embodiments, this implementation is applicable to a case where the second configuration type is in conflict with the third configuration type.

In some embodiments, the transmission parameters of the time domain unit are determined by modifying or changing all or part of the intermediate transmission parameter of the time domain unit based on the time domain configuration of the second configuration type, and modifying, changing, or determining a variable part or an undefined part in the time domain configuration of the second configuration type based on the time domain configuration of the third configuration type, or modifying, changing, or determining a determined part or a defined part in the time domain configuration of the second configuration type based on the time domain configuration of the third configuration type, or leaving them unchanged. Alternatively, the transmission parameters of the time domain unit are determined by modifying or changing all or part of the intermediate transmission parameter of the time domain unit based on the time domain configuration of the third configuration type, and modifying, changing, or determining a variable part or an undefined part in the time domain configuration of the third configuration type based on the time domain configuration of the second configuration type, or modifying, changing, or determining a determined part or a defined part in the time domain configuration of the third configuration type based on the time domain configuration of the second configuration type, or leaving them unchanged. In some embodiments, this implementation is applicable to a case where the second configuration type is in conflict with the third configuration type.

It should be noted that the variable part or the undefined part of the time domain configuration may be understood as a non-conflicting part between the second configuration type and the third configuration type, while the determined part or the defined part of the time domain configuration may be understood as a conflicting part between the second configuration type and the third configuration type.

In some embodiments, in a case where the different configuration types have priorities, the time domain configuration of a low-priority configuration type is taken as the basic configuration, and the time domain configurations of at least two high-priority configuration types are used to modify, change, or determine the time domain configuration of the low-priority configuration type.

In some embodiments, in a case where the different configuration types include the common configuration type and the terminal-specific configuration type, the transmission parameters of the time domain unit are determined by modifying or changing all or part of the intermediate transmission parameter of the time domain unit based on a time domain configuration of the terminal-specific configuration type and/or a time domain configuration of the common configuration type. In some embodiments, a variable part or an undefined part of the time domain configuration of the common configuration type is modified, changed, or determined based on the time domain configuration of the terminal-specific configuration type. In some embodiments, a determined part or a defined part of the time domain configuration of the common configuration type is modified, changed, or determined based on the time domain configuration of the terminal-specific configuration type, or the determined part or the defined part of the time domain configuration of the common configuration type cannot be changed. In some embodiments, a variable part or an undefined part of the time domain configuration of the terminal-specific configuration type is modified, changed, or determined based on the time domain configuration of the common configuration type. In some embodiments, a determined part or a defined part of the time domain configuration of the terminal-specific configuration type is modified, changed, or determined based on the time domain configuration of the common configuration type, or the determined part or the defined part of the time domain configuration of the terminal-specific configuration type cannot be changed.

In some embodiments, in a case where the different configuration types include the common configuration type and the semi-static configuration type, the transmission parameters of the time domain unit are determined by modifying or changing all or part of the intermediate transmission parameter of the time domain unit based on the time domain configuration of the semi-static configuration type and/or the time domain configuration of the common configuration type. In some embodiments, a variable part or an undefined part of the time domain configuration of the common configuration type is modified, changed, or determined based on the time domain configuration of the semi-static configuration type. In some embodiments, a determined part or a defined part of the time domain configuration of the common configuration type is modified, changed, or determined based on the time domain configuration of the semi-static configuration type, or the determined part or the defined part of the time domain configuration of the common configuration type cannot be changed. In some embodiments, a variable part or an undefined part of the time domain configuration of the semi-static configuration type is modified, changed, or determined based on the time domain configuration of the common configuration type. In some embodiments, a determined part or a defined part of the time domain configuration of the semi-static configuration type is modified, changed, or determined based on the time domain configuration of the common configuration type, or the determined part or the defined part of the time domain configuration of the semi-static configuration type cannot be changed.

In some embodiments, in a case where the different configuration types include the common configuration type and the dynamic configuration type, the transmission parameters of the time domain unit are determined by modifying or changing all or part of the intermediate transmission parameter of the time domain unit based on the time domain configuration of the dynamic configuration type and/or the time domain configuration of the common configuration type. In some embodiments, a variable part or an undefined part of the time domain configuration of the semi-static configuration type is modified, changed, or determined based on the time domain configuration of the common configuration type. In some embodiments, a determined part or a defined part of the time domain configuration of the semi-static configuration type is modified, changed, or determined based on the time domain configuration of the common configuration type, or the determined part or the defined part of the time domain configuration of the semi-static configuration type cannot be changed. In some embodiments, a variable part or an undefined part of the time domain configuration of the dynamic configuration type is modified, changed, or determined based on the time domain configuration of the common configuration type. In some embodiments, a determined part or a defined part of the time domain configuration of the dynamic configuration type is modified, changed, or determined based on the time domain configuration of the common configuration type, or the determined part or the defined part of the time domain configuration of the dynamic configuration type cannot be changed.

In some embodiments, in a case where the different configuration types include the semi-static configuration type and the terminal-specific configuration type, the transmission parameters of the time domain unit are determined by modifying or changing all or part of the intermediate transmission parameter of the time domain unit based on the time domain configuration of the terminal-specific configuration type and/or the time domain configuration of the semi-static configuration type. In some embodiments, a variable part or an undefined part of the time domain configuration of the semi-static configuration type is modified, changed, or determined based on the time domain configuration of the terminal-specific configuration type. In some embodiments, a determined part or a defined part of the time domain configuration of the semi-static configuration type is modified, changed, or determined based on the time domain configuration of the terminal-specific configuration type, or the determined part or the defined part of the time domain configuration of the semi-static configuration type cannot be changed. In some embodiments, a variable part or an undefined part of the time domain configuration of the terminal-specific configuration type is modified, changed, or determined based on the time domain configuration of the semi-static configuration type. In some embodiments, a determined part or a defined part of the time domain configuration of the terminal-specific configuration type is modified, changed, or determined based on the time domain configuration of the semi-static configuration type, or the determined part or the defined part of the time domain configuration of the terminal-specific configuration type cannot be changed.

In some embodiments, in a case where the different configuration types include the semi-static configuration type and the dynamic configuration type, the transmission parameters of the time domain unit are determined by modifying or changing all or part of the intermediate transmission parameter of the time domain unit based on the time domain configuration of the dynamic configuration type and/or the time domain configuration of the semi-static configuration type. In some embodiments, a variable part or an undefined part of the time domain configuration of the semi-static configuration type is modified, changed, or determined based on the time domain configuration of the dynamic configuration type. In some embodiments, a determined part or a defined part of the time domain configuration of the semi-static configuration type is modified, changed, or determined based on the time domain configuration of the dynamic configuration type, or the determined part or the defined part of the time domain configuration of the semi-static configuration type cannot be changed. In some embodiments, a variable part or an undefined part of the time domain configuration of the dynamic configuration type is modified, changed, or determined based on the time domain configuration of the semi-static configuration type. In some embodiments, a determined part or a defined part of the time domain configuration of the dynamic configuration type is modified, changed, or determined based on the time domain configuration of the semi-static configuration type, or the determined part or the defined part of the time domain configuration of the dynamic configuration type cannot be changed.

In some embodiments, in a case where the different configuration types include the terminal-specific configuration type and the dynamic configuration type, the transmission parameters of the time domain unit are determined by modifying or changing all or part of the intermediate transmission parameter of the time domain unit based on the time domain configuration of the dynamic configuration type and/or the time domain configuration of the terminal-specific configuration type. In some embodiments, a variable part or an undefined part of the time domain configuration of the terminal-specific configuration type is modified, changed, or determined based on the time domain configuration of the dynamic configuration type. In some embodiments, a determined part or a defined part of the time domain configuration of the terminal-specific configuration type is modified, changed, or determined based on the time domain configuration of the dynamic configuration type, or the determined part or the defined part of the time domain configuration of the terminal-specific configuration type cannot be changed. In some embodiments, a variable part or an undefined part of the time domain configuration of the dynamic configuration type is modified, changed, or determined based on the time domain configuration of the terminal-specific configuration type. In some embodiments, a determined part or a defined part of the time domain configuration of the dynamic configuration type is modified, changed, or determined based on the time domain configuration of the terminal-specific configuration type, or the determined part or the defined part of the time domain configuration of the dynamic configuration type cannot be changed.

In some embodiments, in a case where the different configuration types include the terminal-specific configuration type and the periodic configuration type, the transmission parameters of the time domain unit are determined by modifying or changing all or part of the intermediate transmission parameter of the time domain unit based on the time domain configuration of the terminal-specific configuration type and/or the time domain configuration of the periodic configuration type. In some embodiments, a variable part or an undefined part of the time domain configuration of the periodic configuration type is modified, changed, or determined based on the time domain configuration of the terminal-specific configuration type. In some embodiments, a determined part or a defined part of the time domain configuration of the periodic configuration type is modified, changed, or determined based on the time domain configuration of the terminal-specific configuration type, or the determined part or the defined part of the time domain configuration of the periodic configuration type cannot be changed. In some embodiments, a variable part or an undefined part of the time domain configuration of the terminal-specific configuration type is modified, changed, or determined based on the time domain configuration of the periodic configuration type. In some embodiments, a determined part or a defined part of the time domain configuration of the terminal-specific configuration type is modified, changed, or determined based on the time domain configuration of the periodic configuration type, or the determined part or the defined part of the time domain configuration of the terminal-specific configuration type cannot be changed.

In some embodiments, in a case where the different configuration types include the periodic configuration type and the common configuration type, the transmission parameters of the time domain unit are determined by modifying or changing all or part of the intermediate transmission parameter of the time domain unit based on the time domain configuration of the common configuration type and/or the time domain configuration of the periodic configuration type. In some embodiments, a variable part or an undefined part of the time domain configuration of the periodic configuration type is modified, changed, or determined based on the time domain configuration of the common configuration type. In some embodiments, a determined part or a defined part of the time domain configuration of the periodic configuration type is modified, changed, or determined based on the time domain configuration of the common configuration type, or the determined part or the defined part of the time domain configuration of the periodic configuration type cannot be changed. In some embodiments, a variable part or an undefined part of the time domain configuration of the common configuration type is modified, changed, or determined based on the time domain configuration of the periodic configuration type. In some embodiments, a determined part or a defined part of the time domain configuration of the common configuration type is modified, changed, or determined based on the time domain configuration of the periodic configuration type, or the determined part or the defined part of the time domain configuration of the common configuration type cannot be changed.

In some embodiments, in a case where the different configuration types include the periodic configuration type and the semi-static configuration type, the transmission parameters of the time domain unit are determined by modifying or changing all or part of the intermediate transmission parameter of the time domain unit based on the time domain configuration of the semi-static configuration type and/or the time domain configuration of the periodic configuration type. In some embodiments, a variable part or an undefined part of the time domain configuration of the periodic configuration type is modified, changed, or determined based on the time domain configuration of the semi-static configuration type. In some embodiments, a determined part or a defined part of the time domain configuration of the periodic configuration type is modified, changed, or determined based on the time domain configuration of the semi-static configuration type, or the determined part or the defined part of the time domain configuration of the periodic configuration type cannot be changed. In some embodiments, a variable part or an undefined part of the time domain configuration of the semi-static configuration type is modified, changed, or determined based on the time domain configuration of the periodic configuration type. In some embodiments, a determined part or a defined part of the time domain configuration of the semi-static configuration type is modified, changed, or determined based on the time domain configuration of the periodic configuration type, or the determined part or the defined part of the time domain configuration of the semi-static configuration type cannot be changed.

In some embodiments, in a case where the different configuration types include the periodic configuration type and the dynamic configuration type, the transmission parameters of the time domain unit are determined by modifying or changing all or part of the intermediate transmission parameter of the time domain unit based on the time domain configuration of the dynamic configuration type and/or the time domain configuration of the periodic configuration type. In some embodiments, a variable part or an undefined part of the time domain configuration of the periodic configuration type is modified, changed, or determined based on the time domain configuration of the dynamic configuration type. In some embodiments, a determined part or a defined part of the time domain configuration of the periodic configuration type is modified, changed, or determined based on the time domain configuration of the dynamic configuration type, or the determined part or the defined part of the time domain configuration of the periodic configuration type cannot be changed. In some embodiments, a variable part or an undefined part of the time domain configuration of the dynamic configuration type is modified, changed, or determined based on the time domain configuration of the periodic configuration type. In some embodiments, a determined part or a defined part of the time domain configuration of the dynamic configuration type is modified, changed, or determined based on the time domain configuration of the periodic configuration type, or the determined part or the defined part of the time domain configuration of the dynamic configuration type cannot be changed.

In summary, in the embodiments of the present disclosure, the transmission parameters of the time domain unit are determined by first determining the intermediate transmission parameter of the time domain unit based on the time domain configuration of the first configuration type in different configuration types, and then modifying or changing the intermediate transmission parameter of the time domain unit based on the time domain configuration of the second configuration type and/or the time domain configuration of the third configuration type in different configuration types, such that the consistency between the terminal device and the network device is ensured, thereby avoiding a conflict during the transmission of the time domain unit.

In some embodiments, the at least two types of configurations include at least one type of TDD uplink-downlink configuration and at least one type of SBFD time domain configuration. One configuration is selected therefrom to determine the transmission parameters of the time domain unit.

As illustrated in FIG. 16, the process 120 includes a process 131.

**In process 131,** the transmission parameters of the time domain unit are determined based on at least one type of TDD uplink-downlink configuration.

In some embodiments, in a case where one type of TDD uplink-downlink configuration is configured for the terminal device, the transmission parameters of the time domain unit are determined based on the TDD uplink-downlink configuration. The TDD uplink-downlink configuration is one type of the periodic TDD uplink-downlink configuration, the dynamic TDD uplink-downlink configuration, the semi-static TDD uplink-downlink configuration, the common TDD uplink-downlink configuration, or the terminal-specific TDD uplink-downlink configuration.

It should be noted that in the embodiments of the present disclosure, the periodic TDD time domain configuration has the same meaning as the TDD time domain configuration of the periodic configuration type. The dynamic TDD time domain configuration has the same meaning as the TDD time domain configuration of the dynamic configuration type. The semi-static TDD time domain configuration has the same meaning as the TDD time domain configuration of the semi-static configuration type. The common TDD time domain configuration has the same meaning as the TDD time domain configuration of the common configuration type. The terminal-specific TDD time domain configuration has the same meaning as the TDD time domain configuration of the terminal-specific configuration type.

In some embodiments, in a case where at least one type of TDD uplink-downlink configuration is the common TDD uplink-downlink configuration, the transmission parameters of the time domain unit are determined based on the common TDD uplink-downlink configuration.

In some embodiments, in a case where at least one type of TDD uplink-downlink configuration is the terminal-specific TDD uplink-downlink configuration, the transmission parameters of the time domain unit are determined based on the terminal-specific TDD uplink-downlink configuration.

In some embodiments, in a case where at least one type of TDD uplink-downlink configuration is the semi-static TDD uplink-downlink configuration, the transmission parameters of the time domain unit are determined based on the semi-static TDD uplink-downlink configuration.

In some embodiments, in a case where at least one type of TDD uplink-downlink configuration is the dynamic TDD uplink-downlink configuration, the transmission parameters of the time domain unit are determined based on the dynamic TDD uplink-downlink configuration.

In some embodiments, in a case where at least one type of TDD uplink-downlink configuration is the periodic TDD uplink-downlink configuration, the transmission parameters of the time domain unit are determined based on the periodic TDD uplink-downlink configuration.

In some embodiments, in a case where at least two types of TDD uplink-downlink configurations are configured for the same terminal device, a low-priority TDD uplink-downlink configuration is taken as the basic configuration, and the final TDD uplink-downlink configuration is acquired by determining the transmission parameters of the variable time domain unit in the low-priority TDD uplink-downlink configuration based on a high-priority TDD uplink-downlink configuration. The transmission parameters of the time domain unit are determined based on the final TDD uplink-downlink configuration. With respect to any two types of TDD uplink-downlink configurations, a low-priority TDD uplink-downlink configuration is one type of a periodic TDD uplink-downlink configuration, a dynamic TDD uplink-downlink configuration, a semi-static TDD uplink-downlink configuration, a common TDD uplink-downlink configuration, or a terminal-specific TDD uplink-downlink configuration; and a high-priority TDD uplink-downlink configuration is another type of the periodic TDD uplink-downlink configuration, the dynamic TDD uplink-downlink configuration, the semi-static TDD uplink-downlink configuration, the common TDD uplink-downlink configuration, or the terminal-specific TDD uplink-downlink configuration. Configuration types of the low-priority TDD uplink-downlink configuration and the high-priority TDD uplink-downlink configuration are different.

In some embodiments, in a case where the at least one type of TDD uplink-downlink configuration includes at least two types of TDD uplink-downlink configurations, one of the at least two types of TDD uplink-downlink configurations is determined as the first TDD uplink-downlink configuration; or one of the at least two types of TDD uplink-downlink configurations is selected and determined as the first TDD uplink-downlink configuration, and the transmission parameters of the time domain unit are determined based on the first TDD uplink-downlink configuration. The first TDD uplink-downlink configuration is predefined in a communication protocol, or configured by the network device, or indicated by the network device, or autonomously implemented by the terminal device (which may be synchronized or reported to the network device).

As illustrated in FIG. 17, the process 120 includes the process 132.

**In process 132,** the transmission parameters of the time domain unit are determined based on at least one type of SBFD time domain configuration.

In some embodiments, in a case where one type of SBFD time domain configuration is configured for the terminal device, the transmission parameters of the time domain unit are determined based on the SBFD time domain configuration. The SBFD time domain configuration is one type of the periodic SBFD time domain configuration, the dynamic SBFD time domain configuration, the semi-static SBFD time domain configuration, the common SBFD time domain configuration, or the terminal-specific SBFD time domain configuration.

It should be noted that in the embodiments of the present disclosure, the periodic SBFD time domain configuration has the same meaning as the SBFD time domain configuration of the periodic configuration type. The dynamic SBFD time domain configuration has the same meaning as the SBFD time domain configuration of the dynamic configuration type. The semi-static SBFD time domain configuration has the same meaning as the SBFD time domain configuration of the semi-static configuration type. The common SBFD time domain configuration has the same meaning as the SBFD time domain configuration of the common configuration type. The terminal-specific SBFD time domain configuration has the same meaning as the SBFD time domain configuration of the terminal-specific configuration type.

In some embodiments, in a case where at least one type of SBFD time domain configuration is the common SBFD time domain configuration, the transmission parameters of the time domain unit are determined based on the common SBFD time domain configuration.

In some embodiments, in a case where at least one type of SBFD time domain configuration is the terminal-specific SBFD time domain configuration, the transmission parameters of the time domain unit are determined based on the terminal-specific SBFD time domain configuration.

In some embodiments, in a case where at least one type of SBFD time domain configuration is the semi-static SBFD time domain configuration, the transmission parameters of the time domain unit are determined based on the semi-static SBFD time domain configuration.

In some embodiments, in a case where at least one type of SBFD time domain configuration is the dynamic SBFD time domain configuration, the transmission parameters of the time domain unit are determined based on the dynamic SBFD time domain configuration.

In some embodiments, in a case where at least one type of SBFD time domain configuration is the periodic SBFD time domain configuration, the transmission parameters of the time domain unit are determined based on the periodic SBFD time domain configuration.

In some embodiments, in a case where at least two types of SBFD time domain configurations are configured for the same terminal device, a low-priority SBFD time domain configuration is taken as a basic configuration, and the final SBFD time domain configuration is acquired by determining transmission parameters of a variable time domain unit in the low-priority SBFD time domain configuration based on a high-priority SBFD time domain configuration. The transmission parameters of the time domain unit are determined based on the final SBFD time domain configuration. With respect to any two types of SBFD time domain configurations, the low-priority SBFD time domain configuration is one type of a periodic SBFD time domain configuration, a dynamic SBFD time domain configuration, a semi-static SBFD time domain configuration, a common SBFD time domain configuration, or a terminal-specific SBFD time domain configuration; and the high-priority SBFD time domain configuration is another type of the periodic SBFD time domain configuration, the dynamic SBFD time domain configuration, the semi-static SBFD time domain configuration, the common SBFD time domain configuration, or the terminal-specific SBFD time domain configuration. The configuration type of the low-priority SBFD time domain configuration is different from the configuration type of the high-priority SBFD time domain configuration.

In some embodiments, in a case where at least one type of SBFD time domain configuration includes at least two types of SBFD time domain configurations, the first SBFD time domain configuration is determined, and the transmission parameters of the time domain unit are determined based on the first SBFD time domain configuration. The first SBFD time domain configuration is predefined in a communication protocol, or configured by the network device, or indicated by the network device, or autonomously implemented by the terminal device (which may be synchronized or reported to the network device).

As illustrated in FIG. 18, the process 120 includes the process 133.

**In process 133,** the transmission parameters of part of the time domain unit corresponding to a TDD uplink-downlink configuration are determined based on at least one type of SBFD time domain configuration.

In some embodiments, in a case where one type of SBFD time domain configuration is configured for the terminal device, the transmission parameters of part of the time domain unit corresponding to the TDD uplink-downlink configuration are determined based on the SBFD time domain configuration.

In some embodiments, in a case where at least one type of SBFD time domain configuration is an SBFD time domain configuration of the common configuration type, the transmission parameters of part of the time domain unit corresponding to the TDD uplink-downlink configuration are determined based on the SBFD time domain configuration of the common configuration type.

In some embodiments, in a case where at least one type of SBFD time domain configuration is an SBFD time domain configuration of the terminal-specific configuration type, the transmission parameters of part of the time domain unit corresponding to the TDD uplink-downlink configuration are determined based on the SBFD time domain configuration of the terminal-specific configuration type.

In some embodiments, in a case where at least one type of SBFD time domain configuration is an SBFD time domain configuration of the semi-static configuration type, the transmission parameters of part of the time domain unit corresponding to the TDD uplink-downlink configuration are determined based on the SBFD time domain configuration of the semi-static configuration type.

In some embodiments, in a case where at least one type of SBFD time domain configuration is an SBFD time domain configuration of the dynamic configuration type, the transmission parameters of part of the time domain unit corresponding to the TDD uplink-downlink configuration are determined based on the SBFD time domain configuration of the dynamic configuration type.

In some embodiments, in a case where at least one type of SBFD time domain configuration is an SBFD time domain configuration of the DCI dynamic change configuration type, the transmission parameters of part of the time domain unit corresponding to the TDD uplink-downlink configuration are determined based on the SBFD time domain configuration of the DCI dynamic change configuration type.

In some embodiments, in a case where at least one type of SBFD time domain configuration is an SBFD time domain configuration of the periodic configuration type, the transmission parameters of part of the time domain unit corresponding to the TDD uplink-downlink configuration are determined based on the SBFD time domain configuration of the periodic configuration type.

In some embodiments, in a case where at least two types of SBFD time domain configurations are configured for the same terminal device, a low-priority SBFD time domain configuration is taken as a basic configuration, and the final SBFD time domain configuration is acquired by determining transmission parameters of a variable time domain unit in the low-priority SBFD time domain configuration based on a high-priority SBFD time domain configuration. With respect to any two types of SBFD time domain configurations, the low-priority SBFD time domain configuration is one type of a periodic SBFD time domain configuration, a dynamic SBFD time domain configuration, a semi-static SBFD time domain configuration, a common SBFD time domain configuration, or a terminal-specific SBFD time domain configuration; and the high-priority SBFD time domain configuration is another type of the periodic SBFD time domain configuration, the dynamic SBFD time domain configuration, the semi-static SBFD time domain configuration, the common SBFD time domain configuration, or the terminal-specific SBFD time domain configuration. The configuration type of the low-priority SBFD time domain configuration is different from the configuration type of the high-priority SBFD time domain configuration.

In some embodiments, in a case where at least one type of SBFD time domain configuration includes at least two types of SBFD time domain configurations, one of the at least two types of SBFD time domain configurations is determined as the first SBFD time domain configuration, or one of the at least two types of SBFD time domain configurations is selected and determined as the first SBFD time domain configuration, and the transmission parameters of part of the time domain unit corresponding to the TDD uplink-downlink configuration are determined by modifying or changing all or part of the time domain unit based on the first SBFD time domain configuration. The first SBFD time domain configuration is predefined in a communication protocol, or configured by the network device, or indicated by the network device, or autonomously implemented by the terminal device (which may be synchronized or reported to the network device).

In some embodiments, the above part of the time domain unit is the variable part or the undefined part. The above part of the time domain unit may be all or part of the determined part.

In some embodiments, the uplink partial time domain unit includes all or part of the time domain units involved in the TDD configuration and/or the SBFD configuration, or includes all the time domain units of the system.

As illustrated in FIG. 19, the process 120 includes the process 134.

**In process 134,** the transmission parameters of the time domain unit are determined based on a higher-priority configuration type in at least one type of TDD uplink-downlink configuration and at least one type of SBFD time domain configuration.

At least one type of TDD uplink-downlink configuration and at least one type of SBFD time domain configuration may be configured for the same terminal device.

In some embodiments, in a case where at least one type of SBFD time domain configuration is a first time domain configuration and at least one type of TDD uplink-downlink configuration is a second time domain configuration, the transmission parameters of the time domain unit are determined based on the priority of the first time domain configuration and the priority of the second time domain configuration. In a case where the priority of the first time domain configuration is higher than that of the second time domain configuration, the transmission parameters of the time domain unit are determined based on the first time domain configuration. In a case where the priority of the second time domain configuration is higher than that of the first time domain configuration, the transmission parameters of the time domain unit are determined based on the second time domain configuration.

In some embodiments, in a case where at least one type of SBFD time domain configuration includes one type of SBFD time domain configuration and at least one type of TDD uplink-downlink configuration includes one type of TDD uplink-downlink configuration, the transmission parameters of the time domain unit are determined by directly selecting a higher-priority time domain configuration type.

In some embodiments, in a case where at least one type of SBFD time domain configuration includes one type of SBFD time domain configuration and at least one type of TDD uplink-downlink configuration includes a plurality of types of TDD uplink-downlink configurations, the transmission parameters of the time domain unit are determined by directly selecting a higher-priority time domain configuration type.

In some embodiments, in a case where at least one type of SBFD time domain configuration includes a plurality of types of SBFD time domain configurations and at least one type of TDD uplink-downlink configuration includes one type of TDD uplink-downlink configuration, the transmission parameters of the time domain unit are determined by directly selecting a higher-priority time domain configuration type.

In some embodiments, in a case where at least one type of SBFD time domain configuration includes a plurality of types of SBFD time domain configurations and at least one type of TDD uplink-downlink configuration includes a plurality of types of TDD uplink-downlink configurations, the transmission parameters of the time domain unit are determined by directly selecting a higher-priority time domain configuration type.

In a case where at least one type of TDD uplink-downlink configuration is present, the transmission parameters of the time domain unit are determined using a higher-priority TDD uplink-downlink configuration type.

In a case where at least one type of SBFD time domain configuration is present, the transmission parameters of the time domain unit are determined using a higher-priority SBFD time domain configuration type.

In a case where at least one type of TDD uplink-downlink configuration is present, the intermediate transmission parameter of the time domain unit is determined using a higher-priority TDD uplink-downlink configuration type. The final transmission parameter of the time domain unit is determined based on one type of SBFD time domain configuration.

In a case where at least one type of SBFD time domain configuration is present, the intermediate transmission parameter of the time domain unit is determined using a higher-priority SBFD time domain configuration type. The final transmission parameter of the time domain unit is determined based on one type of TDD uplink-downlink configuration.

In a case where at least one type of TDD uplink-downlink configuration is present, the intermediate transmission parameter of the time domain unit is determined using a higher-priority TDD uplink-downlink configuration type. The final transmission parameter of the time domain unit is determined based on one of the at least one type of SBFD time domain configuration. In some embodiments, in a case where at least one type of SBFD time domain configuration is present, the final transmission parameter of the time domain unit is determined using a higher-priority SBFD time domain configuration type.

In a case where at least one type of SBFD time domain configuration is present, the intermediate transmission parameter of the time domain unit is determined using a higher-priority SBFD time domain configuration type. The final transmission parameter of the time domain unit is determined based on one of the at least one type of TDD uplink-downlink configuration. In some embodiments, in a case where at least one type of TDD uplink-downlink configuration is present, the final transmission parameter of the time domain unit is determined using a higher-priority TDD uplink-downlink configuration type.

The case where at least one type of SBFD time domain configuration includes one type of SBFD time domain configuration and at least one type of TDD uplink-downlink configuration includes one type of TDD uplink-downlink configuration is taken as an example.

In some embodiments, in a case where at least one type of SBFD time domain configuration is the periodic SBFD time domain configuration and at least one type of TDD uplink-downlink configuration is the periodic TDD uplink-downlink configuration, and the periodic SBFD time domain configuration has the higher priority than the periodic TDD uplink-downlink configuration, the transmission parameters of the time domain unit are determined based on the periodic SBFD time domain configuration.

In some embodiments, in a case where at least one type of SBFD time domain configuration is the periodic SBFD time domain configuration and at least one type of TDD uplink-downlink configuration is the periodic TDD uplink-downlink configuration, and the periodic TDD uplink-downlink configuration has the higher priority than the periodic SBFD time domain configuration, the transmission parameters of the time domain unit are determined based on the periodic TDD uplink-downlink configuration.

In some embodiments, in a case where at least one type of SBFD time domain configuration is the periodic SBFD time domain configuration and at least one type of TDD uplink-downlink configuration is the semi-static TDD uplink-downlink configuration, and the periodic SBFD time domain configuration has the higher priority than the semi-static TDD uplink-downlink configuration, the transmission parameters of the time domain unit are determined based on the periodic SBFD time domain configuration.

In some embodiments, in a case where at least one type of SBFD time domain configuration is the periodic SBFD time domain configuration and at least one type of TDD uplink-downlink configuration is the semi-static TDD uplink-downlink configuration, and the semi-static TDD uplink-downlink configuration has the higher priority than the periodic SBFD time domain configuration, the transmission parameters of the time domain unit are determined based on the semi-static TDD uplink-downlink configuration.

In some embodiments, in a case where at least one type of SBFD time domain configuration is the periodic SBFD time domain configuration and at least one type of TDD uplink-downlink configuration is the dynamic TDD uplink-downlink configuration, and the periodic SBFD time domain configuration has the higher priority than the dynamic TDD uplink-downlink configuration, the transmission parameters of the time domain unit is determined based on the periodic SBFD time domain configuration.

In some embodiments, in a case where at least one type of SBFD time domain configuration is the periodic SBFD time domain configuration and at least one type of TDD uplink-downlink configuration is the dynamic TDD uplink-downlink configuration, and the dynamic TDD uplink-downlink configuration has the higher priority than the periodic SBFD time domain configuration, the transmission parameters of the time domain unit are determined based on the dynamic TDD uplink-downlink configuration.

In some embodiments, in a case where at least one type of SBFD time domain configuration is the periodic SBFD time domain configuration and at least one type of TDD uplink-downlink configuration is the common TDD uplink-downlink configuration, and the periodic SBFD time domain configuration has the higher priority than the common TDD uplink-downlink configuration, the transmission parameters of the time domain unit are determined based on the periodic SBFD time domain configuration.

In some embodiments, in a case where at least one type of SBFD time domain configuration is the periodic SBFD time domain configuration and at least one type of TDD uplink-downlink configuration is the common TDD uplink-downlink configuration, and the common TDD uplink-downlink configuration has the higher priority than the periodic SBFD time domain configuration, the transmission parameters of the time domain unit are determined based on the common TDD uplink-downlink configuration.

In some embodiments, in a case where at least one type of SBFD time domain configuration is the periodic SBFD time domain configuration and at least one type of TDD uplink-downlink configuration is the terminal-specific TDD uplink-downlink configuration, and the periodic SBFD time domain configuration has the higher priority than the terminal-specific TDD uplink-downlink configuration, the transmission parameters of the time domain unit are determined based on the periodic SBFD time domain configuration.

In some embodiments, in a case where at least one type of SBFD time domain configuration is the periodic SBFD time domain configuration and at least one type of TDD uplink-downlink configuration is the terminal-specific TDD uplink-downlink configuration, and the terminal-specific TDD uplink-downlink configuration has the higher priority than the periodic SBFD time domain configuration, the transmission parameters of the time domain unit are determined based on the terminal-specific TDD uplink-downlink configuration.

In some embodiments, in a case where at least one type of SBFD time domain configuration is the semi-static SBFD time domain configuration and at least one type of TDD uplink-downlink configuration is the periodic TDD uplink-downlink configuration, and the semi-static SBFD time domain configuration has the higher priority than the periodic TDD uplink-downlink configuration, the transmission parameters of the time domain unit are determined based on the semi-static SBFD time domain configuration.

In some embodiments, in a case where at least one type of SBFD time domain configuration is the semi-static SBFD time domain configuration and at least one type of TDD uplink-downlink configuration is the periodic TDD uplink-downlink configuration, and the periodic TDD uplink-downlink configuration has the higher priority than the semi-static SBFD time domain configuration, the transmission parameters of the time domain unit are determined based on the periodic TDD uplink-downlink configuration.

In some embodiments, in a case where at least one type of SBFD time domain configuration is the semi-static SBFD time domain configuration and at least one type of TDD uplink-downlink configuration is the semi-static TDD uplink-downlink configuration, and the semi-static SBFD time domain configuration has the higher priority than the semi-static TDD uplink-downlink configuration, the transmission parameters of the time domain unit are determined based on the semi-static SBFD time domain configuration.

In some embodiments, in a case where at least one type of SBFD time domain configuration is the semi-static SBFD time domain configuration and at least one type of TDD uplink-downlink configuration is the semi-static TDD uplink-downlink configuration, and the semi-static TDD uplink-downlink configuration has the higher priority than the semi-static SBFD time domain configuration, the transmission parameters of the time domain unit are determined based on the semi-static TDD uplink-downlink configuration.

In some embodiments, in a case where at least one type of SBFD time domain configuration is the semi-static SBFD time domain configuration and at least one type of TDD uplink-downlink configuration is the dynamic TDD uplink-downlink configuration, and the semi-static SBFD time domain configuration has the higher priority than the dynamic TDD uplink-downlink configuration, the transmission parameters of the time domain unit are determined based on the semi-static SBFD time domain configuration.

In some embodiments, in a case where at least one type of SBFD time domain configuration is the semi-static SBFD time domain configuration and at least one type of TDD uplink-downlink configuration is the dynamic TDD uplink-downlink configuration, and the dynamic TDD uplink-downlink configuration has the higher priority than the semi-static SBFD time domain configuration, the transmission parameters of the time domain unit are determined based on the dynamic TDD uplink-downlink configuration.

In some embodiments, in a case where at least one type of SBFD time domain configuration is the semi-static SBFD time domain configuration and at least one type of TDD uplink-downlink configuration is the common TDD uplink-downlink configuration, and the semi-static SBFD time domain configuration has the higher priority than the common TDD uplink-downlink configuration, the transmission parameters of the time domain unit are determined based on the semi-static SBFD time domain configuration.

In some embodiments, in a case where at least one type of SBFD time domain configuration is the semi-static SBFD time domain configuration and at least one type of TDD uplink-downlink configuration is the common TDD uplink-downlink configuration, and the common TDD uplink-downlink configuration has the higher priority than the semi-static SBFD time domain configuration, the transmission parameters of the time domain unit are determined based on the common TDD uplink-downlink configuration.

In some embodiments, in a case where at least one type of SBFD time domain configuration is the semi-static SBFD time domain configuration and at least one type of TDD uplink-downlink configuration is the terminal-specific TDD uplink-downlink configuration, and the semi-static SBFD time domain configuration has the higher priority than the terminal-specific TDD uplink-downlink configuration, the transmission parameters of the time domain unit are determined based on the semi-static SBFD time domain configuration.

In some embodiments, in a case where at least one type of SBFD time domain configuration is the semi-static SBFD time domain configuration and at least one type of TDD uplink-downlink configuration is the terminal-specific TDD uplink-downlink configuration, and the terminal-specific TDD uplink-downlink configuration has the higher priority than the semi-static SBFD time domain configuration, the transmission parameters of the time domain unit are determined based on the terminal-specific TDD uplink-downlink configuration.

In some embodiments, in a case where at least one type of SBFD time domain configuration is the dynamic SBFD time domain configuration and at least one type of TDD uplink-downlink configuration is the periodic TDD uplink-downlink configuration, and the dynamic SBFD time domain configuration has the higher priority than the periodic TDD uplink-downlink configuration, the transmission parameters of the time domain unit are determined based on the dynamic SBFD time domain configuration.

In some embodiments, in a case where at least one type of SBFD time domain configuration is the dynamic SBFD time domain configuration and at least one type of TDD uplink-downlink configuration is the periodic TDD uplink-downlink configuration, and the periodic TDD uplink-downlink configuration has the higher priority than the dynamic SBFD time domain configuration, the transmission parameters of the time domain unit are determined based on the periodic TDD uplink-downlink configuration.

In some embodiments, in a case where at least one type of SBFD time domain configuration is the dynamic SBFD time domain configuration and at least one type of TDD uplink-downlink configuration is the semi-static TDD uplink-downlink configuration, and the dynamic SBFD time domain configuration has the higher priority than the semi-static TDD uplink-downlink configuration, the transmission parameters of the time domain unit are determined based on the dynamic SBFD time domain configuration.

In some embodiments, in a case where at least one type of SBFD time domain configuration is the dynamic SBFD time domain configuration and at least one type of TDD uplink-downlink configuration is the semi-static TDD uplink-downlink configuration, and the semi-static TDD uplink-downlink configuration has the higher priority than the dynamic SBFD time domain configuration, the transmission parameters of the time domain unit are determined based on the semi-static TDD uplink-downlink configuration.

In some embodiments, in a case where at least one type of SBFD time domain configuration is the dynamic SBFD time domain configuration and at least one type of TDD uplink-downlink configuration is the dynamic TDD uplink-downlink configuration, and the dynamic SBFD time domain configuration has the higher priority than the dynamic TDD uplink-downlink configuration, the transmission parameters of the time domain unit are determined based on the dynamic SBFD time domain configuration.

In some embodiments, in a case where at least one type of SBFD time domain configuration is the dynamic SBFD time domain configuration and at least one type of TDD uplink-downlink configuration is the dynamic TDD uplink-downlink configuration, and the dynamic TDD uplink-downlink configuration has the higher priority than the dynamic SBFD time domain configuration, the transmission parameters of the time domain unit are determined based on the dynamic TDD uplink-downlink configuration.

In some embodiments, in a case where at least one type of SBFD time domain configuration is the dynamic SBFD time domain configuration and at least one type of TDD uplink-downlink configuration is the common TDD uplink-downlink configuration, and the dynamic SBFD time domain configuration has the higher priority than the common TDD uplink-downlink configuration, the transmission parameters of the time domain unit are determined based on the dynamic SBFD time domain configuration.

In some embodiments, in a case where at least one type of SBFD time domain configuration is the dynamic SBFD time domain configuration and at least one type of TDD uplink-downlink configuration is the common TDD uplink-downlink configuration, and the common TDD uplink-downlink configuration has the higher priority than the dynamic SBFD time domain configuration, the transmission parameters of the time domain unit are determined based on the common TDD uplink-downlink configuration.

In some embodiments, in a case where at least one type of SBFD time domain configuration is the dynamic SBFD time domain configuration and at least one type of TDD uplink-downlink configuration is the terminal-specific TDD uplink-downlink configuration, and the dynamic SBFD time domain configuration has the higher priority than the terminal-specific TDD uplink-downlink configuration, the transmission parameters of the time domain unit are determined based on the dynamic SBFD time domain configuration.

In some embodiments, in a case where at least one type of SBFD time domain configuration is the dynamic SBFD time domain configuration and at least one type of TDD uplink-downlink configuration is the terminal-specific TDD uplink-downlink configuration, and the terminal-specific TDD uplink-downlink configuration has the higher priority than the dynamic SBFD time domain configuration, the transmission parameters of the time domain unit are determined based on the terminal-specific TDD uplink-downlink configuration.

In some embodiments, in a case where at least one type of SBFD time domain configuration is the common SBFD time domain configuration and at least one type of TDD uplink-downlink configuration is the periodic TDD uplink-downlink configuration, and the common SBFD time domain configuration has the higher priority than the periodic TDD uplink-downlink configuration, the transmission parameters of the time domain unit are determined based on the common SBFD time domain configuration.

In some embodiments, in a case where at least one type of SBFD time domain configuration is the common SBFD time domain configuration and at least one type of TDD uplink-downlink configuration is the periodic TDD uplink-downlink configuration, and the periodic TDD uplink-downlink configuration has the higher priority than the common SBFD time domain configuration, the transmission parameters of the time domain unit are determined based on the periodic TDD uplink-downlink configuration.

In some embodiments, in a case where at least one type of SBFD time domain configuration is the common SBFD time domain configuration and at least one type of TDD uplink-downlink configuration is the semi-static TDD uplink-downlink configuration, and the common SBFD time domain configuration has the higher priority than the semi-static TDD uplink-downlink configuration, the transmission parameters of the time domain unit are determined based on the common SBFD time domain configuration.

In some embodiments, in a case where at least one type of SBFD time domain configuration is the common SBFD time domain configuration and at least one type of TDD uplink-downlink configuration is the semi-static TDD uplink-downlink configuration, and the semi-static TDD uplink-downlink configuration has the higher priority than the common SBFD time domain configuration, the transmission parameters of the time domain unit are determined based on the semi-static TDD uplink-downlink configuration.

In some embodiments, in a case where at least one type of SBFD time domain configuration is the common SBFD time domain configuration and at least one type of TDD uplink-downlink configuration is the dynamic TDD uplink-downlink configuration, and the common SBFD time domain configuration has the higher priority than the dynamic TDD uplink-downlink configuration, the transmission parameters of the time domain unit are determined based on the common SBFD time domain configuration.

In some embodiments, in a case where at least one type of SBFD time domain configuration is the common SBFD time domain configuration and at least one type of TDD uplink-downlink configuration is the dynamic TDD uplink-downlink configuration, and the dynamic TDD uplink-downlink configuration has the higher priority than the common SBFD time domain configuration, the transmission parameters of the time domain unit are determined based on the dynamic TDD uplink-downlink configuration.

In some embodiments, in a case where at least one type of SBFD time domain configuration is the common SBFD time domain configuration and at least one type of TDD uplink-downlink configuration is the common TDD uplink-downlink configuration, and the common SBFD time domain configuration has the higher priority than the common TDD uplink-downlink configuration, the transmission parameters of the time domain unit are determined based on the common SBFD time domain configuration.

In some embodiments, in a case where at least one type of SBFD time domain configuration is the common SBFD time domain configuration and at least one type of TDD uplink-downlink configuration is the common TDD uplink-downlink configuration, and the common TDD uplink-downlink configuration has the higher priority than the common SBFD time domain configuration, the transmission parameters of the time domain unit are determined based on the common TDD uplink-downlink configuration.

In some embodiments, in a case where at least one type of SBFD time domain configuration is the common SBFD time domain configuration and at least one type of TDD uplink-downlink configuration is the terminal-specific TDD uplink-downlink configuration, and the common SBFD time domain configuration has the higher priority than the terminal-specific TDD uplink-downlink configuration, the transmission parameters of the time domain unit are determined based on the common SBFD time domain configuration.

In some embodiments, in a case where at least one type of SBFD time domain configuration is the common SBFD time domain configuration and at least one type of TDD uplink-downlink configuration is the terminal-specific TDD uplink-downlink configuration, and the terminal-specific TDD uplink-downlink configuration has the higher priority than the common SBFD time domain configuration, the transmission parameters of the time domain unit are determined based on the terminal-specific TDD uplink-downlink configuration.

In some embodiments, in a case where at least one type of SBFD time domain configuration is the terminal-specific SBFD time domain configuration and at least one type of TDD uplink-downlink configuration is the periodic TDD uplink-downlink configuration, and the terminal-specific SBFD time domain configuration has the higher priority than the periodic TDD uplink-downlink configuration, the transmission parameters of the time domain unit are determined based on the terminal-specific SBFD time domain configuration.

In some embodiments, in a case where at least one type of SBFD time domain configuration is the terminal-specific SBFD time domain configuration and at least one type of TDD uplink-downlink configuration is the periodic TDD uplink-downlink configuration, and the periodic TDD uplink-downlink configuration has the higher priority than the terminal-specific SBFD time domain configuration, the transmission parameters of the time domain unit are determined based on the periodic TDD uplink-downlink configuration.

In some embodiments, in a case where at least one type of SBFD time domain configuration is the terminal-specific SBFD time domain configuration and at least one type of TDD uplink-downlink configuration is the semi-static TDD uplink-downlink configuration, and the terminal-specific SBFD time domain configuration has the higher priority than the semi-static TDD uplink-downlink configuration, the transmission parameters of the time domain unit are determined based on the terminal-specific SBFD time domain configuration.

In some embodiments, in a case where at least one type of SBFD time domain configuration is the terminal-specific SBFD time domain configuration and at least one type of TDD uplink-downlink configuration is the semi-static TDD uplink-downlink configuration, and the semi-static TDD uplink-downlink configuration has the higher priority than the terminal-specific SBFD time domain configuration, the transmission parameters of the time domain unit are determined based on the semi-static TDD uplink-downlink configuration.

In some embodiments, in a case where at least one type of SBFD time domain configuration is the terminal-specific SBFD time domain configuration and at least one type of TDD uplink-downlink configuration is the dynamic TDD uplink-downlink configuration, and the terminal-specific SBFD time domain configuration has the higher priority than the dynamic TDD uplink-downlink configuration, the transmission parameters of the time domain unit are determined based on the terminal-specific SBFD time domain configuration.

In some embodiments, in a case where at least one type of SBFD time domain configuration is the terminal-specific SBFD time domain configuration and at least one type of TDD uplink-downlink configuration is the dynamic TDD uplink-downlink configuration, and the dynamic TDD uplink-downlink configuration has the higher priority than the terminal-specific SBFD time domain configuration, the transmission parameters of the time domain unit are determined based on the dynamic TDD uplink-downlink configuration.

In some embodiments, in a case where at least one type of SBFD time domain configuration is the terminal-specific SBFD time domain configuration and at least one type of TDD uplink-downlink configuration is the common TDD uplink-downlink configuration, and the terminal-specific SBFD time domain configuration has the higher priority than the common TDD uplink-downlink configuration, the transmission parameters of the time domain unit are determined based on the terminal-specific SBFD time domain configuration.

In some embodiments, in a case where at least one type of SBFD time domain configuration is the terminal-specific SBFD time domain configuration and at least one type of TDD uplink-downlink configuration is the common TDD uplink-downlink configuration, and the common TDD uplink-downlink configuration has the higher priority than the terminal-specific SBFD time domain configuration, the transmission parameters of the time domain unit are determined based on the common TDD uplink-downlink configuration.

In some embodiments, in a case where at least one type of SBFD time domain configuration is the terminal-specific SBFD time domain configuration and at least one type of TDD uplink-downlink configuration is the terminal-specific TDD uplink-downlink configuration, and the terminal-specific SBFD time domain configuration has the higher priority than the terminal-specific TDD uplink-downlink configuration, the transmission parameters of the time domain unit are determined based on the terminal-specific SBFD time domain configuration.

In some embodiments, in a case where at least one type of SBFD time domain configuration is the terminal-specific SBFD time domain configuration and at least one type of TDD uplink-downlink configuration is the terminal-specific TDD uplink-downlink configuration, and the terminal-specific TDD uplink-downlink configuration has the higher priority than the terminal-specific SBFD time domain configuration, the transmission parameters of the time domain unit are determined based on the terminal-specific TDD uplink-downlink configuration.

As illustrated in FIG. 20, the process 120 includes the process 135.

**In process 135,** the transmission parameters of the time domain unit are determined based on a type of configuration indicated in at least one type of TDD uplink-downlink configuration and at least one type of SBFD time domain configuration or indicated by the network device.

In some embodiments, in a case where at least one type of SBFD time domain configuration includes one type of SBFD time domain configuration and at least one type of TDD uplink-downlink configuration includes one type of TDD uplink-downlink configuration, the transmission parameters of the time domain unit are determined directly based on a type of time domain configuration indicated or indicated by the network device.

In some embodiments, in a case where at least one type of SBFD time domain configuration includes one type of SBFD time domain configuration and at least one type of TDD uplink-downlink configuration includes a plurality of types of TDD uplink-downlink configurations, the transmission parameters of the time domain unit are determined directly based on a type of time domain configuration indicated or indicated by the network device.

In some embodiments, in a case where at least one type of SBFD time domain configuration includes a plurality of types of SBFD time domain configurations and at least one type of TDD uplink-downlink configuration includes one type of TDD uplink-downlink configuration, the transmission parameters of the time domain unit are determined directly based on a type of time domain configuration indicated or indicated by the network device.

In some embodiments, in a case where at least one type of SBFD time domain configuration includes a plurality of types of SBFD time domain configurations and at least one type of TDD uplink-downlink configuration includes a plurality of types of TDD uplink-downlink configurations, the transmission parameters of the time domain unit are determined directly based on a type of time domain configuration indicated or indicated by the network device.

In a case where at least one type of TDD uplink-downlink configuration is present, the transmission parameters of the time domain unit are determined using a type of TDD uplink-downlink configuration indicated or indicated by the network device.

In a case where at least one type of SBFD time domain configuration is present, the transmission parameters of the time domain unit are determined using a type of SBFD time domain configuration indicated or indicated by the network device.

In a case where at least one type of TDD uplink-downlink configuration is present, the intermediate transmission parameter of the time domain unit is determined using a type of TDD uplink-downlink configuration indicated or indicated by the network device. The final transmission parameter of the time domain unit is determined based on one type of SBFD time domain configuration.

In a case where at least one type of SBFD time domain configuration is present, the intermediate transmission parameter of the time domain unit is determined using a type of SBFD time domain configuration indicated or indicated by the network device. The final transmission parameter of the time domain unit is determined based on one type of TDD uplink-downlink configuration.

In a case where at least one type of TDD uplink-downlink configuration is present, the intermediate transmission parameter of the time domain unit is determined using a type of TDD uplink-downlink configuration indicated or indicated by the network device. The final transmission parameter of the time domain unit is determined based on one of the at least one type of SBFD time domain configuration. In some embodiments, in a case where at least one type of SBFD time domain configuration is present, the final transmission parameter of the time domain unit is determined using a type of SBFD time domain configuration indicated or indicated by the network device.

In a case where at least one type of SBFD time domain configuration is present, the intermediate transmission parameter of the time domain unit is determined using a type of SBFD time domain configuration indicated or indicated by the network device. The final transmission parameter of the time domain unit is determined based on one of the at least one type of TDD uplink-downlink configuration. In some embodiments, in a case where at least one type of TDD uplink-downlink configuration is present, the final transmission parameter of the time domain unit is determined using a type of TDD uplink-downlink configuration indicated or indicated by the network device.

The case where at least one type of SBFD time domain configuration includes one type of SBFD time domain configuration and at least one type of TDD uplink-downlink configuration includes one type of TDD uplink-downlink configuration is taken as an example.

In some embodiments, in a case where at least one type of SBFD time domain configuration is the periodic SBFD time domain configuration and at least one type of TDD uplink-downlink configuration is the periodic TDD uplink-downlink configuration, the transmission parameters of the time domain unit are determined based on the periodic SBFD time domain configuration indicated by the network device.

In some embodiments, in a case where at least one type of SBFD time domain configuration is the periodic SBFD time domain configuration and at least one type of TDD uplink-downlink configuration is the periodic TDD uplink-downlink configuration, the transmission parameters of the time domain unit are determined based on the periodic TDD uplink-downlink configuration indicated by the network device.

In some embodiments, in a case where at least one type of SBFD time domain configuration is the periodic SBFD time domain configuration and at least one type of TDD uplink-downlink configuration is the semi-static TDD uplink-downlink configuration, the transmission parameters of the time domain unit are determined based on the periodic SBFD time domain configuration indicated by the network device.

In some embodiments, in a case where at least one type of SBFD time domain configuration is the periodic SBFD time domain configuration and at least one type of TDD uplink-downlink configuration is the semi-static TDD uplink-downlink configuration, the transmission parameters of the time domain unit are determined based on the semi-static TDD uplink-downlink configuration indicated by the network device.

In some embodiments, in a case where at least one type of SBFD time domain configuration is the periodic SBFD time domain configuration and at least one type of TDD uplink-downlink configuration is the dynamic TDD uplink-downlink configuration, the transmission parameters of the time domain unit are determined based on the periodic SBFD time domain configuration indicated by the network device.

In some embodiments, in a case where at least one type of SBFD time domain configuration is the periodic SBFD time domain configuration and at least one type of TDD uplink-downlink configuration is the dynamic TDD uplink-downlink configuration, the transmission parameters of the time domain unit are determined based on the dynamic TDD uplink-downlink configuration indicated by the network device.

In some embodiments, in a case where at least one type of SBFD time domain configuration is the periodic SBFD time domain configuration and at least one type of TDD uplink-downlink configuration is the common TDD uplink-downlink configuration, the transmission parameters of the time domain unit are determined based on the periodic SBFD time domain configuration indicated by the network device.

In some embodiments, in a case where at least one type of SBFD time domain configuration is the periodic SBFD time domain configuration and at least one type of TDD uplink-downlink configuration is the common TDD uplink-downlink configuration, the transmission parameters of the time domain unit is determined based on the common TDD uplink-downlink configuration indicated by the network device.

In some embodiments, in a case where at least one type of SBFD time domain configuration is the periodic SBFD time domain configuration and at least one type of TDD uplink-downlink configuration is the terminal-specific TDD uplink-downlink configuration, the transmission parameters of the time domain unit are determined based on the periodic SBFD time domain configuration indicated by the network device.

In some embodiments, in a case where at least one type of SBFD time domain configuration is the periodic SBFD time domain configuration and at least one type of TDD uplink-downlink configuration is the terminal-specific TDD uplink-downlink configuration, the transmission parameters of the time domain unit are determined based on the terminal-specific TDD uplink-downlink configuration indicated by the network device.

In some embodiments, in a case where at least one type of SBFD time domain configuration is the semi-static SBFD time domain configuration and at least one type of TDD uplink-downlink configuration is the periodic TDD uplink-downlink configuration, the transmission parameters of the time domain unit are determined based on the semi-static SBFD time domain configuration indicated by the network device.

In some embodiments, in a case where at least one type of SBFD time domain configuration is the semi-static SBFD time domain configuration and at least one type of TDD uplink-downlink configuration is the periodic TDD uplink-downlink configuration, the transmission parameters of the time domain unit are determined based on the periodic TDD uplink-downlink configuration indicated by the network device.

In a case where at least one type of SBFD time domain configuration is the semi-static SBFD time domain configuration and at least one type of TDD uplink-downlink configuration is the semi-static TDD uplink-downlink configuration, the transmission parameters of the time domain unit are determined based on the semi-static SBFD time domain configuration indicated by the network device.

In a case where at least one type of SBFD time domain configuration is the semi-static SBFD time domain configuration and at least one type of TDD uplink-downlink configuration is the semi-static TDD uplink-downlink configuration, the transmission parameters of the time domain unit are determined based on the semi-static TDD uplink-downlink configuration indicated by the network device.

In a case where at least one type of SBFD time domain configuration is the semi-static SBFD time domain configuration and at least one type of TDD uplink-downlink configuration is the dynamic TDD uplink-downlink configuration, the transmission parameters of the time domain unit are determined based on the semi-static SBFD time domain configuration indicated by the network device.

In a case where at least one type of SBFD time domain configuration is the semi-static SBFD time domain configuration and at least one type of TDD uplink-downlink configuration is the dynamic TDD uplink-downlink configuration, the transmission parameters of the time domain unit are determined based on the dynamic TDD uplink-downlink configuration indicated by the network device.

In a case where at least one type of SBFD time domain configuration is the semi-static SBFD time domain configuration and at least one type of TDD uplink-downlink configuration is the common TDD uplink-downlink configuration, the transmission parameters of the time domain unit are determined based on the semi-static SBFD time domain configuration indicated by the network device.

In a case where at least one type of SBFD time domain configuration is the semi-static SBFD time domain configuration and at least one type of TDD uplink-downlink configuration is the common TDD uplink-downlink configuration, the transmission parameters of the time domain unit are determined based on the common TDD uplink-downlink configuration indicated by the network device.

In a case where at least one type of SBFD time domain configuration is the semi-static SBFD time domain configuration and at least one type of TDD uplink-downlink configuration is the terminal-specific TDD uplink-downlink configuration, the transmission parameters of the time domain unit are determined based on the semi-static SBFD time domain configuration indicated by the network device.

In a case where at least one type of SBFD time domain configuration is the semi-static SBFD time domain configuration and at least one type of TDD uplink-downlink configuration is the terminal-specific TDD uplink-downlink configuration, the transmission parameters of the time domain unit are determined based on the terminal-specific TDD uplink-downlink configuration indicated by the network device.

In a case where at least one type of SBFD time domain configuration is the dynamic SBFD time domain configuration and at least one type of TDD uplink-downlink configuration is the periodic TDD uplink-downlink configuration, the transmission parameters of the time domain unit are determined based on the dynamic SBFD time domain configuration indicated by the network device.

In a case where at least one type of SBFD time domain configuration is the dynamic SBFD time domain configuration and at least one type of TDD uplink-downlink configuration is the periodic TDD uplink-downlink configuration, the transmission parameters of the time domain unit are determined based on the periodic TDD uplink-downlink configuration indicated by the network device.

In a case where at least one type of SBFD time domain configuration is the dynamic SBFD time domain configuration and at least one type of TDD uplink-downlink configuration is the semi-static TDD uplink-downlink configuration, the transmission parameters of the time domain unit are determined based on the dynamic SBFD time domain configuration indicated by the network device.

In a case where at least one type of SBFD time domain configuration is the dynamic SBFD time domain configuration and at least one type of TDD uplink-downlink configuration is the semi-static TDD uplink-downlink configuration, the transmission parameters of the time domain unit are determined based on the semi-static TDD uplink-downlink configuration indicated by the network device.

In a case where at least one type of SBFD time domain configuration is the dynamic SBFD time domain configuration and at least one type of TDD uplink-downlink configuration is the dynamic TDD uplink-downlink configuration, the transmission parameters of the time domain unit are determined based on the dynamic SBFD time domain configuration indicated by the network device.

In a case where at least one type of SBFD time domain configuration is the dynamic SBFD time domain configuration and at least one type of TDD uplink-downlink configuration is the dynamic TDD uplink-downlink configuration, the transmission parameters of the time domain unit are determined based on the dynamic TDD uplink-downlink configuration indicated by the network device.

In a case where at least one type of SBFD time domain configuration is the dynamic SBFD time domain configuration and at least one type of TDD uplink-downlink configuration is the common TDD uplink-downlink configuration, the transmission parameters of the time domain unit are determined based on the dynamic SBFD time domain configuration indicated by the network device.

In a case where at least one type of SBFD time domain configuration is the dynamic SBFD time domain configuration and at least one type of TDD uplink-downlink configuration is the common TDD uplink-downlink configuration, the transmission parameters of the time domain unit are determined based on the common TDD uplink-downlink configuration indicated by the network device.

In a case where at least one type of SBFD time domain configuration is the dynamic SBFD time domain configuration and at least one type of TDD uplink-downlink configuration is the terminal-specific TDD uplink-downlink configuration, the transmission parameters of the time domain unit are determined based on the dynamic SBFD time domain configuration indicated by the network device.

In a case where at least one type of SBFD time domain configuration is the dynamic SBFD time domain configuration and at least one type of TDD uplink-downlink configuration is the terminal-specific TDD uplink-downlink configuration, the transmission parameters of the time domain unit are determined based on the terminal-specific TDD uplink-downlink configuration indicated by the network device.

In a case where at least one type of SBFD time domain configuration is the common SBFD time domain configuration and at least one type of TDD uplink-downlink configuration is the periodic TDD uplink-downlink configuration, the transmission parameters of the time domain unit are determined based on the common SBFD time domain configuration indicated by the network device.

In a case where at least one type of SBFD time domain configuration is the common SBFD time domain configuration and at least one type of TDD uplink-downlink configuration is the periodic TDD uplink-downlink configuration, the transmission parameters of the time domain unit are determined based on the periodic TDD uplink-downlink configuration indicated by the network device.

In a case where at least one type of SBFD time domain configuration is the common SBFD time domain configuration and at least one type of TDD uplink-downlink configuration is the semi-static TDD uplink-downlink configuration, the transmission parameters of the time domain unit are determined based on the common SBFD time domain configuration indicated by the network device.

In a case where at least one type of SBFD time domain configuration is the common SBFD time domain configuration and at least one type of TDD uplink-downlink configuration is the semi-static TDD uplink-downlink configuration, the transmission parameters of the time domain unit are determined based on the semi-static TDD uplink-downlink configuration indicated by the network device.

In a case where at least one type of SBFD time domain configuration is the common SBFD time domain configuration and at least one type of TDD uplink-downlink configuration is the dynamic TDD uplink-downlink configuration, the transmission parameters of the time domain unit are determined based on the common SBFD time domain configuration indicated by the network device.

In a case where at least one type of SBFD time domain configuration is the common SBFD time domain configuration and at least one type of TDD uplink-downlink configuration is the dynamic TDD uplink-downlink configuration, the transmission parameters of the time domain unit are determined based on the dynamic TDD uplink-downlink configuration indicated by the network device.

In a case where at least one type of SBFD time domain configuration is the common SBFD time domain configuration and at least one type of TDD uplink-downlink configuration is the common TDD uplink-downlink configuration, the transmission parameters of the time domain unit is determined based on the common SBFD time domain configuration indicated by the network device.

In a case where at least one type of SBFD time domain configuration is the common SBFD time domain configuration and at least one type of TDD uplink-downlink configuration is the common TDD uplink-downlink configuration, the transmission parameters of the time domain unit are determined based on the common TDD uplink-downlink configuration indicated by the network device.

In a case where at least one type of SBFD time domain configuration is the common SBFD time domain configuration and at least one type of TDD uplink-downlink configuration is the terminal-specific TDD uplink-downlink configuration, the transmission parameters of the time domain unit are determined based on the common SBFD time domain configuration indicated by the network device.

In a case where at least one type of SBFD time domain configuration is the common SBFD time domain configuration and at least one type of TDD uplink-downlink configuration is the terminal-specific TDD uplink-downlink configuration, the transmission parameters of the time domain unit are determined based on the terminal-specific TDD uplink-downlink configuration indicated by the network device.

In a case where at least one type of SBFD time domain configuration is the terminal-specific SBFD time domain configuration and at least one type of TDD uplink-downlink configuration is the periodic TDD uplink-downlink configuration, the transmission parameters of the time domain unit are determined based on the terminal-specific SBFD time domain configuration indicated by the network device.

In a case where at least one type of SBFD time domain configuration is the terminal-specific SBFD time domain configuration and at least one type of TDD uplink-downlink configuration is the periodic TDD uplink-downlink configuration, the transmission parameters of the time domain unit are determined based on the periodic TDD uplink-downlink configuration indicated by the network device.

In a case where at least one type of SBFD time domain configuration is the terminal-specific SBFD time domain configuration and at least one type of TDD uplink-downlink configuration is the semi-static TDD uplink-downlink configuration, the transmission parameters of the time domain unit are determined based on the terminal-specific SBFD time domain configuration indicated by the network device.

In a case where at least one type of SBFD time domain configuration is the terminal-specific SBFD time domain configuration and at least one type of TDD uplink-downlink configuration is the semi-static TDD uplink-downlink configuration, the transmission parameters of the time domain unit are determined based on the semi-static TDD uplink-downlink configuration indicated by the network device.

In a case where at least one type of SBFD time domain configuration is the terminal-specific SBFD time domain configuration and at least one type of TDD uplink-downlink configuration is the dynamic TDD uplink-downlink configuration, the transmission parameters of the time domain unit are determined based on the terminal-specific SBFD time domain configuration indicated by the network device.

In a case where at least one type of SBFD time domain configuration is the terminal-specific SBFD time domain configuration and at least one type of TDD uplink-downlink configuration is the dynamic TDD uplink-downlink configuration, the transmission parameters of the time domain unit are determined based on the dynamic TDD uplink-downlink configuration indicated by the network device.

In a case where at least one type of SBFD time domain configuration is the terminal-specific SBFD time domain configuration and at least one type of TDD uplink-downlink configuration is the common TDD uplink-downlink configuration, the transmission parameters of the time domain unit are determined based on the terminal-specific SBFD time domain configuration indicated by the network device.

In a case where at least one type of SBFD time domain configuration is the terminal-specific SBFD time domain configuration and at least one type of TDD uplink-downlink configuration is the common TDD uplink-downlink configuration, the transmission parameters of the time domain unit are determined based on the common TDD uplink-downlink configuration indicated by the network device.

In a case where at least one type of SBFD time domain configuration is the terminal-specific SBFD time domain configuration and at least one type of TDD uplink-downlink configuration is the terminal-specific TDD uplink-downlink configuration, the transmission parameters of the time domain unit are determined based on the terminal-specific SBFD time domain configuration indicated by the network device.

In a case where at least one type of SBFD time domain configuration is the terminal-specific SBFD time domain configuration and at least one type of TDD uplink-downlink configuration is the terminal-specific TDD uplink-downlink configuration, the transmission parameters of the time domain unit are determined based on the terminal-specific TDD uplink-downlink configuration indicated by the network device.

The transmission parameters of the time domain unit are determined based on a type of configuration that is of a higher priority or indicated in at least one type of TDD uplink-downlink configuration and at least one type of SBFD time domain configuration or indicated by the network device.

In a case where at least one type of TDD uplink-downlink configuration is present, the intermediate transmission parameter of the time domain unit is determined using a type of TDD uplink-downlink configuration indicated or indicated by the network device. The final transmission parameter of the time domain unit is determined based on one of the at least one type of SBFD time domain configuration. In some embodiments, in a case where at least one type of SBFD time domain configuration is present, the final transmission parameter of the time domain unit is determined using a type of SBFD time domain configuration with a higher priority.

In a case where at least one type of SBFD time domain configuration is present, the intermediate transmission parameter of the time domain unit is determined using a type of SBFD time domain configuration indicated or indicated by the network device. The final transmission parameter of the time domain unit is determined based on one of the at least one type of TDD uplink-downlink configuration. In some embodiments, in a case where at least one type of TDD uplink-downlink configuration is present, the final transmission parameter of the time domain unit is determined using a type of TDD uplink-downlink configuration with a higher priority.

In a case where at least one type of TDD uplink-downlink configuration is present, the intermediate transmission parameter of the time domain unit is determined using a type of TDD uplink-downlink configuration with a higher priority. The final transmission parameter of the time domain unit is determined based on one of the at least one type of SBFD time domain configuration. In some embodiments, in a case where at least one type of SBFD time domain configuration is present, the final transmission parameter of the time domain unit is determined using a type of SBFD time domain configuration indicated or indicated by the network device.

In a case where at least one type of SBFD time domain configuration is present, the intermediate transmission parameter of the time domain unit is determined using a type of SBFD time domain configuration with a higher priority. The final transmission parameter of the time domain unit is determined based on one of the at least one type of TDD uplink-downlink configuration. In some embodiments, in a case where at least one type of TDD uplink-downlink configuration is present, the final transmission parameter of the time domain unit is determined using a type of TDD uplink-downlink configuration indicated or indicated by the network device.

In some embodiments, other rules are used to determine the type of TDD uplink-downlink configuration used in a case where at least one type of TDD uplink-downlink configuration is present. In some embodiments, other rules are used to determine the type of SBFD time domain configuration used in a case where at least one type of SBFD time domain configuration is present.

In summary, in the embodiments of the present disclosure, in a case where at least two types of configurations include at least one type of TDD uplink-downlink configuration and at least one configuration type, how to use at least one type of TDD uplink-downlink configuration and at least one type of configuration is specified to ensure the consistency between the terminal device and the network device, and the transmission direction, the transmission type, or the transmission scheme of the time domain unit is specified to avoid a conflict during the transmission of the time domain unit.

It should be noted that "determining transmission parameters of a time domain unit" in the present disclosure may be understood as determining the transmission parameters of part of the time domain unit, determining the transmission parameters of a variable time domain unit, or determining the transmission parameters of part of a variable time domain unit. "Changing transmission parameters of a time domain unit" in the present disclosure may be understood as changing the transmission parameters of part of the time domain unit, changing the transmission parameters of a variable time domain unit, or changing the transmission parameters of part of a variable time domain unit. "Modifying transmission parameters of a time domain unit" in the present disclosure may be understood as modifying the transmission parameters of part of the time domain unit, modifying the transmission parameters of a variable time domain unit, or modifying the transmission parameters of part of a variable time domain unit. "Transmission parameter," "intermediate transmission parameter," "first transmission parameter," "second transmission parameter," and the like in the present disclosure all refer to transmission parameters at different stages in a determination process, and the transmission parameters at each stage represents a transmission direction, a transmission type, or a transmission scheme.

### First Exemplary Embodiment:

In a case where a plurality of types of SBFD time domain configurations are present, how to use the plurality of types of SBFD time domain configurations is specified, such that the consistency between the terminal device and the network device is ensured.

In some embodiments, the terminal device receives the configuration type of a time domain configuration from the network device. Specifically, the configuration type includes at least one of: an uplink time domain configuration, an SBFD time domain configuration, an uplink frequency domain configuration, or an SBFD-supported frequency domain configuration.

In some embodiments, the configuration type is defined for a slot, a radio frame, or a symbol.

In some embodiments, the SBFD time domain configuration includes one or more types.

In some embodiments, the SBFD time domain configuration type includes at least one of: a periodic configuration type, a semi-static configuration type, a dynamic configuration type, or an aperiodic configuration type.

In some embodiments, the SBFD time domain configuration type includes at least one of: a common configuration type or a terminal-specific configuration type.

For example, the SBFD time domain configuration is defined for a slot or a symbol.

In some embodiments, for different types of SBFD time domain configurations, the indicated granularities are the same or different.

In some embodiments, the SBFD time domain configuration is included in common or unit-level information, terminal-specific information, or unit group-level information.

The common or unit-level information may be RRC information, system information block (SIB) information, or master information block (MIB) information. In some embodiments, the SIB information is SIB 1 or SIB2. In some embodiments, the SIB information includes at least one of: a periodic configuration type, a semi-static configuration type, or a common configuration type.

The terminal-specific information includes a dedicated RRC message or a DCI message. In some embodiments, the terminal-specific information includes at least a terminal-specific configuration or a dynamic configuration.

The unit group-level information includes DCI information. In some embodiments, the unit group-level information includes at least a dynamic configuration type.

The terminal device determines a slot/symbol type and/or a transmission mode based on a configuration type configured or indicated by a network. In some embodiments, the transmission mode includes: performing transmission based on an uplink, a downlink, an uplink subband, or a downlink subband.

Specifically, the determination includes at least one of: determining, by the terminal device, a slot/symbol type and/or a transmission mode based on a plurality of types of SBFD time domain configurations. In some embodiments, the terminal device is a terminal device that supports the SBFD time domain configuration.

In a case where the semi-static SBFD time domain configuration and the dynamic SBFD time domain configuration are present, the dynamic SBFD time domain configuration only indicates, modifies, or changes the variable part in the semi-static SBFD time domain configuration, for example, a flexible slot or symbol, a slot or symbol without SBFD indication, or a slot or symbol of SBFD.

In a case where the common SBFD time domain configuration and the terminal-specific SBFD time domain configuration are present, the terminal-specific SBFD time domain configuration only indicates, modifies, or changes the variable part in the common SBFD time domain configuration, for example, a flexible slot or symbol, a slot or symbol without SBFD indication, or a slot or symbol of SBFD.

The terminal device determines the slot/symbol type and/or the transmission mode based on one type of the SBFD time domain configurations. In some embodiments, the terminal device is a terminal device that supports the SBFD time domain configuration.

The slot/symbol type and/or the transmission mode are determined based on the terminal-specific or dynamic SBFD time domain configuration.

The terminal device, in a case of being in an idle state or an inactive state, performs determination based on the common SBFD time domain configuration, the periodic SBFD time domain configuration, or the semi-static SBFD time domain configuration. The terminal device, in a case of being in a connected state, performs determination based on the terminal-specific SBFD time domain configuration or the dynamic SBFD time domain configuration.

The terminal device, in a case of being in an idle state or an inactive state, performs determination based on the common SBFD time domain configuration, the periodic SBFD time domain configuration, or the semi-static SBFD time domain configuration. The terminal device, in a case of being in a connected state, performs determination based on the periodic SBFD time domain configuration, the semi-static SBFD time domain configuration, the terminal-specific SBFD time domain configuration, or the dynamic SBFD time domain configuration. For example, the terminal device performs determination as indicated by the network device, or based on the priority, or by itself.

### Second Exemplary Embodiment:

In a case where a plurality of types of SBFD time domain configurations and a plurality of types of TDD uplink-downlink configurations are present, how to use the plurality of types of SBFD time domain configurations and the plurality of types of TDD uplink-downlink configurations is specified, such that the consistency between the terminal device and the network device is ensured.

In some embodiments, the terminal device receives the TDD uplink-downlink configuration or indication from the network device. The terminal device receives the SBFD time domain configuration or indication from the network device.

In some embodiments, the configuration type is defined for a slot, a radio frame, or a symbol.

In some embodiments, the SBFD time domain configuration includes one or more types.

In some embodiments, the SBFD time domain configuration type includes at least one of: a periodic configuration type, a semi-static configuration type, a dynamic configuration type, or an aperiodic configuration type.

In some embodiments, the SBFD time domain configuration type includes at least one of: a common configuration type or a terminal-specific configuration type.

In some embodiments, for different types of SBFD time domain configurations, the indicated granularities are the same or different.

In some embodiments, the SBFD time domain configuration is included in common or unit-level information, terminal-specific information, or unit group-level information.

The common or unit-level information may be RRC information, SIB information, or MIB information. In some embodiments, the SIB information is SIB1 or SIB2. In some embodiments, the SIB information includes at least one of: a periodic configuration type, a semi-static configuration type, or a common configuration type.

The terminal-specific information includes a dedicated RRC message or a DCI message. In some embodiments, the terminal-specific information includes at least a terminal-specific configuration or a dynamic configuration.

The unit group-level information includes DCI information. In some embodiments, the unit group-level information includes at least a dynamic configuration type.

In some embodiments, the terminal device determines the slot/symbol type and/or the transmission mode based on the SBFD time domain configuration and the TDD uplink-downlink configuration that are configured or indicated by the network device.

The terminal device determines the slot/symbol type and/or transmission scheme based on the SBFD time domain configuration and the final result of the TDD uplink-downlink configuration.

In some embodiments, the terminal device is a terminal device that supports the SBFD time domain configuration.

In some embodiments, the terminal device determines the slot/symbol type based on an existing TDD uplink-downlink configuration, and then determines the slot/symbol type and/or transmission scheme based on the SBFD time domain configuration.

For example, the terminal device determines a final slot/symbol type based on the combination of at least one of the common TDD uplink-downlink configuration or the terminal-specific TDD uplink-downlink configuration. Then, the final slot/symbol type is further determined based on the SBFD time domain configuration. In some embodiments, the SBFD time domain configuration is one type of the common SBFD time domain configuration, the terminal-specific SBFD time domain configuration, the dynamic SBFD time domain configuration, the semi-static SBFD time domain configuration, the periodic SBFD time domain configuration, or a combination of a plurality of types thereof.

In some embodiments, the terminal device determines the results of types based on the different types of TDD uplink-downlink configurations and SBFD time domain configurations, and then determines the final slot/symbol type and/or the transmission scheme by combining the results of the types.

In some embodiments, the terminal device determines the semi-static slot/symbol based on the common TDD uplink-downlink configuration and the common SBFD time domain configuration, determines a terminal-specific slot/symbol result based on the terminal-specific TDD uplink-downlink configuration and the terminal-specific SBFD time domain configuration, and then determines the final slot/symbol type by combining the two.

In some embodiments, the terminal device determines a semi-static slot/symbol based on the semi-static TDD uplink-downlink configuration and the semi-static SBFD time domain configuration, determines a dynamic slot/symbol result based on the dynamic TDD uplink-downlink configuration and the dynamic SBFD time domain configuration, and then determines the final slot/symbol type by combining the two.

In some embodiments, the terminal device determines a semi-static slot/symbol result based on the semi-static TDD uplink-downlink configuration and the semi-static SBFD time domain configuration, and then performs transmission based on the result.

In some embodiments, the terminal device determines a dynamic slot/symbol result based on the dynamic TDD uplink-downlink configuration and the dynamic SBFD time domain configuration, and then performs transmission based on the result.

In some embodiments, the terminal device determines a terminal-specific slot/symbol result based on the terminal-specific TDD uplink-downlink configuration and the terminal-specific SBFD time domain configuration, and then performs transmission based on the result.

In some embodiments, the terminal device is a terminal device that supports SBFD.

In some embodiments, the network device is a network device that supports SBFD.

In some embodiments, the terminal device is in a connected state, an idle state, or an inactive state.

### Third Exemplary Embodiment:

In a case where the SBFD time domain configuration does not match the TDD uplink-downlink configuration, how to use the SBFD time domain configuration and the TDD uplink-downlink configuration is specified, such that the consistency between the terminal device and the network device is ensured.

In some embodiments, the terminal device receives the TDD uplink-downlink configuration or indication from the network device. The terminal device receives the SBFD time domain configuration or indication from the network device.

In some embodiments, the configuration type is defined for a slot, a radio frame, or a symbol.

In some embodiments, the SBFD time domain configuration includes one or more types.

In some embodiments, the configuration type of the SBFD time domain configuration includes at least one of: a periodic configuration type, a semi-static configuration type, a dynamic configuration type, or an aperiodic configuration type.

In some embodiments, the configuration type of the SBFD time domain configuration includes at least one of: a common configuration type or a terminal-specific configuration type.

In some embodiments, for different configuration types of the SBFD time domain configuration, the indicated granularities are the same or different.

In some embodiments, the SBFD time domain configuration is included in common or unit-level information, terminal-specific information, or unit group-level information.

The common or unit-level information may be RRC information, SIB information, or MIB information. In some embodiments, the SIB information is SIB1 or SIB2. In some embodiments, the SIB information includes at least one of: a periodic configuration type, a semi-static configuration type, or a common configuration type.

The terminal-specific information includes a dedicated RRC message or a DCI message. In some embodiments, the terminal-specific information includes at least a terminal-specific configuration or a dynamic configuration.

The unit group-level information includes DCI information. In some embodiments, the unit group-level information includes at least a dynamic configuration type.

In some embodiments, the terminal device receives first indication information from the network device. The first indication information is used to indicate a processing rule or a priority in a case where a conflict arises.

In some embodiments, the network device configures that the period of an SBFD time domain configuration is consistent with the period of a TDD uplink-downlink configuration. Alternatively, the SBFD time domain configuration is configured to be valid only in a downlink slot/symbol or a flexible slot/symbol of a TDD uplink-downlink configuration.

In some embodiments, the terminal device is a terminal device that supports SBFD.

In some embodiments, the network device is a network device that supports SBFD.

In some embodiments, the terminal device is in a connected state, an idle state, or an inactive state.

The terminal device determines the slot/symbol type and/or the transmission mode based on the SBFD time domain configuration and the TDD uplink-downlink configuration that are configured or indicated by the network device, and/or the first indication information.

The terminal device does not expect that the period of the SBFD time domain configuration is inconsistent with the period of the TDD uplink-downlink configuration, or the terminal device only expects that the SBFD time domain configuration is valid only in the downlink or flexible slot/symbol of the TDD uplink-downlink configuration.

The terminal device considers that the SBFD time domain configuration is valid only in the downlink or flexible slot/symbol of the TDD uplink-downlink configuration.

The terminal device determines the slot/symbol type based on a TDD uplink-downlink configuration, or the terminal device determines the slot/symbol type based on an SBFD time domain configuration, or the terminal device determines the slot/symbol type based on a rule/priority indicated by the network device.

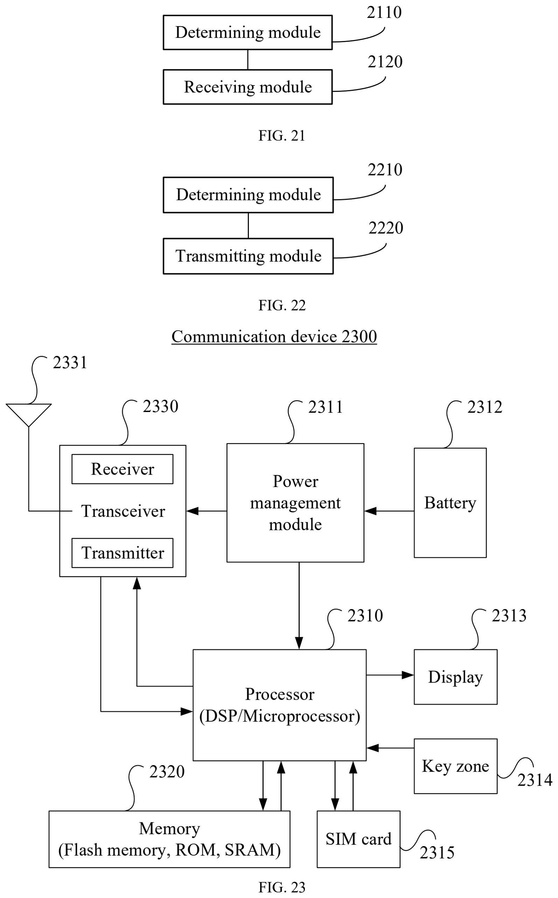

FIG. 21 is a block diagram of an apparatus for determining a configuration of a time domain unit according to some embodiments of the present disclosure. The apparatus is implemented as part of a terminal device. The apparatus includes: a determining module 2110, configured to determine, based on at least two types of configurations, transmission parameters of a time domain unit. The transmission parameters include: a transmission direction, a transmission type, or a transmission scheme.

At least two types of configurations include: at least two types of SBFD configurations, or at least one type of TDD uplink-downlink configuration and at least one type of configuration.

The determining module 2110 is further configured to: determine, based on a dynamic configuration type, transmission parameters of a variable time domain unit in a semi-static configuration type in a case where the at least two types of configurations include the semi-static configuration type and the dynamic configuration type, or determine, based on a dynamic configuration type, a variable time domain unit corresponding to a semi-static configuration type in a case where the at least two types of configurations include the semi-static configuration type and the dynamic configuration type.

The determining module 2110 is further configured to: determine, based on a terminal-specific configuration type, transmission parameters of a variable time domain unit in a common configuration type in a case where the at least two types of configurations include the common configuration type and the terminal-specific configuration type, or determine, based on a terminal-specific configuration type, a variable time domain unit corresponding to a common configuration type in a case where the at least two configuration types include the common configuration type and the terminal-specific configuration type.

The determining module 2110 is further configured to: determine, in a case where the at least two types of configurations include at least two configuration types, the transmission parameters of the time domain unit using a first configuration type in the at least two configuration types.

The first configuration type includes: a terminal-specific configuration type, or a dynamic configuration type.

In a case where the terminal device is in an idle state or an inactive state, the first configuration type includes: a common configuration type, or a periodic configuration type, or a semi-static configuration type.

In a case where the terminal device is in a connected state, the first configuration type includes: a terminal-specific configuration type, or a dynamic configuration type, or a common configuration type, or a periodic configuration type, or a semi-static configuration type.

The first configuration type is configured by the network device, or determined based on a priority, or autonomously implemented by the terminal device.

The determining module 2110 is further configured to: determine, based on at least one type of TDD uplink-downlink configuration, a first transmission parameter of the time domain unit in a case where the at least two types of configurations include at least one type of TDD uplink-downlink configuration and at least one type of configuration.

The determining module 2110 is further configured to: determine a second transmission parameter of the time domain unit by modifying or changing the first transmission parameter of the time domain unit based on at least one type of configuration.

The determining module 2110 is further configured to: determine, in a case where the at least one configuration type includes at least two configuration types, an intermediate transmission parameter of the time domain unit based on the at least two configuration types.

The determining module 2110 is further configured to: determine a second transmission parameter of the time domain unit by modifying or changing part or all of the first transmission parameter of the time domain unit based on the intermediate transmission parameter, or determine a variable part of the time domain unit based on the intermediate transmission parameter.

The determining module 2110 is further configured to: determine, based on a dynamic configuration type, an intermediate transmission parameter of a variable time domain unit in a semi-static configuration type in a case where the at least two configuration types include the semi-static configuration type and the dynamic configuration type, or determine, based on a dynamic configuration type, a variable time domain unit corresponding to a semi-static configuration type in a case where the at least two types of configurations include the semi-static configuration type and the dynamic configuration type; or determine, based on a terminal-specific configuration type, an intermediate transmission parameter of a variable time domain unit in a common configuration type in a case where the at least two configuration types include the common configuration type and the terminal-specific configuration type, or determine, based on a terminal-specific configuration type, a variable time domain unit corresponding to a common configuration type in a case where the at least two configuration types include the common configuration type and the terminal-specific configuration type.

The variable time domain unit includes at least one of: a flexible type time domain unit, a time domain unit without SBFD indication, or a time domain unit with SBFD indication.

The determining module 2110 is further configured to: determine, based on a TDD uplink-downlink configuration and a configuration type of the same configuration type, time domain configurations of the same configuration type in a case where at least two types of configurations include the TDD uplink-downlink configuration and the configuration type of the same configuration type, and/or determine the transmission parameters of the time domain unit based on time domain configurations of different configuration types; wherein the configuration type includes at least one of: a common configuration type, a terminal-specific configuration type, a periodic configuration type, a semi-static configuration type, or a dynamic configuration type.

The determining module 2110 is further configured to: determine intermediate time domain configurations of the same configuration type based on TDD uplink-downlink configurations of the same configuration type.

The determining module 2110 is further configured to: determine the time domain configurations of the same configuration type by modifying or changing the intermediate time domain configurations of the same configuration type based on the configuration types of the same configuration type, or determine variable time domain units of the same configuration type based on the configuration types of the same configuration type.

The determining module 2110 is further configured to: determine the transmission parameters of the time domain unit based on the time domain configuration of a first configuration type in different configuration types; or determine an intermediate transmission parameter of the time domain unit based on the time domain configuration of a lower-priority configuration type in different configuration types, and determine the transmission parameters of the time domain unit by modifying or changing the intermediate transmission parameter of the time domain unit based on the time domain configuration of a higher-priority configuration type in different configuration types; or determine an intermediate transmission parameter of the time domain unit based on the time domain configuration of a first configuration type in different configuration types, and determine the transmission parameters of the time domain unit by modifying or changing the intermediate transmission parameter of the time domain unit based on the time domain configuration of at least one of a second configuration or a third configuration type in different configuration types.

The first configuration type is configured by the network device, or determined based on a priority, or autonomously implemented by the terminal device.

The priorities of different configuration types are configured by the network device, or autonomously implemented by the terminal device.

The types of the TDD uplink-downlink configuration and the configuration type are the same; or both the TDD uplink-downlink configuration and the configuration type are common configurations; or both the TDD uplink-downlink configuration and the configuration type are terminal-specific configurations; or both the TDD uplink-downlink configuration and the configuration type are semi-static configurations; or both the TDD uplink-downlink configuration and the configuration type are dynamic configurations; or both the TDD uplink-downlink configuration and the configuration type are dynamically changed by DCI.

The configuration period of the TDD uplink-downlink configuration and the configuration period of the SBFD time domain configuration are the same.

The time domain configuration in the SBFD time domain configuration is valid in the downlink time domain unit and/or the flexible time domain unit in the TDD uplink-downlink configuration.

The determining module 2110 is further configured to: determine, based on at least one type of TDD uplink-downlink configuration, the transmission parameters of the time domain unit in a case where the at least two types of configurations include the at least one type of TDD uplink-downlink configuration and at least one type of SBFD time domain configuration; or determine the transmission parameters of the time domain unit based on at least one type of SBFD time domain configuration in a case where at least two types of configurations include at least one type of TDD uplink-downlink configuration and at least one type of SBFD time domain configuration; or determine the transmission parameters of part of the time domain unit corresponding to the TDD uplink-downlink configuration based on at least one type of SBFD time domain configuration in a case where the at least two types of configurations include at least one type of TDD uplink-downlink configuration and at least one type of SBFD time domain configuration; or determine the transmission parameters of the time domain unit based on a type of configuration with a higher priority in at least one type of TDD uplink-downlink configuration and at least one type of SBFD time domain configuration in a case where at least two types of configurations include at least one type of TDD uplink-downlink configuration and at least one type of SBFD time domain configuration; or determine the transmission parameters of the time domain unit based on a type of configuration indicated in at least one type of TDD uplink-downlink configuration and at least one type of SBFD time domain configuration in a case where at least two types of configurations include at least one type of TDD uplink-downlink configuration and at least one type of SBFD time domain configuration.

The apparatus further includes: a receiving module 2120, configured to receive configuration information, wherein the configuration information is used to configure the priority of at least one type of TDD uplink-downlink configuration and the priority of at least one type of SBFD time domain configuration; or the configuration information is used to configure a usage rule of at least one type of TDD uplink-downlink configuration and at least one type of SBFD time domain configuration.

The time domain unit is a slot or a symbol.

FIG. 22 is a block diagram of an apparatus for determining a configuration of a time domain unit according to some embodiments of the present disclosure. The apparatus is implemented as part of a network device. The apparatus includes: a determining module 2210, configured to determine, based on at least two types of configurations, transmission parameters of a time domain unit. The transmission parameters include: a transmission direction, a transmission type, or a transmission scheme.

At least two types of configurations include: at least two SBFD configuration types, or at least one type of TDD uplink-downlink configuration and at least one configuration type.

The determining module 2210 is further configured to: determine, based on a dynamic configuration type, transmission parameters of a variable time domain unit in a semi-static configuration type in a case where the at least two types of configurations include the semi-static configuration type and the dynamic configuration type; or determine, based on a dynamic configuration type, a variable time domain unit corresponding to a semi-static configuration type in a case where the at least two types of configurations include the semi-static configuration type and the dynamic configuration type.

The determining module 2210 is further configured to: determine, based on a terminal-specific configuration type, transmission parameters of a variable time domain unit in a common configuration type in a case where the at least two types of configurations include the common configuration type and the terminal-specific configuration type; or determine, based on a terminal-specific configuration type, a variable time domain unit corresponding to a common configuration type in a case where the at least two configuration types include the common configuration type and the terminal-specific configuration type.

The determining module 2210 is further configured to: determine, in a case where the at least two types of configurations include at least two configuration types, the transmission parameters of the time domain unit using a first configuration type in the at least two configuration types.

The first configuration type includes: a terminal-specific configuration type or a dynamic configuration type.

In a case where the terminal device is in an idle state or an inactive state, the first configuration type includes: a common configuration type, a periodic configuration type, or a semi-static configuration type.

In a case where the terminal device is in a connected state, the first configuration type includes: a terminal-specific configuration type, a dynamic configuration type, a common configuration type, a periodic configuration type, or a semi-static configuration type.

The first configuration type is configured by the network device, or determined based on a priority, or autonomously implemented by the terminal device.

The determining module 2210 is further configured to: determine, based on the at least one type of TDD uplink-downlink configuration, a first transmission parameter of the time domain unit in a case where the at least two types of configurations include the at least one type of TDD uplink-downlink configuration and the at least one configuration type.

The determining module 2210 is further configured to: determine a second transmission parameter of the time domain unit by modifying or changing the first transmission parameter of the time domain unit based on the at least one configuration type.

The determining module 2210 is further configured to: determine, in a case where the at least one configuration type includes at least two configuration types, an intermediate transmission parameter of the time domain unit based on the at least two configuration types.

The determining module 2210 is further configured to: determine a second transmission parameter of the time domain unit by modifying or changing part or all of the first transmission parameter of the time domain unit based on the intermediate transmission parameter; or determine a variable part of the time domain unit based on the intermediate transmission parameter.

The determining module 2210 is further configured to: determine, based on a dynamic configuration type, an intermediate transmission parameter of a variable time domain unit in a semi-static configuration type in a case where the at least two configuration types include the semi-static configuration type and the dynamic configuration type; or determine, based on a dynamic configuration type, a variable time domain unit corresponding to a semi-static configuration type in a case where the at least two types of configurations include the semi-static configuration type and the dynamic configuration type; or determine, based on a terminal-specific configuration type, an intermediate transmission parameter of a variable time domain unit in a common configuration type in a case where the at least two configuration types include the common configuration type and the terminal-specific configuration type; or determine, based on a terminal-specific configuration type, a variable time domain unit corresponding to a common configuration type in a case where the at least two configuration types include the common configuration type and the terminal-specific configuration type.

The variable time domain unit includes at least one of: a flexible type time domain unit, a time domain unit without SBFD indication, or a time domain unit with SBFD indication.

The determining module 2210 is further configured to: determine, based on a TDD uplink-downlink configuration and a configuration type of the same configuration type, time domain configurations of the same configuration type in a case where the at least two types of configurations include the TDD uplink-downlink configuration and the configuration type of the same configuration type, and/or determine the transmission parameters of the time domain unit based on time domain configurations of different configuration types, wherein the configuration type includes at least one of: a common configuration type, a terminal-specific configuration type, a periodic configuration type, a semi-static configuration type, or a dynamic configuration type.

The determining module 2210 is further configured to: determine an intermediate time domain configuration of the same configuration type based on the TDD uplink-downlink configuration of the same configuration type.

The determining module 2210 is further configured to: determine the time domain configurations of the same configuration type by modifying or changing the intermediate time domain configuration of the same configuration type based on the configuration types of the same configuration type; or determine a variable time domain unit of the same configuration type based on the configuration types of the same configuration type.

The determining module 2210 is further configured to: determine the transmission parameters of the time domain unit based on the time domain configuration of a first configuration type in different configuration types; or determine an intermediate transmission parameter of the time domain unit based on the time domain configuration of a lower-priority configuration type in different configuration types, and determine the transmission parameters of the time domain unit by modifying or changing the intermediate transmission parameter of the time domain unit based on the time domain configuration of a higher-priority configuration type in different configuration types; or determine an intermediate transmission parameter of the time domain unit based on the time domain configuration of a first configuration type in different configuration types, and determine the transmission parameters of the time domain unit by modifying or changing the intermediate transmission parameter of the time domain unit based on the time domain configuration of at least one of a second configuration type or a third configuration type in different configuration types.

The first configuration type is configured by the network device, or determined based on a priority, or autonomously implemented by the terminal device.

The priorities of different configuration types are configured by the network device, or autonomously implemented by the terminal device.

The types of the TDD uplink-downlink configuration and the configuration type are the same; or both the TDD uplink-downlink configuration and the configuration type are common configurations; or both the TDD uplink-downlink configuration and the configuration type are terminal-specific configurations; or both the TDD uplink-downlink configuration and the configuration type are semi-static configurations; or both the TDD uplink-downlink configuration and the configuration type are dynamic configurations; or both the TDD uplink-downlink configuration and the configuration type are dynamically changed by DCI.

The configuration period of the TDD uplink-downlink configuration and the configuration period of the SBFD time domain configuration are the same.

The time domain configuration in the SBFD time domain configuration is valid in the downlink time domain unit and/or the flexible time domain unit in the TDD uplink-downlink configuration.

The determining module 2210 is further configured to: determine, based on at least one type of TDD uplink-downlink configuration, the transmission parameters of the time domain unit in a case where the at least two types of configurations include the at least one type of TDD uplink-downlink configuration and at least one type of SBFD time domain configuration; or determine, based on at least one type of SBFD time domain configuration, the transmission parameters of the time domain unit in a case where the at least two types of configurations include at least one type of TDD uplink-downlink configuration and the at least one type of SBFD time domain configuration; or determine, based on at least one type of SBFD time domain configuration, the transmission parameters of part of the time domain unit corresponding to a TDD uplink-downlink configuration in a case where the at least two types of configurations include at least one type of TDD uplink-downlink configuration and at least one type of SBFD time domain configuration; or determine the transmission parameters of the time domain unit based on a type of configuration with a higher priority in at least one type of TDD uplink-downlink configuration and at least one type of SBFD time domain configuration in a case where the at least two types of configurations include at least one type of TDD uplink-downlink configuration and at least one type of SBFD time domain configuration; or determine the transmission parameters of the time domain unit based on a type of configuration indicated in at least one type of TDD uplink-downlink configuration and at least one type of SBFD time domain configuration in a case where the at least two types of configurations include at least one type of TDD uplink-downlink configuration and at least one type of SBFD time domain configuration.

The apparatus further includes: a transmitting module 2220, configured to transmit configuration information, wherein the configuration information is used to configure the priority of at least one type of TDD uplink-downlink configuration and the priority of at least one configuration type; or the configuration information is used to configure a usage rule of at least one type of TDD uplink-downlink configuration and at least one configuration type.

The time domain unit is a slot or a symbol.

FIG. 23 is a block diagram of a communication device 2300 according to some embodiments of the present disclosure. In some embodiments, the communication device 2300 includes a processor 2310, a power management module 2311, a battery 2312, a display 2313, a key zone 2314, a subscriber identity module (SIM) card 2315, a memory 2320, a transceiver 2330, and one or more antennas 2331. All components other than the processor 2310, the memory 2320, and the transceiver 2330 are optional.

The processor 2310 is implemented to perform functions, processes, and/or methods according to the present disclosure. The processor 2310 may be configured to control one or more other components of the communication device 2300 to implement the functions, processes, and/or methods according to the present disclosure. Layers of the radio interface protocol are implemented in the processor 2310. The processor 2310 may include an application specific integrated circuit (ASIC), other chipsets, logic circuits, and/or data processing apparatuses. The processor 2310 may be an application processor (AP). The processor 2310 may include at least one of: a digital signal processor (DSP), a central processing unit (CPU), a graphic processing unit (GPU), or a modem (a modulator and a demodulator).

The memory 2320 is operatively coupled to the processor 2310 and stores various information to operate the processor 2310. The memory 2320 may include a read-only memory (ROM), a random access memory (RAM), a flash memory, a memory card, a storage medium, and/or other storage apparatuses. The memory 2320 may be implemented within the processor 2310 or outside the processor 2310. In a case where the memory 2320 is implemented outside the processor 2310, the memory is communicatively coupled to the processor 2310 via various means known in the art.

The transceiver 2330 is operatively coupled to the processor 2310 and transmits and/or receives a radio signal. The transceiver 2330 includes a transmitter and a receiver. The transceiver 2330 may include a baseband circuit to process a radio frequency signal. The transceiver 2330 controls one or more antennas 2331 to transmit and/or receive a radio signal.

The present disclosure further provides a chip. The chip includes one or more programmable logic circuits and/or one or more program instructions, and a communication device equipped with the chip, when running, is caused to perform the method for determining a configuration of a time domain unit according to the method embodiments described above.

The present disclosure further provides a computer-readable storage medium. The storage medium stores at least one instruction, at least one program, a code set, or an instruction set. The at least one instruction, the at least one program, the code set, or the instruction set, when loaded and executed by a processor of a communication device, causes the communication device to perform the method for determining a configuration of a time domain unit according to the method embodiments described above.

The present disclosure further provides a computer program product. The computer program product includes at least one program, and the at least one program is stored in the computer-readable storage medium. The at least one program, when read from the computer-readable storage medium and run by a processor of a communication device, causes the communication device to perform the method for determining a configuration of a time domain unit according to the method embodiments described above.

It should be understood that the term "a plurality of" herein means two or more. The term "and/or" describes the association relationship between the associated objects and indicates that three relationships may be present. For example, the phrase "A and/or B" indicates (A), (B), or (A and B). In addition, the character "/" generally indicates an "or" relationship between the associated objects.

It should be understood by those of ordinary skill in the art that all or part of the processes for implementing the above embodiments are completed by hardware, or completed by instructing relevant hardware by a program stored in a computer-readable storage medium. The storage medium mentioned above is a read-only memory, a magnetic disk, a compact disk, or the like.

Described above are merely optional embodiments of the present disclosure and are not intended to limit the present disclosure. Any modifications, equivalent substitutions, improvements, and the like, made within the spirit and principle of the present disclosure shall fall within the protection scope of the present disclosure.

## Claims

1. A method for determining a configuration of a time domain unit, comprising:
determining, based on at least two types of configurations, transmission parameters of the time domain unit, wherein the transmission parameters comprise a transmission direction, a transmission type, or a transmission scheme.

2. The method according to claim 1, wherein the at least two types of configurations comprise:
at least two types of subband full duplex (SBFD) time domain configurations; or
at least one type of time division duplex (TDD) uplink-downlink configuration and at least one type of SBFD time domain configuration.

3. The method according to claim 2, wherein determining, based on the at least two types of configurations, the transmission parameters of the time domain unit comprises:
determining, based on a dynamic SBFD time domain configuration, transmission parameters of a variable time domain unit in a semi-static SBFD time domain configuration in a case where the at least two types of configurations comprise the semi-static SBFD time domain configuration and the dynamic SBFD time domain configuration; or
determining, based on a dynamic SBFD time domain configuration, a variable time domain unit corresponding to a semi-static SBFD time domain configuration in a case where the at least two types of configurations comprise the semi-static SBFD time domain configuration and the dynamic SBFD time domain configuration.

4. The method according to claim 2, wherein determining, based on the at least two types of configurations, the transmission parameters of the time domain unit comprises:
determining, based on a terminal-specific SBFD time domain configuration, transmission parameters of a variable time domain unit in a common SBFD time domain configuration in a case where the at least two types of configurations comprise the common SBFD time domain configuration and the terminal-specific SBFD time domain configuration; or
determining, based on a terminal-specific SBFD time domain configuration, a variable time domain unit corresponding to a common SBFD time domain configuration in a case where the at least two types of SBFD time domain configurations comprise the common SBFD time domain configuration and the terminal-specific SBFD time domain configuration.

5. The method according to claim 2, wherein determining, based on the at least two types of configurations, the transmission parameters of the time domain unit comprises:
determining, using a first SBFD time domain configuration in the at least two types of SBFD time domain configurations, the transmission parameters of the time domain unit in a case where the at least two types of configurations comprise the at least two types of SBFD time domain configurations.

6. The method according to claim 5, wherein the first SBFD time domain configuration comprises: a terminal-specific SBFD time domain configuration or a dynamic SBFD time domain configuration.

7. The method according to claim 5, wherein in a case where a terminal device is in an idle state or an inactive state, the first SBFD time domain configuration comprises:
a common SBFD time domain configuration, a periodic SBFD time domain configuration, or a semi-static SBFD time domain configuration.

8. The method according to claim 5, wherein in a case where a terminal device is in a connected state, the first SBFD time domain configuration comprises:
a terminal-specific SBFD time domain configuration, a dynamic SBFD time domain configuration, a common SBFD time domain configuration, a periodic SBFD time domain configuration, or a semi-static SBFD time domain configuration.

9. The method according to any one of claims 5 to 8, wherein the first SBFD time domain configuration is configured by a network device, or determined based on a priority, or autonomously implemented by the terminal device.

10. The method according to claim 2, wherein determining, based on the at least two types of configurations, the transmission parameters of the time domain unit comprises:
determining, based on the at least one type of TDD uplink-downlink configuration, a first transmission parameter of the time domain unit in a case where the at least two types of configurations comprise the at least one type of TDD uplink-downlink configuration and the at least one type of SBFD time domain configuration; and
determining a second transmission parameter of the time domain unit by modifying or changing the first transmission parameter of the time domain unit based on the at least one type of SBFD time domain configuration.

11. The method according to claim 10, wherein determining the second transmission parameter of the time domain unit by modifying or changing the first transmission parameter of the time domain unit based on the at least one type of SBFD time domain configuration comprises:
determining, in a case where the at least one type of SBFD time domain configuration includes at least two types of SBFD time domain configurations, an intermediate transmission parameter of the time domain unit based on the at least two types of SBFD time domain configurations; and
determining the second transmission parameter of the time domain unit by modifying or changing part or all of the first transmission parameter of the time domain unit based on the intermediate transmission parameter, or determining a variable part of the time domain unit based on the intermediate transmission parameter.

12. The method according to claim 11, wherein determining the intermediate transmission parameter of the time domain unit based on the at least two types of SBFD time domain configurations comprises:
determining, based on a dynamic SBFD time domain configuration, an intermediate transmission parameter of a variable time domain unit in a semi-static SBFD time domain configuration in a case where the at least two types of SBFD time domain configurations comprise the semi-static SBFD time domain configuration and the dynamic SBFD time domain configuration; or determining, based on a dynamic SBFD time domain configuration, a variable time domain unit corresponding to a semi-static SBFD time domain configuration in a case where the at least two types of configurations comprise the semi-static SBFD time domain configuration and the dynamic SBFD time domain configuration; or
determining, based on a terminal-specific SBFD time domain configuration, an intermediate transmission parameter of a variable time domain unit in a common SBFD time domain configuration in a case where the at least two types of SBFD time domain configurations comprise the common SBFD time domain configuration and the terminal-specific SBFD time domain configuration; or determining, based on a terminal-specific SBFD time domain configuration, a variable time domain unit corresponding to a common SBFD time domain configuration in a case where the at least two types of SBFD time domain configurations comprise the common SBFD time domain configuration and the terminal-specific SBFD time domain configuration.

13. The method according to claim 3, 4, or 12, wherein the variable time domain unit comprises at least one of: a flexible type time domain unit, a time domain unit without SBFD indication, or a time domain unit with SBFD indication.

14. The method according to claim 2, wherein determining, based on the at least two types of configurations, the transmission parameters of the time domain unit comprises:
determining, based on a TDD uplink-downlink configuration and an SBFD time domain configuration of a same configuration type, time domain configurations of the same configuration type in a case where the at least two types of configurations comprise the TDD uplink-downlink configuration and the SBFD time domain configuration of the same configuration type; and/or
determining, based on time domain configurations of different configuration types, the transmission parameters of the time domain unit,
wherein the configuration type comprises at least one of: a common configuration type, a terminal-specific configuration type, a periodic configuration type, a semi-static configuration type, or a dynamic configuration type.

15. The method according to claim 14, wherein determining, based on the TDD uplink-downlink configuration and the SBFD time domain configuration of the same configuration type, the time domain configurations of the same configuration type comprises:
determining, based on the TDD uplink-downlink configuration of the same configuration type, an intermediate time domain configuration of the same configuration type; and
determining the time domain configurations of the same configuration type by modifying or changing the intermediate time domain configuration of the same configuration type based on the SBFD time domain configuration of the same configuration type; or determining, based on the SBFD time domain configuration of the same configuration type, a variable time domain unit or a transmission parameter of a variable time domain unit in the time domain configurations of the same configuration type.

16. The method according to claim 14, wherein determining, based on the time domain configurations of the different configuration types, the transmission parameter of the time domain unit comprises:
determining, based on a time domain configuration of a first configuration type in the different configuration types, the transmission parameter of the time domain unit; or
determining, based on a time domain configuration of a lower-priority configuration type in the different configuration types, an intermediate transmission parameter of the time domain unit, and determining the transmission parameter of the time domain unit by modifying or changing the intermediate transmission parameter of the time domain unit based on a time domain configuration of a higher-priority configuration type in the different configuration types; or
determining, based on a time domain configuration of a first configuration type in the different configuration types, an intermediate transmission parameter of the time domain unit, and determining the transmission parameter of the time domain unit by modifying or changing the intermediate transmission parameter of the time domain unit based on a time domain configuration of at least one of a second configuration type or a third configuration type in the different configuration types.

17. The method according to claim 16, wherein the first configuration type is configured by a network device, or determined based on a priority, or autonomously implemented by a terminal device.

18. The method according to claim 16, wherein priorities of the different configuration types are configured by a network device, or autonomously implemented by a terminal device.

19. The method according to any one of claims 10 to 12, wherein
types of the TDD uplink-downlink configuration and the SBFD time domain configuration are the same; or both the TDD uplink-downlink configuration and the SBFD time domain configuration are common configurations; or both the TDD uplink-downlink configuration and the SBFD time domain configuration are terminal-specific configurations; or both the TDD uplink-downlink configuration and the SBFD time domain configuration are semi-static configurations; or both the TDD uplink-downlink configuration and the SBFD time domain configuration are dynamic configurations; or both the TDD uplink-downlink configuration and the SBFD time domain configuration are dynamically changed by downlink control information (DCI).

20. The method according to any one of claims 10 to 12, wherein a configuration period of the TDD uplink-downlink configuration and a configuration period of the SBFD configuration are the same.

21. The method according to any one of claims 10 to 12, wherein a time domain configuration in the SBFD configuration is valid in at least one of a downlink time domain unit or a flexible time domain unit in the TDD uplink-downlink configuration.

22. The method according to claim 2, wherein determining, based on the at least two types of configurations, the transmission parameters of the time domain unit comprises:
determining, based on the at least one type of TDD uplink-downlink configuration, the transmission parameters of the time domain unit in a case where the at least two types of configurations comprise the at least one type of TDD uplink-downlink configuration and the at least one type of SBFD time domain configuration; or determining, based on the at least one type of SBFD time domain configuration, the transmission parameters of the time domain unit in a case where the at least two types of configurations comprise the at least one type of TDD uplink-downlink configuration and the at least one type of SBFD time domain configuration; or determining, based on the at least one type of SBFD time domain configuration, transmission parameters of part of time domain unit corresponding to the TDD uplink-downlink configuration in a case where the at least two types of configurations comprise the at least one type of TDD uplink-downlink configuration and the at least one type of SBFD time domain configuration; or determining, based on a higher-priority configuration in the at least one type of TDD uplink-downlink configuration and the at least one type of SBFD time domain configuration, the transmission parameters of the time domain unit in a case where the at least two types of configurations comprise the at least one type of TDD uplink-downlink configuration and the at least one type of SBFD time domain configuration; or determining, based on a configuration indicated in the at least one type of TDD uplink-downlink configuration and the at least one type of SBFD time domain configuration, the transmission parameters of the time domain unit in a case where the at least two types of configurations comprise the at least one type of TDD uplink-downlink configuration and the at least one type of SBFD time domain configuration.

23. The method according to claim 22, further comprising:
receiving configuration information in a case where the method is performed by a terminal device, wherein the configuration information is used to configure a priority of the at least one type of TDD uplink-downlink configuration and a priority of the at least one type of SBFD time domain configuration, or the configuration information is used to configure a usage rule of the at least one type of TDD uplink-downlink configuration and the at least one type of SBFD time domain configuration; or
transmitting configuration information in a case where the method is performed by a network device, wherein the configuration information is used to configure a priority of the at least one type of TDD uplink-downlink configuration and a priority of the at least one type of SBFD time domain configuration, or the configuration information is used to configure a usage rule of the at least one type of TDD uplink-downlink configuration and the at least one type of SBFD time domain configuration.

24. The method according to any one of claims 1 to 23, wherein the time domain unit is a slot or a symbol.

25. An apparatus for determining a configuration of a time domain unit, comprising:
a determining module, configured to determine, based on at least two types of configurations, a transmission parameter of the time domain unit, wherein the transmission parameter comprises a transmission direction, a transmission type, or a transmission scheme.

26. A chip, comprising: one or more programmable logic circuits and/or one or more program instructions, wherein a communication device equipped with the chip, when running, is caused to perform the method for determining a configuration of a time domain unit as defined in any one of claims 1 to 24.

27. A terminal device, comprising:
a processor; a transceiver, communicably connected to the processor; and a memory, configured to store one or more executable instructions;
wherein the processor, when loading and executing the one or more executable instructions, is caused to perform the method for determining a configuration of a time domain unit as defined in any one of claims 1 to 24.

28. A network device, comprising:
a processor; a transceiver, communicably connected to the processor; and a memory, configured to store one or more executable instructions;
wherein the processor, when loading and executing the one or more executable instructions, is caused to perform the method for determining a configuration of a time domain unit as defined in any one of claims 1 to 24.

29. A computer-readable storage medium, storing at least one program therein, wherein the at least one program, when loaded and run by a processor of a communication device, causes the communication device to perform the method for determining a configuration of a time domain unit as defined in any one of claims 1 to 24.

30. A computer program product, comprising at least one program, wherein the at least one program is stored in a computer-readable storage medium; and the at least one program, when read from the computer-readable storage medium and run by a processor of a communication device, causes the communication device to perform the method for determining a configuration of a time domain unit as defined in any one of claims 1 to 24.
